# EUROPEAN PATENT APPLICATION

(11) **EP 1 571 556 A1**
(43) Date of publication of application: **07.09.2005**
(21) Application number: 04748091.8
(22) Date of filing: 23.07.2004
(51) Int. Cl.: G06F 12/14, G06F 17/60, G06K 19/073

(54) **DATA PROCESSING APPARATUS AND DATA DISTRIBUTING APPARATUS**

(30) Priority: 25.07.2003 JP 2003280258; 17.03.2004 JP 2004077258
(71) Applicant: MATSUSHITA ELECTRIC INDUSTRIAL CO., LTD., Osaka 571-8501 (JP)
(72) Inventor: NOGUCHI, Naohiko, Kanagawa 222-0031 (JP); TAKAHASHI, Eiji, Kanagawa 222-0031 (JP); UCHIDA, Osamu, Kanagawa 222-0034 (JP)
(74) Representative: Grünecker, Kinkeldey, Stockmair & Schwanhäusser Anwaltssozietät
(86) International application number: PCT/JP2004/010883
(87) International publication number: WO 2005/010763

(57) **Abstract**

When a portable terminal apparatus 11 which is a data processing apparatus down loads digital contents from a server 12, the portable terminal apparatus 11 acquires right data 52 which takes into consideration not only contents data 51 but also a first DRM system in this portable terminal apparatus 11 and a second DRM system in a memory card 13 which is the export destination. The portable terminal apparatus 11 handles the contents data 51 according to the right data 52 and converts, when the digital contents are exported to the memory card 13, the right data 52 so as to be adaptable to the second DRM system and outputs the contents data 51 and converted right data 52A.

## Description

### BACKGROUND OF THE INVENTION

### 1. Field of the Invention

The present invention relates to a data processing apparatus and a data distribution apparatus which process data including right data related to handling of digital contents in an electronic device such as a portable information terminal, cellular phone apparatus or recording medium such as a memory card.

### 2. Description of the Related Art

With improvement in performance of a network environment such as the Internet, digital contents including digital data such as images and audio are being widely circulated, and contents management such as copyright protection of digital contents constitutes an important issue in association therewith. Since the quality of literary work such as digitized music does not deteriorate no matter how many times it is copied or how far it is transmitted/received, illegal distribution or exchange without the consent of their authors is increasing with the widespread proliferation of the Internet, and speed enhancement and dramatic increase in capacity of personal computers.

As conventional techniques for preventing illegal copies and distribution of digital contents provided through communication channels or recording media, there are proposals on a method of realizing copy protect through authentication between modules in a patent document (Unexamined Japanese Patent Publication No.HEI 11-306092 (paragraphs [0016]-[0070], FIG.1) and a method of controlling distributed contents by means of IDs in the patent document (Unexamined Japanese Patent Publication No.2001-282626 (paragraphs [0016]-[0070], FIG.1)), etc.

Furthermore, as a recent technology for protecting copyright, etc., by controlling the handling of digital contents, a DRM (Digital Rights Management) technology which imposes restrictions on distribution and reproduction of digital contents is becoming a focus of attention. There is a variety of specific mounting modes of the DRM system; the DRM system may be built in a recording medium such as a memory card, built in player software of audio and movie, built in transmission/reception, transfer software or a combination thereof. The DRM system grants each case of contents permission (described as right data related to the handling of the contents) and controls the use of contents such as reproduction based on this right data. Therefore, without the right data, it is not possible to use contents and once the usage permission of the right data expires, use of the contents is not possible any longer.

However, there is a plurality kind of above described DRM systems, and the applicable format of contents data (contents type), description scheme of right data and describable content of right data vary from one DRM system to another. For this reason, it has been complicated for the contents distributing side (copyright holder, circulation carriers, etc.) to generate contents data and right data for each DRM system. Thus, a patent document (Unexamined Japanese Patent Publication No.2002-297451 (paragraphs [0027]-[0063], FIG.1)) proposes a method and apparatus for contents management capable of distributing the same contents among a plurality of different DRM systems.

On the other hand, when the user on the contents receiving side converts the format of the contents data so that the contents can be handled by other recording media or devices and sends the contents, it is possible to output the contents to recording media and devices under the management of the same DRM system but it is normally not possible to output the contents to recording media and devices under the management of different DRM systems. For example, contents downloaded for portable information terminals are controlled by a specific DRM system which controls the portable information terminal, and it has not been possible to record the contents in a memory card under the management of a different DRM system and use them for other devices. It will be convenient if the user, etc., of the contents can arbitrarily convert data so that the data can be used among recording media and devices under the management of such different DRM systems and output the data (hereinafter this will be referred to as "export").

### SUMMARY OF THE INVENTION

It is an object of the present invention to provide a data processing apparatus and a data distribution apparatus capable of appropriately converting and exporting contents data and right data so that these are available to different contents handling management systems for users of digital contents, etc.

An aspect of the invention is a data processing apparatus which processes data including right data on handling of digital contents, comprising an acquisition section that acquires contents data of the digital contents and the right data including information on handling of the contents data distributed from a data distribution apparatus in response to a distribution request, a data storage section that stores the contents data and the right data and a contents handling section that handles the corresponding contents data according to the right data, when the digital contents are exported to a contents handling management system at an export destination, the right data corresponding to the stored digital contents data so as to be adaptable to the contents handling management system at the export destination.

Another aspect of the invention is a data distribution apparatus which distributes data including right data on handling of digital contents, comprising a right data preparation section that prepares the contents data of the digital contents to be distributed to the data processing apparatus and right data including information on handling of the contents data based on information on the data processing apparatus acquired from the data processing apparatus which receives a request for distribution of the digital contents and information on the export destination to which the digital contents are exported from the data processing apparatus and a right data distribution section that distributes the contents data and the right data prepared by the right data preparation section to the data processing apparatus.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 illustrates a configuration of a contents distribution system according to Embodiment 1 of the present invention;
FIG.2 illustrates an internal configuration of a portable terminal apparatus according to Embodiment 1;
FIG.3 illustrates an internal configuration of a server according to Embodiment 1;
FIG.4 schematically illustrates a data flow in the contents distribution system according to Embodiment 1;
FIG. 5 is a flow chart showing an operating procedure for distributing contents from the server to the portable terminal apparatus according to Embodiment 1;
FIG.6 is a flow chart showing a procedure example for searching for contents data based on terminal information according to Embodiment 1;
FIG.7 is a flow chart showing a procedure example for searching for contents data based on export destination information according to Embodiment 1;
FIG.8 is a flow chart showing a procedure example for searching for contents data based on option information according to Embodiment 1;
FIG. 9 is a flow chart showing an operating procedure for exporting contents from the portable terminal apparatus according to Embodiment 1 to a memory card;
FIG.10 is a flow chart showing right data conversion processing using conversion rules of case 1-1 according to Embodiment 2 of the present invention;
FIG.11 is a flow chart showing right data conversion processing using conversion rules of case 1-2 according to Embodiment 2;
FIG.12 is a flow chart showing right data conversion processing using conversion rules of case 1-3 according to Embodiment 2;
FIG.13 is a flow chart showing right data conversion processing using conversion rules of case 1-4 according to Embodiment 2;
FIG.14 is a flow chart showing right data conversion processing using conversion rules of case 1-5 according to Embodiment 2;
FIG.15 is a flow chart showing right data conversion processing using conversion rules of case 1-6 according to Embodiment 2;
FIG. 16 is a flow chart showing right data conversion processing using conversion rules of case 1-7 according to Embodiment 2;
FIG.17 is a flow chart showing right data conversion processing using conversion rules of case 1-8 according to Embodiment 2;
FIG.18 is a flow chart showing right data conversion processing using conversion rules of case 1-9 according to Embodiment 2;
FIG.19 is a flow chart showing part of right data conversion processing using conversion rules of case 2-53 according to Embodiment 2;
FIG.20 is a flow chart showing part of right data conversion processing using conversion rules of case 2-53 according to Embodiment 2;
FIG.21 is a flow chart showing part of right data conversion processing using conversion rules of case 2-53 according to Embodiment 2;
FIG.22 is a flow chart showing part of right data conversion processing using conversion rules of case 2-53 according to Embodiment 2;
FIG.23 is a flow chart showing part of right data conversion processing using conversion rules of case 2-53 according to Embodiment 2;
FIG.24 is a flow chart showing part of right data conversion processing using conversion rules of case 2-53 according to Embodiment 2;
FIG.25 is a flow chart showing part of right data conversion processing using conversion rules of case 2-53 according to Embodiment 2;
FIG.26 is a flow chart showing part of right data conversion processing using conversion rules of case 2-57 according to Embodiment 2;
FIG.27 is a flow chart showing part of right data conversion processing using conversion rules of case 2-57 according to Embodiment 2;
FIG.28 is a flow chart showing part of right data conversion processing using conversion rules of case 2-57 according to Embodiment 2;
FIG.29 is a flow chart showing part of right data conversion processing using conversion rules of case 2-57 according to Embodiment 2;
FIG.30 is a flow chart showing part of right data conversion processing using conversion rules of case 2-57 according to Embodiment 2;
FIG.31 is a flow chart showing part of right data conversion processing using conversion rules of case 2-57 according to Embodiment 2; and
FIG.32 is a flow chart showing part of right data conversion processing using conversion rules of case 2-57 according to Embodiment 2.

### DETAILED DESCRIPTION OF THE PREFERRED EMBODIMENTS

With reference now to the attached drawings, embodiments of the present invention will be explained below.

The following embodiments will assume a portable terminal apparatus and a memory card as devices handling digital contents and will describe a case where the use of digital contents is controlled in an environment in which different digital copyright management systems (DRM systems) are used as contents handling management systems for these portable terminal apparatus and memory card. In this case, right data related to the handling of the digital contents (hereinafter simply referred to as "right data") set for the digital contents includes copyright information in the DRM systems. That is, suppose the right data refers to information on how to handle contents, information for protecting copyright of the contents, information on the copyright of the contents, information on use of the contents and information on control (constraints) of circulation and use of the contents, etc.

### (Embodiment 1)

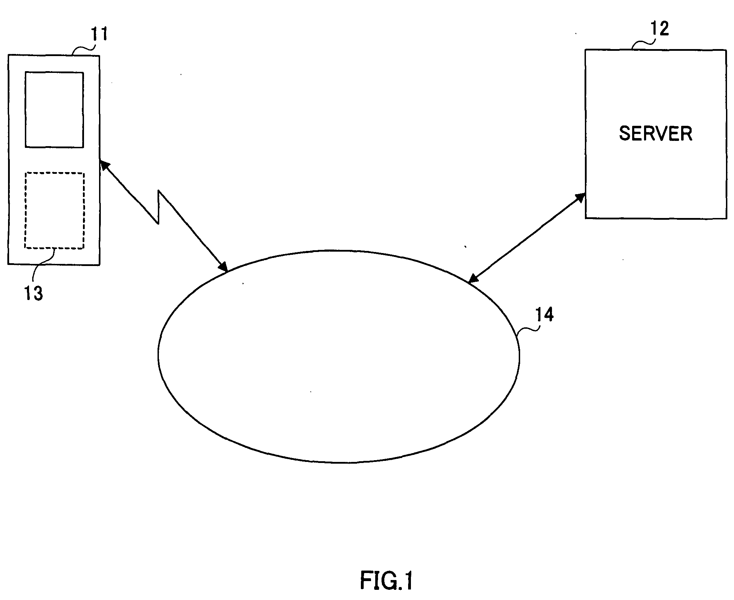

FIG.1 illustrates a configuration of a contents distribution system according to Embodiment 1 of the present invention. Here, the configuration and operation in a case where contents data is downloaded and acquired from a contents distribution source using a portable terminal apparatus such as a cellular phone apparatus, this downloaded contents data is exported (meaning that data is converted and output so as to be available among different recording media and devices and different DRM systems) to a memory card and right data is converted so as to be adaptable to the DRM system of this memory card will be explained. Here, being "adaptable to a DRM system" means being available (reproducible, recordable, transferable, etc.) conforming to rules, etc., of the DRM system. In the example of this embodiment, a server of the contents distribution source corresponds to the data distribution apparatus and a portable terminal apparatus corresponds to the data processing apparatus.

In FIG.1, the contents distribution system is constructed of a portable terminal apparatus 11 which downloads the contents, a server 12 which is the contents distribution source, a memory card 13 to which the contents are exported from the portable terminal apparatus 11 and a communication network 14 which connects the portable terminal apparatus 11 and the server 12.

The portable terminal apparatus 11 has the function of a data processing apparatus which downloads contents data and right data distributed by the server 12 and processes data including the contents data and right data in accordance with a first DRM system used in the own apparatus. The contents are available to this portable terminal apparatus 11 according to the contents handling management based on the first DRM system. Here, the contents data includes various types of data such as music, images, characters or combinations thereof, etc. Furthermore, the contents are used in various ways such as reproduction of music contents and display of images and character contents. Furthermore, the portable terminal apparatus 11 also has the function of converting right data so as to be adaptable to a second DRM system as appropriate in order to export the contents data to a medium or apparatus in a different environment of a second DRM system such as the memory card 13.

The server 12 has the function of the data distribution apparatus which distributes contents data and right data to the portable terminal apparatus 11. This server 12 prepares contents data and right data on these contents according to a request from the portable terminal apparatus 11, provides and distributes them to the portable terminal apparatus 11. The right data includes copyright information describing usage condition including permission, constraint on the use of the contents for copyright protection and usage permission, etc. As the contents data, data in an appropriate format corresponding to the portable terminal apparatus 11 to which the contents are distributed and the DRM system used there is provided.

The memory card 13 is a recording medium which stores contents data and right data according to a second DRM system which is different from the first DRM system used in the portable terminal apparatus 11. The communication network 14 is constructed by including various communication sections such as a mobile communication network, telephone network and Internet network.

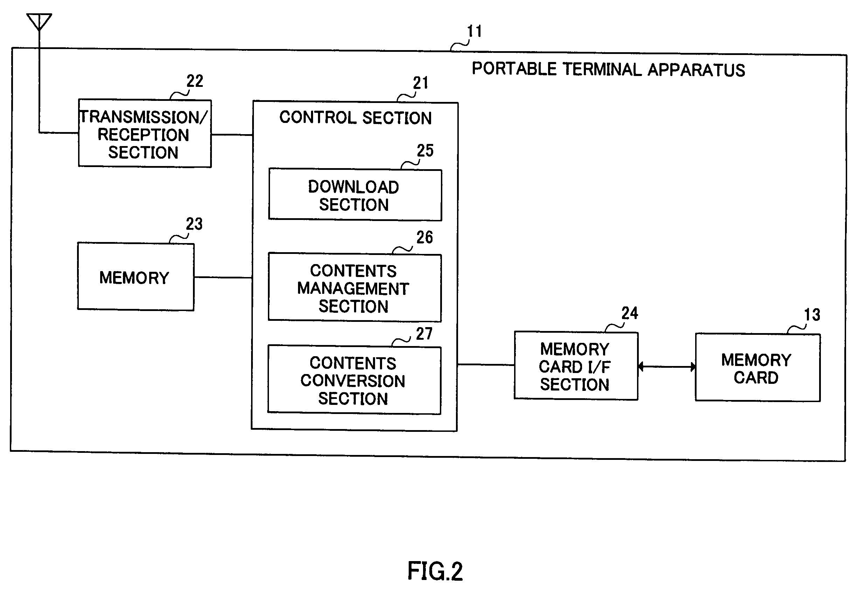

Then, a configuration of a data processing apparatus according to the portable terminal apparatus 11 will be explained. FIG.2 illustrates an internal configuration of the portable terminal apparatus 11 according to this embodiment. The portable terminal apparatus 11 can incorporate or mount the memory card 13 in a detachable manner and is constructed by including a control section 21, a transmission/reception section 22, a memory 23 and a memory card interface (I/F) section 24.

The control section 21 is a block which exercises overall control on the entire operation of the portable terminal apparatus 11 and includes a download section 25 which downloads contents data and right data from the server 12, a contents management section 26 which handles the downloaded contents data based on the right data and a contents conversion section 27 which converts contents data and right data so as to be adaptable to the second DRM system in the memory card 13 to which the contents data is exported. The download section 25 has the function of an acquisition section according to patent claims and the contents management section 26 and contents conversion section 27 realize the function of a contents handling section according to patent claims. This control section 21 is constructed of a processor which operates according to a predetermined program and a software module for realizing the functions of the above described sections. The contents conversion section 27 may also be mounted on a different apparatus outside the portable terminal apparatus 11.

Furthermore, the control section 21 also has the function of executing an application program stored in the memory 23 and thereby accessing the server 12 which distributes the contents data. As the application program for accessing the server 12, browser software, etc., which acquires and displays distribution information of the server 12 is used.

The transmission/reception section 22 is a block for carrying out transmission/reception of data to/from the server 12 through the communication network 14 and uses a publicly known radio communication apparatus. The memory 23 has the function of a data storage section according to patent claims, stores the contents data and right data, thus realizing the function as the data storage section. The memory card interface section 24 is constructed by including a card slot, etc., for mounting and connecting the memory card 13.

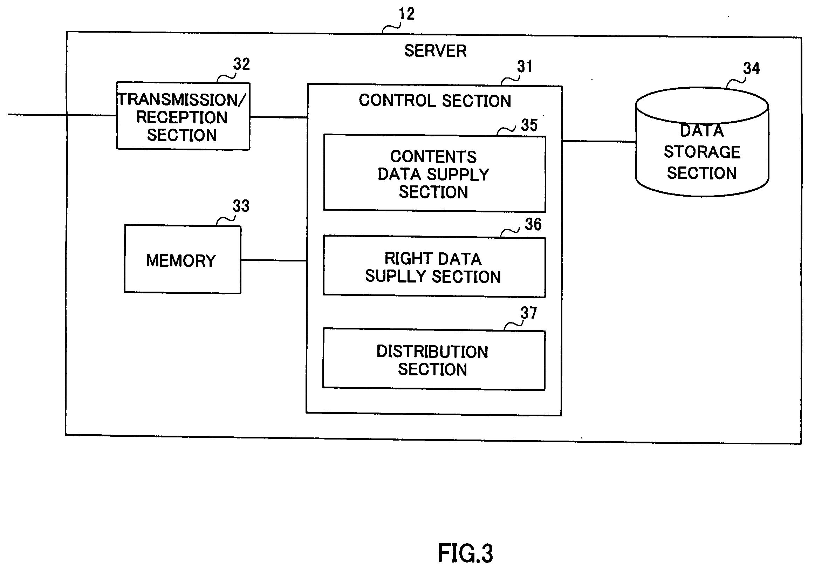

The configuration of the data distribution apparatus using the server 12 will be explained. FIG.3 illustrates an internal configuration of the server 12 according to this embodiment. The server 12 is constructed by including a control section 31, a transmission/reception section 32, a memory 33 and a data storage section 34.

The control section 31 is a block which exercises overall control on the entire operation of the server 12 and includes a contents data supply section 35 which supplies contents data as a section which distributes contents data and right data according to a contents distribution request from the portable terminal apparatus 11, a right data supply section 36 which supplies right data and a distribution section 37 which distributes contents data and right data. This control section 31 is constructed by including a processor which operates according to a predetermined program and a software module for realizing the function of the above described sections. Furthermore, the control section 31 acquires terminal information on the portable terminal apparatus 11 which has made access and accesses the data storage section 34 which stores information such as contents data as required and acquires distribution information. This control section 31 has the functions of a right data preparation section, right data distribution section and distribution information presentation section according to patent claims.

The data storage section 34 stores contents data of various formats according to the apparatus and medium at the contents distribution destination, various types of right data in accordance with the DRM system at the contents distribution destination. As the contents data to be distributed from the server 12, it is also possible to prepare contents data of a plurality of formats so as to be adaptable to a plurality of devices and media, a plurality of DRM systems beforehand, store them in the data storage section 34 and selectively provide some contents data from the data storage section or prepare contents data of a basic format and convert and provide the contents data each time according to the contents distribution destination based on this data. Furthermore, as the right data, it is also possible to prepare a plurality of types of right data beforehand so as to be adaptable to a plurality of DRM systems, store them in the data storage section 34 and selectively provide some right data from the data storage section or provide right data by generating or converting it each time according to the contents distribution destination or other distribution conditions.

Furthermore, a provider (issuer) of contents data may be the same as or different from a provider (issuer) of right data and the server 12 maybe constructed according to the modes of these providers as appropriate. In the example in FIG.3, the server 12 is represented by one apparatus, but the server 12 may also be constructed of a plurality of server apparatuses having these functions. For example, it is also possible to construct a server 12 by providing different server apparatuses for the contents data provider and the right data provider.

The transmission/reception section 32 is a block for carrying out transmission/reception of data to/from the portable terminal apparatus 11 through the communication network 14 and uses a publicly known communication apparatus. The memory 33 stores distribution information for the portable terminal apparatus 11.

Then, the operation of the contents distribution system constructed by including the above described data processing apparatus and data distribution apparatus will be explained.

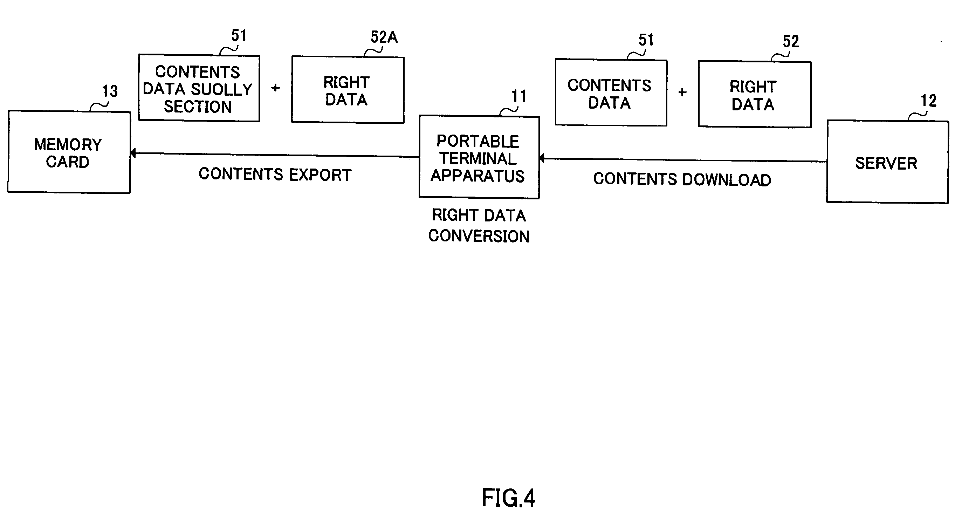

First, an overview of the operation of the contents distribution system according to this embodiment will be explained using FIG.4. FIG.4 schematically illustrates a data flow of this embodiment.

When digital contents are download from the server 12 to the portable terminal apparatus 11, contents data 51 and right data 52, which take into consideration not only a first DRM system used in the portable terminal apparatus 11 but also a second DRM system used in the memory card 13 which is the export destination, are distributed from the server 12 and downloaded at the portable terminal apparatus 11. The portable terminal apparatus 11 can use contents according to the right data 52 based on the downloaded contents data 51 and right data 52.

Then, when the digital contents are exported from the portable terminal apparatus 11 to the memory card 13, the right data 52 is converted based on a predetermined conversion rule so as to be adaptable to the second DRM system used in the memory card 13 and the contents data 51 and the converted right data 52A are exported. The memory card 13 can use contents according to the right data 52A based on the exported contents data 51 and right data 52A.

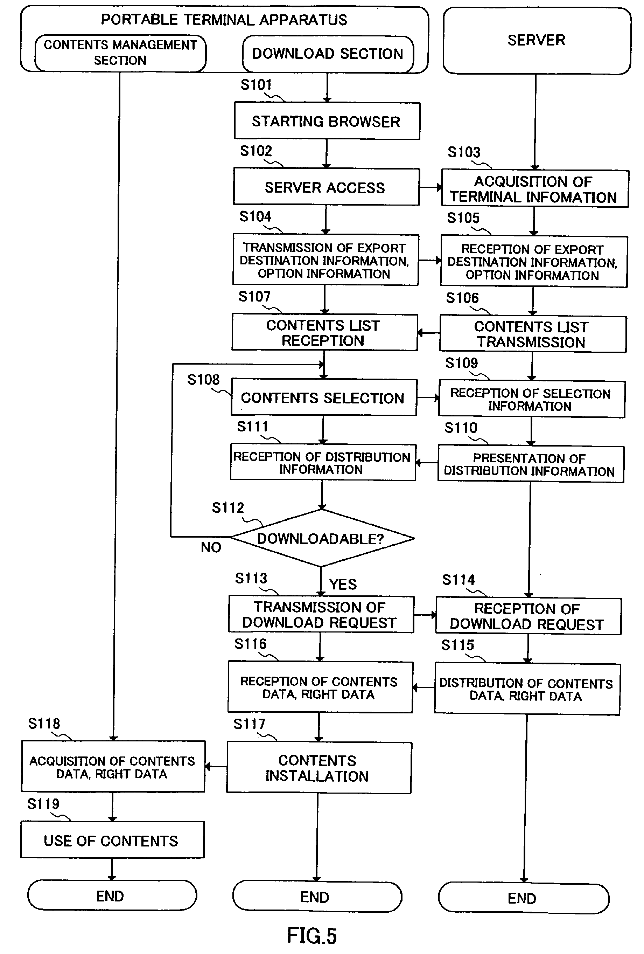

Then, the operation during downloading of contents will be explained using FIG.5. FIG.5 is a flow chart showing an operating procedure for distributing contents from the server 12 to the portable terminal apparatus 11.

Based on the operation of the portable terminal apparatus 11 by the user, the control section 21 starts browser software (step S101) to allow browsing of a contents list to search for desired contents. Then, the portable terminal apparatus 11 accesses the server 12 including contents that can be downloaded using the browser software (step S102) and requests a contents list. At this time, the server 12 acquires terminal information on the portable terminal apparatus 11 which made access (step S103).

The terminal information is information specific to the type of the portable terminal apparatus 11 and contains information on the function and specification, etc., of the portable terminal apparatus 11. For example, the terminal information contains various types of information such as the type of format of reproducible data, size of the display section, the presence/absence of a memory card slot and functions installed. When the portable terminal apparatus 11 accesses the server 12 using the browser software, this terminal information is sent from the portable terminal apparatus 11 in response to a terminal information transmission request from the server 12 and acquired on the server 12 side. The terminal information may be acquired not only from the portable terminal apparatus 11 but also from a different apparatus such as a terminal information server based on information on the type of device of the portable terminal apparatus 11 or may be acquired from a terminal information database provided on the own apparatus.

Furthermore, the following information (1) to (3) may also be described in the terminal information: (1) contents format (may also be a plurality of formats) available in the area of the export source DRM, (2) contents format (may also be a plurality of formats) available in the area of the export destination DRM, (3) contents format conversion capacity of the portable terminal apparatus.

Suppose the server 12 prepares contents that can satisfy both conditions (1) and (2) according to the aforementioned description information (1) and (2) wherever possible as download contents for the portable terminal apparatus 11. When no contents format satisfying both conditions (1) and (2) exists, the portable terminal apparatus 11 selects the "contents format available in the area of the export source DRM" in the aforementioned information (1) which can be converted to the "contents format available in the area of the export destination DRM" in the aforementioned information (2) taking into consideration the "contents format conversion capacity of the portable terminal apparatus" in the aforementioned information (3).

Furthermore, when no terminal information such as the aforementioned information (1) to (3) exists, suppose the contents format is converted during export in the portable terminal apparatus according to the conversion rule which will be described below. Furthermore, suppose the following information [1] to [3] is described in the terminal information: [1] contents format distributed in the area of the export source DRM, [2] contents format (may also be a plurality of formats) available in the area of the export destination DRM, [3] contents format conversion capacity of the portable terminal apparatus. There are the following possible combinations of description information [1] to [3] and the contents format conversion rules in the portable terminal apparatus will also be explained together with the respective combinations.

Case A: When [1] is included in [2], as a conversion rule, contents are exported to the export destination without any contents format conversion in the portable terminal apparatus.

Case B: When [1] is not included in [2] and [1] can be converted to a contents format included in [2] according to the contents format conversion capacity in the portable terminal apparatus, as a conversion rule, the contents format is converted to the contents format of [2] in the portable terminal apparatus, and then contents are exported to the export destination.

Case C: When [1] is not included in [2], [1] cannot be converted to the contents format included in [2] according to the contents format conversion capacity of the portable terminal apparatus, as a conversion rule, there is no means for converting to the contents format of [2] and therefore contents are not exported to the export destination.

Note that the above described contents format includes all information necessary to decide whether contents can be used or not such as the coding type of contents (MPEG4 (Moving Picture Experts Group phase 4), JPEG (Joint Photographic Experts Group), MP3 (MPEG Audio Layer-3), AAC (Advanced Audio Coding), etc.), information on the contents size, bit rate, etc., (640 dots × 480 dots, 128 kbps, etc.) and packaging type of contents (ASF (Advanced Streaming Format), MP4 (MPEG Audio Layer-4), etc.).

Furthermore, there may be an export source DRM that allows a plurality of contents to be contained in one contents package. This will be referred to as "a plurality of contents packages" below.

Normally, when all contents in a plurality of contents packages are contents whose export is allowed, all contents and their rights are exported. However, even when export of contents in a plurality of contents packages is allowed, there may be actually cases where non-exportable contents are included for reasons that no right conversion is possible or no contents format conversion is possible. The processing rules in the portable terminal apparatus in such cases will be explained below.

Case A: When all contents in a plurality of contents packages can be exported, as a processing rule, all contents in the plurality of contents packages are exported to the export destination.

Case B: When at last one exportable content exists in the plurality of contents packages and at last one non-exportable content also exists, as a processing rule, eitherprocessing (a) or (b) belowis carried out according to the intent of the user.
(a) Exportable contents are subjected to export processing and non-exportable contents are not exported.
(b) All contents are not exported.

Case C: When all contents in the plurality of contents package are non-exportable contents, as a processing rule, all contents in the plurality of contents package are not exported.

As shown above, since the terminal information contains description information capable of setting contents format conversion rules in the portable terminal apparatus, it is possible to manage the contents format conversion processing in the portable terminal apparatus according to a contents conversion format available to both or either one of the export source DRM and export destination DRM and reliably perform a contents format conversion when contents are exported from the export source DRM to the export destination DRM.

Then, when the portable terminal apparatus 11 is provided with a memory card slot and an external interface, etc., and can export contents to another apparatus or medium, the control section 21 of the portable terminal apparatus 11 sends the export destination information and option information of the contents to the server 12 (step S104).

The export destination information is information on the export destination of contents and includes information capable of deciding the export destination such as the type of a medium or apparatus selected as the export destination, applicable DRM system. The export destination of the contents may be selected by an entry by the user of the portable terminal apparatus 11 or the memory card (DRM system supporting this memory card) may be automatically selected when the portable terminal apparatus 11 is provided with a memory card slot and the export destination is limited to the memory card 13.

The option information is information on the use of contents selected by the user of the portable terminal apparatus 11 and includes information for identifying the mode of use of contents to be downloaded. For example, the option information includes information for selecting the mode of use such as using (reproducing) music contents with images and voice by only the portable terminal apparatus 11, using the contents by the portable terminal apparatus 11 and also exporting the contents to the memory card 13 to be used there or not using the contents by the portable terminal apparatus 11 but exporting them to the memory card 13 to be used there.

Then, the control section 31 of the server 12 receives the export destination information and option information through the transmission/reception section 32 (step S105). Then, based on the acquired terminal information, export destination information and option information, the contents data supply section 35 of the control section 31 searches for contents data that can be downloaded by the portable terminal apparatus 11 from the contents data stored in the data storage section 34, creates a contents list and sends the list to the portable terminal apparatus 11 through the transmission/reception section 32 (step S106).

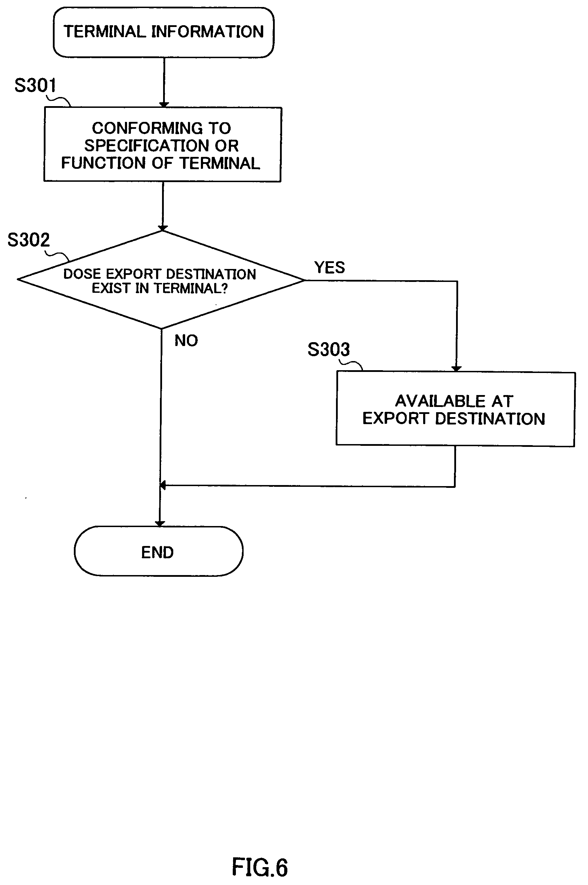

Here, an example of a procedure for searching for downloadable contents data will be explained using the flow charts in FIG.6 to FIG.8.

FIG.6 is a flow chart showing an example of a procedure for searching for contents data based on the terminal information. The contents data supply section 35 searches and extracts contents data corresponding to the specification of the portable terminal apparatus and functions installed based on the terminal information of the portable terminal apparatus 11 (step S301). For example, the display size of the terminal, available data format, contents data corresponding to CODEC used, etc., are extracted. Then, it is decided whether there is any export destination in the terminal (e.g., presence/absence of a memory slot) (step S302), and when there is an export destination, the contents data available at the export destination is further searched and extracted (step S303). On the other hand, when there is no export destination, the search based on the terminal information is terminated.

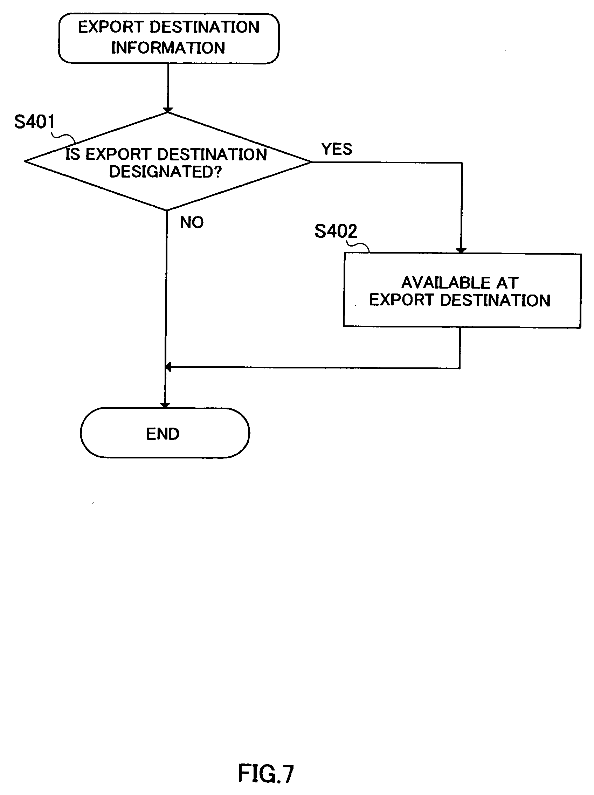

FIG.7 is a flow chart showing an example of a procedure for searching for contents data based on the export destination information. The contents data supply section 35 decides the presence/absence of designation of the export destination based on the acquired export destination information (step S401) and searches and extracts, when there is some export destination designated, the apparatus or medium at the export destination and contents data available at the DRM system used at the export destination (step S402). On the other hand, when no export destination is designated, the contents data supply section 35 terminates the search based on the export destination information.

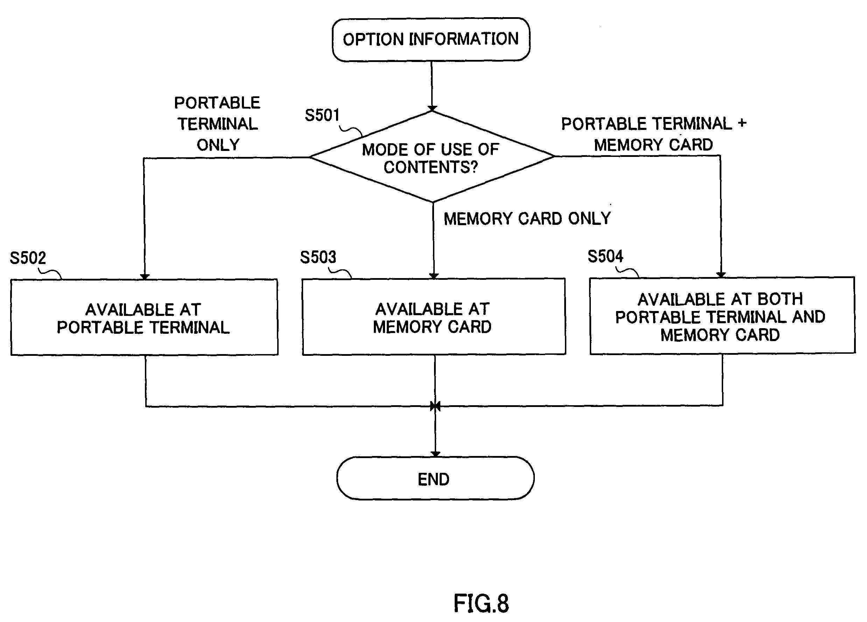

FIG.8 is a flow chart showing an example of a procedure for searching for contents data based on the option information. The contents data supply section 35 decides the mode of use of contents based on the acquired option information (step S501). When the user of the portable terminal apparatus 11 has selected the mode of use in which contents data is used by only the portable terminal apparatus, only the contents data available at the portable terminal apparatus 11 is searched and extracted (step S502). On the other hand, when the mode of use by only the memory card 13 (or a device capable of using recording data in the memory card) is selected, only the contents data available at the memory card 13 is searched and extracted (step S503). Furthermore, when the mode in which contents data is used by the portable terminal apparatus 11 and then exported to and used in the memory card 13 is selected, the contents data available at both the portable terminal apparatus 11 and memory card 13 is searched and extracted (step S504).

Furthermore, in addition to the search for the contents data, the right data supply section 36 of the control section 31 prepares right data corresponding to the contents data. At this time, according to a procedure similar to that of the flow charts shown in FIG. 6 to FIG.8, right data matching the usage condition of the contents is generated or appropriate data is extracted and acquired from prestored right data based on the terminal information, export destination information and option information. The right data includes information describing usage conditions including handling permission information and constraint information on the use of contents such as an allowable usage count of contents, usage period or whether or not contents can be exported to other DRM systems.

For example, when the terminal information indicates that the portable terminal apparatus 11 is of a type without any memory card slot, the right data supply section 36 supplies right data not including permission of export to the memory card. Furthermore, when the option information selects the mode in which contents are used only by the memory card 13 (or device capable of using recording data of the memory card), the right data supply section 36 supplies right data not including any right to use in the portable terminal apparatus 11.

Here, the right data including usage conditions at the export destination but not adaptable to the first DRM system used in the portable terminal apparatus 11 cannot be handled in the portable terminal apparatus 11, and therefore it is supplied as information corresponding to the first DRM system when the contents are downloaded from the server 12 to the portable terminal apparatus 11. When the contents are exported from the portable terminal apparatus 11 to the memory card 13, right data needs to be converted so as to be adaptable to the second DRM system used in the memory card 13. The conversion of right data will be described later.

Returning to the flow chart in FIG.5, the control section 21 of the portable terminal apparatus 11 receives a contents list listing contents data extracted through the above described search procedure and displays it on the display section (step S107). At this time, unnecessary contents are not included in the list, and therefore the user of the portable terminal apparatus 11 can select appropriate contents from the list without being aware of whether the contents are available at the own apparatus and export destination or not. There are various examples of modes in which the contents list is presented such as (1) presenting only names, etc., of contents and selecting and supplying contents data of a contents type adaptable to the server side with regard to the selected contents, (2) presenting the contents list so as to allow the user side to select the type of device of the portable terminal apparatus first and select contents from the contents data of a contents type adaptable to the corresponding type of device, (3) presenting a plurality of contents type for respective contents and allowing the user side to select appropriate contents data, etc.

Then, when desired contents are selected from the contents list through an entry by the user of the portable terminal apparatus 11, the control section 21 sends the selection information to the server 12 through the transmission/reception section 22 (step S108). When the server 12 receives the selection information through the transmission/reception section 32 (step S109), the distribution section 37 generates distribution information including information on the contents data and right data such as the contents type of the selected contents data, data size, description content of the right data and sends the distribution information to the portable terminal apparatus 11 (step S110).

When the portable terminal apparatus 11 receives the distribution information through the transmission/reception section 22 (step S111), the download section 25 of the control section 21 decides whether the selected contents data can be downloaded or not based on this distribution information (step S112). For example, when the portable terminal apparatus 11 reproduces music contents and then selects and downloads music contents which can be exported to and reproduced by the memory card 13, the download section 25 decides whether the contents type has a format applicable to both the portable terminal apparatus 11 and memory card 13 or not, whether the memory 23 has a sufficient free space for the data size of the contents data or not, or whether the right data corresponds to the respective DRM systems of the portable terminal apparatus 11 and memory card 13 or not.

When it decides in step S112 that contents can be downloaded, the download section 25 sends a download request for the selected contents data to the server 12 (step S113). On the other hand, when it decides that the contents cannot be downloaded, the download section 25 returns to step S108 and selects contents over again.

When the server 12 receives the download request (step S114), the distribution section 37 of the control section 31 distributes the contents data corresponding to the distribution information (that is, selected by the portable terminal apparatus 11) and right data corresponding to this contents data to the portable terminal apparatus 11 (step S115).

The download section 25 of the portable terminal apparatus 11 receives the distributed contents data and rightdata (step S116) and stores and installs the contents data and right data in the memory 23 of the portable terminal apparatus 11 (step S117). These contents data and right data are stored in different areas of the memory 23. The contents management section 26 acquires the installed contents data and right data (step S118) and carries out management related to handling of the contents based on the right data. At this time, the acquired contents data and right data are decrypted and then the contents are used based on the right data and processing such as reproduction is carried out (step S119).

When the contents are downloaded, it is preferable to carry out necessary authentication processing between the portable terminal apparatus 11 and server 12. Furthermore, when contents are charged, predetermined billing processing is carried out between the control section 21 of the portable terminal apparatus 11 and the control section 31 of the server 12. Publicly known techniques can be used for these authentication processing and billing processing.

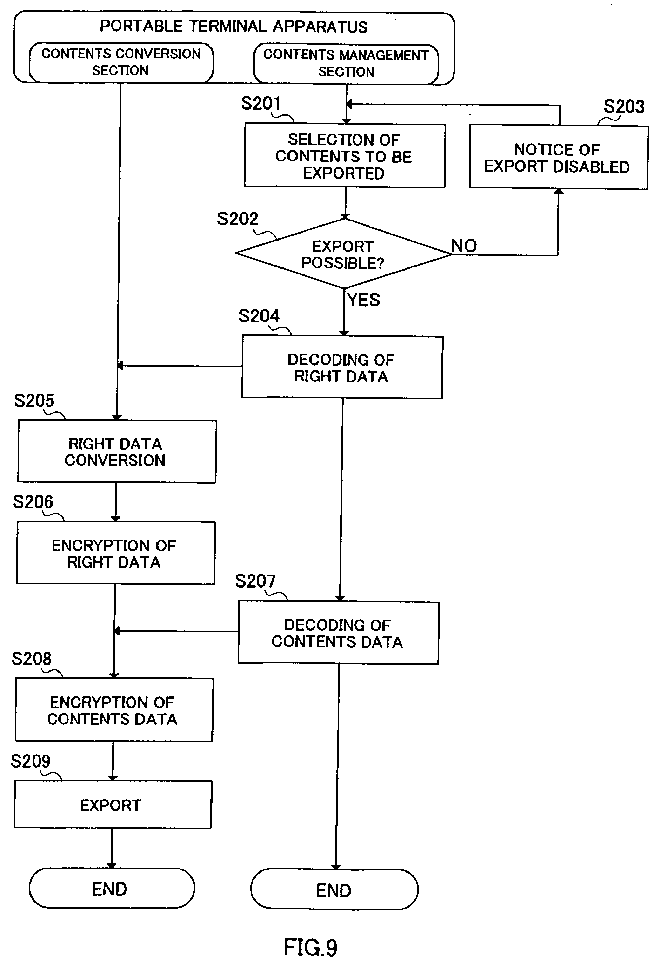

Then, the operation when contents are exported will be explained using FIG.9. FIG.9 is a flow chart showing an operating procedure for exporting contents from the portable terminal apparatus 11 to the memory card 13.

When contents data to be exported is selected through the operation by the user of the portable terminal apparatus 11 (step S201), the contents management section 26 of the control section 21 decides whether the selected contents data can be exported or not (step S202).

At this time, the contents management section 26 makes such a decision based on the right data corresponding to the contents data, terminal information, export destination information of contents and option information, etc. When export is not possible, the contents management section 26 sends a notice of impossibility of export (step S203) and returns to the contents selection step.

For example, there may be cases where various types of contents are downloaded to the portable terminal apparatus 11 and these contents also include contents not including permission of export to other DRM systems as right data. Therefore, even if an attempt is made to export such contents to other medium such as the memory card, export is disabled. Whether export is possible or not is also decided based on whether the memory card 13 has a sufficient amount of free space at the export destination for the data size of contents data to be exported or not.

When it decides in step S202 that contents data can be exported, the contents management section 26 decodes the right data of the contents data (step S204). Every time the right data is downloaded from the server 12, the right data is encrypted by being adapted to the first DRM system used in the portable terminal apparatus 11, and therefore the right data is decrypted according to the cryptographic key in this first DRM system. Here, if the right data is already decrypted to use contents, this step is omitted.

Then, the contents conversion section 27 converts the right data of the decrypted raw data so as to be adaptable to the DRM system of the memory card 13 which is the export destination (step S205). At this time, the contents conversion section 27 carries out a conversion so that the right to use, etc., based on the copyright of the right data becomes equal to or smaller than the range before the conversion. That is, when the corresponding handling permission information on the right data does not exist at both DRM systems of the portable terminal apparatus 11 and memory card 13, a conversion is made in a direction in which the permitted content is reduced. On the other hand, when the corresponding constraint information on the right data does not exist at both DRM systems of the portable terminal apparatus 11 and memory card 13, a conversion is made in a direction in which the constraint content is expanded.

For a conversion of right data, a predetermined conversion rule is set. Furthermore, for usage conditions involving permission or constraint that cannot be described in the DRM system at either the export source or export destination, it is possible to preset their correspondence and perform a conversion according to the setting (apply a default value), etc., so as to set the usage conditions as appropriate within a range in which the usage condition is not expanded illegally. At this time, between the two DRM systems, a consensus on the specification such as the format, function, capacity of available contents data is formed and a consensus is also formed on the rule about rewriting of the right data.

There are various examples of the right data conversion rule such as (1) to convert permission information supported by the DRM system at the export destination, (2) to delete, without conversion, permission information not supported by the DRM system at the export destination, (3) to delete the original permission information without conversion when constraint information is added to permission information supported by the DRM system at the export destination and when there is constraint information not supported by the DRM system at the export destination, (4) to convert the permission information and constraint information when only the constraint information supported by the DRM system at the export destination is added in the permission information supported by the DRM system at the export destination, (5) not to convert permission information not existing in the right data at the conversion source, (6) not to ignore but convert constraint information existing in right data at the conversion source.

Then, the contents conversion section 27 encrypts the converted right data using a cryptographic key in the second DRM system used in the memory card 13 (step S206). Furthermore, the contents management section 26 carries out decryption of the contents to be exported (step S207). When the contents data is downloaded from the server 12 as with the above described right data, the contents data is encrypted in compliance with the first DRM system used in the portable terminal apparatus 11, and therefore the contents data is decrypted using the cryptographic key in the first DRM system. Here, when the contents data is already decrypted for the use of the contents, this step is omitted. Then, the contents conversion section 27 encrypts the contents data of the decrypted raw data using the cryptographic key in the second DRM system used in the memory card 13 (step S208).

Thus, the right data and contents data converted so as to be adaptable to the second DRM system are output from the contents conversion section 27 of the control section 21, passed through the memory card interface section 24, exported to the memory card 13 (step S209), and stored and recorded in the storage area in the card.

In the above described procedure during export, the contents management section 26 carries out encryption processing, decrypting processing and contents usage processing compliant with the DRM system of the portable terminal apparatus 11 and the contents conversion section 27 carries out encryption processing, decrypting processing and conversion processing compliant with the DRM system of the memory card 13 and divides the function in this way, which secures the security in the respective DRM systems.

In this embodiment, when the server at the distribution source prepares right data, it is possible to generate the right data based on the setting of the contents copyright holder and aforementioned terminal information, export destination information, option information, etc., or generate right data compliant with a plurality of DRM systems based on the setting of the contents copyright holder beforehand and select the matching right from among them taking into consideration the terminal information, export destination information, option information, etc. It is also possible to convert the usage condition set by the contents copyright holder beforehand so as to be adaptable to the DRM system at the export destination based on the terminal information, export destination information, option information, etc., as appropriate.

Furthermore, the right data is not limited to one type of right data for the contents, and a plurality of pieces of right data may also be provided for one piece of contents data. Furthermore, it is also possible to set usage conditions which differ from one DRM system to another. For example, when the contents are charged, a detailed fee setting is available according to usage conditions classified in detail. Furthermore, with regard to distribution of the fees, too, a detailed setting is available according to complicated usage conditions such as the export destination and the number of times export is allowed. Furthermore, in the case of composite contents, etc., for example, contents related to reproduction of music contents and display of its lyrics, it is possible to provide a plurality of pieces of permission information in one piece of right data.

Furthermore, the export destination of the contents is not limited to the memory card, but the present invention is applicable to anything such as a recording medium in which contents data is recorded, a device which uses the contents data for reproduction, etc., or a contents usage program such as a contents data reproduction programwhich is operated by a computer, if it is at least compliant with the DRM system. Furthermore, the export destination can also be an external device or recording medium connected by wireless or wired communication means.

Furthermore, the contents data and right data are not limited to data which is downloaded from a server by a portable terminal apparatus, but the present invention is likewise applicable to cases where data pushed (sent) by e-mail, etc., is acquired.

As shown above, according to this embodiment, when contents are downloaded from the server by the portable terminal apparatus and exported to the memory card, it is possible to distribute the contents data in format that can be used at the export destination and right data that can be converted to be adaptable to the DRM system at the export destination from the server based on terminal information, export destination information, and option information, and taking the export destination of the contents in consideration, and download the contents data by the portable terminal apparatus. This allows the contents user, etc., who is an end user of the portable terminal apparatus to acquire contents which can be exported to a different DRM system.

Furthermore, according to this embodiment, it is possible to appropriately convert right data downloaded by the portable terminal apparatus so as to be adaptable to the DRM system at the export destination and allow the contents user, etc., who is an end user to appropriately export the acquired contents data and right data to devices and media of different DRM systems.

### (Embodiment 2)

Then, Embodiment 2 will describe a specific example of the conversion rule when right data is converted using the above described handling permission information. While the foregoing explanations have described the case where the right data includes usage conditions including permission and constraint on the use of contents for copyright protection, copyright information describing usage permission, etc., the following explanations will describe in detail conversion rules when converting right data using handling permission information which describes permission and constraint on the use of contents more specifically. Furthermore, this embodiment sets usage constraint information as the above described constraint information which constrains the usage period and usage count, etc., related to the method of use of contents set in the handling permission information. The contents distribution system according to Embodiment 2 has a configuration similar to that of the portable terminal apparatus 11, server 12 and memory card 13 shown in FIG.1 to FIG.3, and therefore illustrations and explanations thereof will be omitted.

The handling permission information is information for setting a methodof use of contents and usage permission and non-permission, etc., corresponding to the method of use, and included in the above described right data. In the above described portable terminal apparatus 11, when contents are exported to the memory card 13 which is the export destination, the contents conversion section 27 converts right data based on setting contents of handling permission information included in the right data decrypted by the contents management section 26.

Then, the digital contents can be roughly classified into the following two types:
1. Digital contents type with only one type of method of use
   Example: audio/melody/video, etc.: method of use = "reproduction" only
   JAVA (R) application/program, etc.: method of use = "execute" only
2. Digital contents type with two types of method of use
   Example: wallpaper/book/document, etc.: method of use= "execute" and "print"

Furthermore, the right description model of DRM can be roughly classified into the following three types:
1. Right permission model: describes "what method of use should be permitted".
   Describes with AND condition of "permitted" and "non-permitted" on handling permission information such as: "reproduction permitted (non-permitted)" & "display permitted (non-permitted)" & "print permitted (non-permitted)" & "execute permitted (non-permitted)".
   Example:
   a. "reproduction permitted" & "display non-permitted" & "print non-permitted" & "execute non-permitted"
   b. "reproduction non-permitted" & "display permitted" & "print permitted" & "execute non-permitted"
2. Right permission + usage constraint model: describes "what method of use is permitted under what constraint".
   Example:
   a. "reproduction permitted: up to 5 times" & "display non-permitted" & "print non-permitted" & "execute non-permitted"
   b. "reproduction non-permitted" & "display permitted: from month b day c year a to month g day h year f" & "print permitted: up to 2 times" & "execute permitted"
3. Usage constraint model: describes "under what constraint (what) method of use should be permitted". As shown in the following example, all can be resolved into "right permission + usage constraint model" in 2.
   Example:
   a. audio contents with "usage constraint up to 5 times"
      Since the method of use of audio contents is limited to "reproduction", "reproduction permitted" is considered to be described implicitly.
      "usage constraint up to 5 times"→"reproduction permitted: up to 5 times" & "display non-permitted" & "execute non-permitted"
   b. Wallpaper contents with "usage constraint from January 1, 2003 to December 31, 2003"
      Since "display" and "print" are considered as the methods of use of wallpaper contents, "display permitted" and "print permitted" are considered to be described implicitly.
      "usage constraint from January 1, 2003 to December 31, 2003"
      →"reproduction non-permitted" & "display permitted: from January 1, 2003 to December 31, 2003" & "print permitted: from January 1, 2003 to December 31, 2003" & "print permitted: up to 2 times" & "execute non-permitted"
   c. Wallpaper contents with "usage constraint from January 1, 2003 to December 31, 2003" and "print count constrained up to 5 times"
      → "reproduction non-permitted" & "display permitted: from January 1, 2003 to December 31, 2003" & "print permitted: up to 5 times" & "execute non-permitted"

The above combinations of "contents type" and "DRM right description model" are as follows:
1. Contents type with only one type of method of use
   1-A: Right permission model
   1-B: Right permission + usage constraint model
   1-C: Usage constraint model
2. Contents type with two types of method of use (two methods of use are described as X (first method of use) and Y (second method of use))
   2-A: Right permission model (two types of method of use are both supported individually)
   2-B: Right permission model (two types of method of use are not discriminated but supported as one)
   2-C: Right permission model (only one (X) of two types of method of use is supported)
   2-D: Right permission model (only one (Y) of two types of method of use is supported)
   2-E: Right permission + usage constraint model (two types of method of use are both supported individually)
   2-F: Right permission + usage constraint model
      (two types of method of use are not discriminated but supported as one)
   2-G: Right permission + usage constraint model (only one (X) of two types of method of use is supported)
   2-H: Right permission + usage constraint model (only one (Y) of two types of method of use is supported)
   2-I: Usage constraint model
      (constraints on two types of method of use are both supported individually)
   2-J: Usage constraint model
      (constraints on two types of method of use are not discriminated but supported as one)
   2-K: Usage constraint model
      (constraint on only one (X) of two types of method of use is supported)
   2-L: Usage constraint model
      (constraint on only one (Y) of two types of method of use is supported)

Therefore, the case of a contents type with only one type of method of use of the combination of "right description model of export source DRM" and "right description model of export destination DRM" is as shown in Table 1 below. In Table 1, cases 1-1 to 1-9 are set to identify the respective combinations.

**[Table 1]**

| Right description model of export source DRM | Right description model of export destination DRM | Case |
|---|---|---|
| 1-A: Right permission model | 1-A: Right permission model | 1-1 |
| | 1-B: Right permission + usage constraint model | 1-2 |
| | 1-C: Usage constraint model | 1-3 |
| 1-B: Usage constraint + usage constraint model | 1-A: Right permission model | 1-4 |
| | 1-B: Right permission + usage constraint model | 1-5 |
| | 1-C: Usage constraint model | 1-6 |
| 1-C: Usage constraint model | 1-A: Right permission model | 1-7 |
| | 1-B: Right permission + usage constraint model | 1-8 |
| | 1-C: Usage constraint model | 1-9 |

Furthermore, the case of a contents type with two types of method of use of the combination of "right description model of export source DRM" and "right description model of export destination DRM" (two methods of use are described as X and Y) is as shown in Table 2 below. In Table 2, cases 2-1 to 2-144 are set to identify the respective combinations.

**[Table 2]**

| Right description model of export source DRM | Right description model of export destination DRM | Case |
|---|---|---|
| 2-A: Right permission model (two types of method of use are both supported individually) | 2-A: Right permission model (two types of method of use are both supported individually) | 2-1 |
| | 2-B: Right permission model (two types of method of use are not discriminated but supported as one) | 2-2 |
| | 2-C: Right permission model (only one (X) of two types of method of use is supported) | 2-3 |
| | 2-D: Right permission model (only one (Y) of two types of method of use is supported) | 2-4 |
| | 2-E: Right permission + usage constraint model (two types of method of use are both supported individually) | 2-5 |
| | 2-F: Right permission + usage constraint model (two types of method of use are not discriminated but supported as one) | 2-6 |
| | 2-G: Right permission + usage constraint model (only one (X) of two types of method of use is supported) | 2-7 |
| | 2-H: Right permission + usage constraint model (only one (Y) of two types of method of use is supported) | 2-8 |
| | 2-I: Usage constraint model (constraints on two types of method of use are both supported individually) | 2-9 |
| | 2-J: Usage constraint model (constraints on two types of method of use are not discriminated but supported as one) | 2-10 |
| | 2-K: Usage constraint model (constraint on only one (X) of two types of method of use is supported) | 2-11 |
| | 2-L: Usage constraint model (constraint on only one (Y) of two types of method of use is supported) | 2-12 |
| 2-B: Right permission model (two types of method of use are not discriminated but supported as one) | 2-A: Right permission model (two types of method of use are both supported individually) | 2-13 |
| | 2-B: Right permission model (two types of method of use are not discriminated but supported as one) | 2-14 |
| | 2-C: Right permission model (only one (X) of two types of method of use is supported) | 2-15 |
| | 2-D: Right permission model (only one (Y) of two types of method of use is supported) | 2-16 |
| | 2-E: Right permission + usage constraint model (two types of method of use are both supported individually) | 2-17 |
| | 2-F: Right permission + usage constraint model (two types of method of use are not discriminated but supported as one) | 2-18 |
| | 2-G: Right permission + usage constraint model (only one (X) of two types of method of use is supported) | 2-19 |
| | 2-H: Right permission + usage constraint model (only one (Y) of two types of method of use is supported) | 2-20 |
| | 2-I: Usage constraint model (constraints on two types of method of use are both supported individually) | 2-21 |
| | 2-J: Usage constraint model (constraints on two types of method of use are not discriminated but supported as one) | 2-22 |
| | 2-K: Usage constraint model (constraint on only one (X) of two types of method of use is supported) | 2-23 |
| | 2-L: Usage constraint model (constraint on only one (Y) of two types of method of use is supported) | 2-24 |
| 2-C: Right permission model (only one (X) of two types of method of use is supported) | 2-A: Right permission model (two types of method of use are both supported individually) | 2-25 |
| | 2-B: Right permission model (two types of method of use are not discriminated but supported as one) | 2-26 |
| | 2-C: Right permission model (only one (X) of two types of method of use is supported) | 2-27 |
| | 2-D: Right permission model (only one (Y) of two types of method of use is supported) | 2-28 |
| | 2-E: Right permission + usage constraint model (two types of method of use are both supported individually) | 2-29 |
| | 2-F: Right permission + usage constraint model (two types of method of use are not discriminated but supported as one) | 2-30 |
| | 2-G: Right permission + usage constraint model (only one (X) of two types of method of use is supported) | 2-31 |
| | 2-H: Right permission + usage constraint model (only one (Y) of two types of method of use is supported) | 2-32 |
| | 2-I: Usage constraint model (constraints on two types of method of use are both supported individually) | 2-33 |
| | 2-J: Usage constraint model (constraints on two types of method of use are not discriminated but supported as one) | 2-34 |
| | 2-K: Usage constraint model (constraint on only one (X) of two types of method of use is supported) | 2-35 |
| | 2-L: Usage constraint model (constraint on only one (Y) of two types of method of use is supported) | 2-36 |
| 2-D: Right permission model (only one (Y) of two types of method of use is supported) | 2-A: Right permission model (two types of method of use are both supported individually) | 2-37 |
| | 2-B: Right permission model (two types of method of use are not discriminated but supported as one) | 2-38 |
| | 2-C: Right permission model (only one (X) of two types of method of use is supported) | 2-39 |
| | 2-D: Right permission model (only one (Y) of two types of method of use is supported) | 2-40 |
| | 2-E: Right permission + usage constraint model (two types of method of use are both supported individually) | 2-41 |
| | 2-F: Right permission + usage constraint model (two types of method of use are not discriminated but supported as one) | 2-42 |
| | 2-G: Right permission + usage constraint model (only one (X) of two types of method of use is supported) | 2-43 |
| | 2-H: Right permission + usage constraint model (only one (Y) of two types of method of use is supported) | 2-44 |
| | 2-I: Usage constraint model (constraints on two types of method of use are both supported individually) | 2-45 |
| | 2-J: Usage constraint model (constraints on two types of method of use are not discriminated but supported as one) | 2-46 |
| | 2-K: Usage constraint model (constraint on only one (X) of two types of method of use is supported) | 2-47 |
| 2-D: Right permission model (only one (Y) of two types of method of use is supported) | 2-A: Right permission model (two types of method of use are both supported individually) | 2-37 |
| | 2-B: Right permission model (two types of method of use are not discriminated but supported as one) | 2-38 |
| | 2-C: Right permission model (only one (X) of two types of method of use is supported) | 2-39 |
| | 2-L: Usage constraint model (constraint on only one (Y) of two types of method of use is supported) | 2-48 |
| 2-E: Right permission + usage constraint model (two types of method of use are both supported individually) | 2-A: Right permission model (two types of method of use are both supported individually) | 2-49 |
| | 2-B: Right permission model (two types of method of use are not discriminated but supported as one) | 2-50 |
| | 2-C: Right permission model (only one (X) of two types of method of use is supported) | 2-51 |
| | 2-D: Right permission model (only one (Y) of two types of method of use is supported) | 2-52 |
| | 2-E: Right permission + usage constraint model (two types of method of use are both supported individually) | 2-53 |
| | 2-F: Right permission + usage constraint model (two types of method of use are not discriminated but supported as one) | 2-54 |
| | 2-G: Right permission + usage constraint model (only one (X) of two types of method of use is supported) | 2-55 |
| | 2-H: Right permission + usage constraint model (only one (Y) of two types of method of use is supported) | 2-56 |
| | 2-I: Usage constraint model (constraints on two types of method of use are both supported individually) | 2-57 |
| | 2-J: Usage constraint model (constraints on two types of method of use are not discriminated but supported as one) | 2-58 |
| | 2-K: Usage constraint model (constraint on only one (X) of two types of method of use is supported) | 2-59 |
| | 2-L: Usage constraint model (constraint on only one (Y) of two types of method of use is supported) | 2-60 |
| 2-F: Right permission + usage constraint model (two types of method of use are not discriminated but supported as one) | 2-A: Right permission model (two types of method of use are both supported individually) | 2-61 |
| | 2-B: Right permission model (two types of method of use are notdiscriminatedbutsupported as one) | 2-62 |
| | 2-C: Right permission model (only one (X) of two types of method of use is supported) | 2-63 |
| | 2-D: Right permission model (only one (Y) of two types of method of use is supported) | 2-64 |
| | 2-E: Right permission + usage constraint model (two types of method of use are both supported individually) | 2-65 |
| | 2-F: Right permission + usage constraint model (two types of method of use are not discriminated but supported as one) | 2-66 |
| | 2-G: Right permission + usage constraint model (only one (X) of two types of method of use is supported) | 2-67 |
| | 2-H: Right permission + usage constraint model (only one (Y) of two types of method of use is supported) | 2-68 |
| | 2-I: Usage constraint model (constraints on two types of method of use are both supported individually) | 2-69 |
| | 2-J: Usage constraint model (constraints on two types of method of use are not discriminated but supported as one) | 2-70 |
| | 2-K: Usage constraint model (constraint on only one (X) of two types of method of use is supported) | 2-71 |
| | 2-L: Usage constraint model (constraint on only one (Y) of two types of method of use is supported) | 2-72 |
| 2-G: Right permission + usage constraint model (only one (X) of two types of method of use is supported) | 2-A: Right permission model (two types of method of use are both supported individually) | 2-73 |
| | 2-B: Right permission model (two types of method of use are not discriminated but supported as one) | 2-74 |
| | 2-C: Right permission model (only one (X) of two types of method of use is supported) | 2-75 |
| | 2-D: Right permission model (only one (Y) of two types of method of use is supported) | 2-76 |
| | 2-E: Right permission + usage constraint model (two types of method of use are both supported individually) | 2-77 |
| | 2-F: Right permission + usage constraint model (two types of method of use are not discriminated but supported as one) | 2-78 |
| | 2-G: Right permission + usage constraint model (only one (X) of two types of method of use is supported) | 2-79 |
| | 2-H: Right permission + usage constraint model (only one (Y) of two types of method of use is supported) | 2-80 |
| | 2-I: Usage constraint model (constraints on two types of method of use are both supported individually) | 2-81 |
| | 2-J: Usage constraint model (constraints on two types of method of use are not discriminated but supported as one) | 2-82 |
| | 2-K: Usage constraint model (constraint on only one (X) of two types of method of use is supported) | 2-83 |
| | 2-L: Usage constraint model (constraint on only one (Y) of two types of method of use is supported) | 2-84 |
| 2-H: Right permission + usage constraint model (only one (Y) of two types of method of use is supported) | 2-A: Right permission model (two types of method of use are both supported individually) | 2-85 |
| | 2-B: Right permission model (two types of method of use are not discriminated but supported as one) | 2-86 |
| | 2-C: Right permission model (only one (X) of two types of method of use is supported) | 2-87 |
| | 2-D: Right permission model (only one (Y) of two types of method of use is supported) | 2-88 |
| | 2-E: Right permission + usage constraint model (two types of method of use are both supported individually) | 2-89 |
| | 2-F: Right permission + usage constraint model (two types of method of use are not discriminated but supported as one) | 2-90 |
| | 2-G: Right permission + usage constraint model (only one (X) of two types of method of use is supported) | 2-91 |
| | 2-H: Right permission + usage constraint model (only one (Y) of two types of method of use is supported) | 2-92 |
| | 2-I: Usage constraint model (constraints on two types of method of use are both supported individually) | 2-93 |
| | 2-J: Usage constraint model (constraints on two types of method of use are not discriminated but supported as one) | 2-94 |
| | 2-K: Usage constraint model (constraint on only one (X) of two types of method of use is supported) | 2-95 |
| | 2-L: Usage constraint model (constraint on only one (Y) of two types of method of use is supported) | 2-96 |
| 2-I: Usage constraint model (constraints on two types of method of use are both supported individually) | 2-A: Right permission model (two types of method of use are both supported individually) | 2-97 |
| | 2-B: Right permission model (two types of method of use are not discriminated but supported as one) | 2-98 |
| | 2-C: Right permission model (only one (X) of two types of method of use is supported) | 2-99 |
| | 2-D: Right permission model (only one (Y) of two types of method of use is supported) | 2-100 |
| | 2-E: Right permission + usage constraint model (two types of method of use are both supported individually) | 2-101 |
| | 2-F: Right permission + usage constraint model (two types of method of use are not discriminated but supported as one) | 2-102 |
| | 2-G: Right permission + usage constraint model (only one (X) of two types of method of use is supported) | 2-103 |
| | 2-H: Right permission + usage constraint model (only one (Y) of two types of method of use is supported) | 2-104 |
| | 2-I: Usage constraint model (constraints on two types of method of use are both supported individually) | 2-105 |
| | 2-J: Usage constraint model (constraints on two types of method of use are not discriminated but supported as one) | 2-106 |
| | 2-K: Usage constraint model (constraint on only one (X) of two types of method of use is supported) | 2-107 |
| | 2-L: Usage constraint model (constraint on only one (Y) of two types of method of use is supported) | 2-108 |
| 2-J: Usage constraint model (constraints on two types of method of use are not discriminated but supported as one) | 2-A: Right permission model (two types of method of use are both supported individually) | 2-109 |
| | 2-B: Right permission model (two types of method of use are not discriminated but supported as one) | 2-110 |
| | 2-C: Right permission model (only one (X) of two types of method of use is supported) | 2-111 |
| | 2-D: Right permission model (only one (Y) of two types of method of use is supported) | 2-112 |
| | 2-E: Right permission + usage constraint model (two types of method of use are both supported individually) | 2-113 |
| | 2-F: Right permission + usage constraint model (two types of method of use are not discriminated but supported as one) | 2-114 |
| | 2-G: Right permission + usage constraint model (only one (X) of two types of method of use is supported) | 2-115 |
| | 2-H: Right permission + usage constraint model (only one (Y) of two types of method of use is supported) | 2-116 |
| | 2-I: Usage constraint model (constraints on two types of method of use are both supported individually) | 2-117 |
| | 2-J: Usage constraint model (constraints on two types of method of use are not discriminated but supported as one) | 2-118 |
| | 2-K: Usage constraint model (constraint on only one (X) of two types of method of use is supported) | 2-119 |
| | 2-L: Usage constraint model (constraint on only one (Y) of two types of method of use is supported) | 2-120 |
| 2-K: Usage constraint model (constraint on only one (X) of two types of method of use is supported) | 2-A: Right permission model (two types of method of use are both supported individually) | 2-121 |
| | 2-B: Right permission model (two types of method of use are not discriminated but supported as one) | 2-122 |
| | 2-C: Right permission model (only one (X) of two types of method of use is supported) | 2-123 |
| | 2-D: Right permission model (only one (Y) of two types of method of use is supported) | 2-124 |
| | 2-E: Right permission + usage constraint model (two types of method of use are both supported individually) | 2-125 |
| | 2-F: Right permission + usage constraint model (two types of method of use are not discriminated but supported as one) | 2-126 |
| | 2-G: Right permission + usage constraint model (only one (X) of two types of method of use is supported) | 2-127 |
| | 2-H: Right permission + usage constraint model (only one (Y) of two types of method of use is supported) | 2-128 |
| | 2-I: Usage constraint model (constraints on two types of method of use are both supported individually) | 2-129 |
| | 2-J: Usage constraint model (constraints on two types of method of use are not discriminated but supported as one) | 2-130 |
| 2-L: Usage constraint model (constraint on only one (Y) of two types of method of use is supported) | 2-A: Right permission model (two types of method of use are both supported individually) | 2-133 |
| | 2-B: Right permission model (two types of method of use are not discriminated but supported as one) | 2-134 |
| | 2-C: Right permission model (only one (X) of two types of method of use is supported) | 2-135 |
| | 2-D: Right permission model (only one (Y) of two types of method of use is supported) | 2-136 |
| | 2-E: Right permission + usage constraint model (two types of method of use are both supported individually) | 2-137 |
| | 2-F: Right permission + usage constraint model (two types of method of use are not discriminated but supported as one) | 2-138 |
| | 2-G: Right permission + usage constraint model (only one (X) of two types of method of use is supported) | 2-139 |
| | 2-H: Right permission + usage constraint model (only one (Y) of two types of method of use is supported) | 2-140 |
| | 2-I: Usage constraint model (constraints on two types of method of use are both supported individually) | 2-141 |
| | 2-J: Usage constraint model (constraints on two types of method of use are not discriminated but supported as one) | 2-142 |
| | 2-K: Usage constraint model (constraint on only one (X) of two types of method of use is supported) | 2-143 |
| | 2-L: Usage constraint model (constraint on only one (Y) of two types of method of use is supported) | 2-144 |

Then, with regard to cases 1-1 to 1-9 shown in Table 1 above, the conversion rules applicable to a right conversion will be explained below. Note that the following rules are only general rules and when specified otherwise, a right conversion will follow that instruction.

In case 1-1 above, the following conversion rule will be applied:
1. When the handling permission information on the method of use related to the contents exists at both the export source and export destination,
   1-1. When the handling permission information is "permitted" at the export source, the right data is converted and exported so that the content of the handling permission information is inherited to the export destination (however, all other handling permission information at the export destination is set to "non-permitted").
   1-2. When the handling permission information is "non-permitted" at the export source, the entire right data is not exported.
2. When the handling permission information on the method of use related to the contents does not exist at the export destination, the entire right data is not exported.
3. When the handling permission information on the method of use related to the contents does not exist at the export source, the entire right data is not exported.

Then, in case 1-2 above, the following conversion rule will be applied:
1. When the handling permission information on the method of use related to the contents exists at both the export source and the export destination
   1-1. When the handling permission information is "permitted" at the export source, right data is converted and exported so that the handling permission information content is inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted").
   1-2. When the handling permission information is "non-permitted" at the export source, the entire right data is not exported.
2. When the handling permission information on the method of use related to the contents does not exist at the export destination, the entire right data is not exported.
3. When the handling permission information on the method of use related to the contents does not exist at the export source, the entire right data is not exported.

Then, in case 1-3 above, the following conversion rule will be applied:
1. When the handling permission information on the method of use related to the contents exists at the export source
   1-1. When the handling permission information on the method of use related to the contents is "permitted" at the export source, right data is converted and exported so that all usage constraint information on the method of use related to the contents at the export destination is set to "no constraint". When "no constraint" cannot be set, a state with the least settable constraint is set (however, other usage constraint information is set to the content meaning "not available").
   1-2. When the handling permission information on the method of use related to the contents is "non-permitted" at the export source, the entire right data is not exported.
2. When the handling permission information on the method of use related to the contents does not exist at the export source, the entire right data is not exported.

Then, in case 1-4 above, the following conversion rule will be applied:
1. When the handling permission information on the method of use related to the contents exists at both the export source and the export destination
   1-1. When the handling permission information is "permitted" at the export source
      1-1-1. When all usage constraint information for the handling permission information at the export source is "no constraint", right data is converted and exported so that the handling permission information content is inherited to the export destination (however, all other handling permission information at the export destination is set to "non-permitted").
      1-1-2. When at least one piece of the usage constraint information for the handling permission information at the export source is other than "no constraint", the entire right data is not exported.
   1-2. When the handling permission information is "non-permitted" at the export source, the entire right data is not exported.
2. When the handling permission information on the method of use related to the contents does not exist at the export destination, the entire right data is not exported.
3. When the handling permission information on the method of use related to the contents does not exist at the export source, the entire right data is not exported.

Then, in case 1-5 above, the following conversion rule will be applied:
1. When the handling permission information on the method of use related to the contents exists at both the export source and the export destination
   1-1. When the handling permission information is "permitted" at the export source
      1-1-1. When an equivalent usage constraint can be realized at the export destination DRM, right data is changed so that the handling permission information content is inherited to the export destination and an equivalent usage constraint is set (however, all other handling permission information at the export destination is set to "non-permitted").
      1-1-2. When an equivalent usage constraint cannot be realized at the export destination DRM and a description in a direction in which the usage constraint is tightened is possible, right data is converted and exported so that the handling permission information content is inherited to the export destination and the closest possible usage constraint content with a tightened usage constraint is set (however, all other handling permission information at the export destination is set to "non-permitted").
      1-1-3. When an equivalent usage constraint cannot be realized at the export destination DRM and a description in a direction in which the usage constraint is tightened is not possible, the entire right data is not exported.
   1-2. When the handling permission information is "non-permitted" at the export source, the entire right data is not exported.
2. When the handling permission information on the method of use related to the contents does not exist at the export destination, the entire right data is not exported.
3. When the handling permission information on the method of use related to the contents does not exist at the export source, the entire right data is not exported.

Then, in case 1-6 above, the following conversion rule will be applied:
1. When the handling permission information on the method of use related to the contents exists at the export source
   1-1. When the handling permission information is "permitted" at the export source
      1-1-1. When an equivalent usage constraint can be realized at the export destination DRM, right data is converted and exported so that the equivalent usage constraint is set.
      1-1-2. When an equivalent usage constraint cannot be realized at the export destination DRM and a description in a direction in which the usage constraint is tightened is possible, right data is converted and exported so that the closest possible usage constraint content with a tightened usage constraint is set.
      1-1-3. When an equivalent usage constraint cannot be realized at the export destination DRM and a description in a direction in which the usage constraint is tightened is not possible, the entire right data is not exported.
   1-2. When the handling permission information is "non-permitted" at the export source, the entire right data is not exported.
2. When the handling permission information on the method of use related to the contents does not exist at the export source, the entire right data is not exported.

Then, in case 1-7 above, the following conversion rule will be applied:
1. When all usage constraint information related to the contents is "no constraint" at the export source
   1-1. When the handling permission information on the method of use related to the contents exists at the export destination, right data is converted and exported so that the handling permission information content is set to "permitted".
   1-2. When the handling permission information on the method of use related to the contents does not exist at the export destination, the entire right data is not exported.
2. When at least one piece of usage constraint information at the export source is other than "no constraint", the entire right data is not exported.

Then, in case 1-8 above, the following conversion rule will be applied:
1. When the handling permission information on the method of use related to the contents exists at the export destination DRM
   1-1. When an equivalent usage constraint can be realized at the export destination DRM, right data is converted and exported so that the handling permission information content is set to "permitted" for the export destination and an equivalent usage constraint is set (however, all other handling permission information at the export destination is set to "non-permitted").
   1-2. When an equivalent usage constraint cannot be realized at the export destination DRM and a description in a direction in which the usage constraint is tightened is possible, right data is converted and exported so that the handling permission information content is set to "permitted" for the export destination and the closest possible usage constraint content with a tightened usage constraint is set (all other handling permission information at the export destination is set to "non-permitted").
   1-3. When an equivalent usage constraint cannot be realized at the export destination DRM and a description in a direction in which the usage constraint is tightened is not possible, the entire right data is not exported.
2. When the handling permission information on the method of use related to the contents does not exist at the export destination DRM, the entire right data is not exported.

Then, in case 1-9 above, the following conversion rule will be applied:
1. When the usage constraint information on the method of use related to the contents exists at the export source
   1-1. When an equivalent usage constraint can be realized at the export destination DRM, right data is converted and exported so that an equivalent usage constraint is set.
   1-2. When an equivalent usage constraint cannot be realized at the export destination DRM and a description in a direction in which the usage constraint is tightened is possible, right data is converted and exported so that the closest possible usage constraint content with a tightened usage constraint is set.
   1-3. When an equivalent usage constraint cannot be realized at the export destination DRM and a description in a direction in which the usage constraint is tightened is not possible, the entire right data is not exported.
2. When the usage constraint information on the method of use related to the contents does not exist at the export source, the entire right data is not exported.

Then, in cases 2-1 to 2-144 shown in Table 2 above, the conversion rules applicable to a right conversion will be explained below. Note that the following rules are only general rules and when specified otherwise, a right conversion will follow that instruction. Furthermore, in specific examples of cases 2-xxx which will be described later, when the export source DRM or the export destination DRM supports neither handling permission information nor usage constraint information on the two methods of use related to the contents, it is obvious that the contents are "not exported", and therefore such cases will not be described particularly.

Then, in case 2-1 above, the following conversion rule will be applied:
1. When at least one piece of the handling permission information on the two methods of use (X, Y) is "permitted" at the export source, right data is converted and exported so that the two handling permission information contents are inherited to the export destination (however, all other handling permission information at the export destination is set to "non-permitted").
2. When the two pieces of the handling permission information on the two methods of use (X, Y) are "non-permitted" at the export source, the entire right data is not exported.

Then, in case 2-2 above, the following conversion rule will be applied:
1. When both pieces of the handling permission information on the two methods of use (X, Y) are "permitted" at the export source, right data is converted and exported so that the handling permission information content is set to "permitted" for the export destination (however, all other handling permission information at the export destination is set to "non-permitted").
2. When at least one piece of the handling permission information on the two methods of use (X, Y) is "non-permitted" at the export source, the entire right data is not exported.

Then, in case 2-3 above, the following conversion rule will be applied:
1. When the handling permission information on the method of use X is "permitted" at the export source, right data is converted and exported so that the handling permission information content of the method of use X is inherited to the export destination (however, all other handling permission information at the export destination is set to "non-permitted").
2. When the handling permission information on the method of use X is "non-permitted" at the export source, the entire right data is not exported.

Then, in case 2-4 above, the following conversion rule will be applied:
1. When the handling permission information on the method of use Y is "permitted" at the export source, right data is converted and exported so that the handling permission information content of the method of use Y is inherited to the export destination (however, all other handling permission information at the export destination is set to "non-permitted").
2. When the handling permission information on the method of use Y is "non-permitted" at the export source, the entire right data is not exported.

Then, in case 2-5 above, the following conversion rule will be applied:
1. When at least one piece of the handling permission information on the two methods of use (X, Y) is "permitted" at the export source, right data is converted and exported so that the two pieces of handling permission information content are inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the two pieces of the handling permission information on the two methods of use (X, Y) are "non-permitted" at the export source, the entire right data is not exported.

Then, in case 2-6 above, the following conversion rule will be applied:
1. When both pieces of the handling permission information on the two methods of use (X, Y) are "permitted" at the export source, right data is converted and exported so that the two pieces of the handling permission information content are inherited to the export destination. In this case, all usage constraint information for the handling permission information is set to "no constraint" at the export destination. When "no constraint" cannot be set, a state with the least settable constraint is set (however, all other handling permission information at the export destination is set to "non-permitted").
2. When at least one piece of the handling permission information on the two methods of use (X, Y) is "non-permitted" at the export source, the entire right data is not exported.

Then, in case 2-7 above, the following conversion rule will be applied:
1. When the handling permission information on the method of use X is "permitted" at the export source, right data is converted and exported so that the handling permission information content of the method of use X is inherited to the export destination. In this case, all usage constraint information for the handling permission information is set to "no constraint" at the export destination. When "no constraint" cannot be set, a state with the least settable constraint is set (however, all other handling permission information at the export destination is set to "non-permitted").
2. When the handling permission information on the method of use X is "non-permitted" at the export source, the entire right data is not exported.

Then, in case 2-8 above, the following conversion rule will be applied:
1. When the handling permission information on the method of use Y is "permitted" at the export source, right data is converted and exported so that the handling permission information content of the method of use Y is inherited to the export destination. In this case, all usage constraint information for the handling permission information is set to "no constraint" at the export destination. When "no constraint" cannot be set, a state with the least settable constraint is set (however, all other handling permission information at the export destination is set to "non-permitted").
2. When the handling permission information on the method of use Y is "non-permitted" at the export source, the entire right data is not exported.

Then, in case 2-9 above, the following conversion rule will be applied:
1. When at least one piece of the handling permission information on the two methods of use (X, Y) is "permitted" at the export source, right data is converted and exported so that all usage constraint information on the "permitted" method of use is set to "no constraint" for the export destination. When "no constraint" cannot be set, a state with the least settable constraint is set.
2. When the two pieces of the handling permission information on the two methods of use (X, Y) are "non-permitted" at the export source, the entire right data is not exported.

Then, in case 2-10 above, the following conversion rule will be applied:
1. When both pieces of the handling permission information on the two methods of use (X, Y) are "permitted" at the export source, right data is converted and exported so that all usage constraint information on the "permitted" method of use is set to "no constraint" for the export destination. When "no constraint" cannot be set, a state with the least settable constraint is set.
2. When at least one piece of the handling permission information on the two methods of use (X, Y) is "non-permitted" at the export source, the entire right data is not exported.

Then, in case 2-11 above, the following conversion rule will be applied:
1. When the handling permission information on the method of use X is "permitted" at the export source, right data is converted and exported so that all usage constraint information on the method of use X is set to "no constraint" for the export destination. When "no constraint" cannot be set, a state with the least settable constraint is set.
2. When the handling permission information on the method of use X is "non-permitted" at the export source, the entire right data is not exported.

Then, in case 2-12 above, the following conversion rule will be applied:
1. When the handling permission information on the method of use Y is "permitted" at the export source, right data is converted and exported so that all usage constraint information on the method of use Y is set to "no constraint" for the export destination. When "no constraint" cannot be set, a state with the least settable constraint is set.
2. When the handling permission information on the method of use Y is "non-permitted" at the export source, the entire right data is not exported.

Then, in case 2-13 above, the following conversion rule will be applied:
1. When the handling permission information indicating two methods of use (X, Y) are "permitted" at the export source, right data is converted and exported so that the contents of the two pieces of the handling permission information (X, Y) are inherited to the export destination (however, all other handling permission information at the export destination is set to "non-permitted").
2. When the handling permission information indicating two methods of use (X, Y) is "non-permitted" at the export source, the entire right data is not exported.

Then, in case 2-14 above, the following conversion rule will be applied:
1. When the handling permission information indicating two methods of use (X, Y) is "permitted" at the export source, right data is converted and exported so that the contents of the handling permission information indicating the two methods of use (X, Y) are set to "permitted" for the export source (however, all other handling permission information at the export destination is set to "non-permitted").
2. When the handling permission information indicating two methods of use (X, Y) is "non-permitted" at the export source, the entire right data is not exported.

Then, in case 2-15 above, the following conversion rule will be applied:
1. When the handling permission information indicating two methods of use (X, Y) is "permitted" at the export source, right data is converted and exported so that the handling permission information content of the method of use X is set to "permitted" for the export destination (however, all other handling permission information at the export destination is set to "non-permitted").
2. When the handling permission information indicating two methods of use (X, Y) is "non-permitted" at the export source, the entire right data is not exported.

Then, in case 2-16 above, the following conversion rule will be applied:
1. When the handling permission information indicating two methods of use (X, Y) is "permitted" at the export source, right data is converted and exported so that the handling permission information content of the method of use Y is set to "permitted" for the export destination (however, all other handling permission information at the export destination is set to "non-permitted").
2. When the handling permission information indicating two methods of use (X, Y) is "non-permitted" at the export source, the entire right data is not exported.

Then, in case 2-17 above, the following conversion rule will be applied:
1. When the handling permission information indicating two methods of use (X, Y) is "permitted" at the export source, right data is converted and exported so that the contents of the handling permission information indicating the two methods of use (X, Y) are set to "permitted" for the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information indicating two methods of use (X, Y) is "non-permitted" at the export source, the entire right data is not exported.

Then, in case 2-18 above, the following conversion rule will be applied:
1. When the handling permission information indicating two methods of use (X, Y) is "permitted" at the export source, right data is converted and exported so that the contents of the handling permission information indicating the two methods of use (X, Y) are set to "permitted" for the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information indicating two methods of use (X, Y) is "non-permitted" at the export source, the entire right data is not exported.

Then, in case 2-19 above, the following conversion rule will be applied:
1. When the handling permission information indicating two methods of use (X, Y) is "permitted" at the export source, right data is converted and exported so that the handling permission information content of the method of use X is set to "permitted" for the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information indicating two methods of use (X, Y) is "non-permitted" at the export source, the entire right data is not exported.

Then, in case 2-20 above, the following conversion rule will be applied:
1. When the handling permission information indicating two methods of use (X, Y) is "permitted" at the export source, right data is converted and exported so that the handling permission information content of the method of use Y is set to "permitted" for the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information indicating two methods of use (X, Y) is "non-permitted" at the export source, the entire right data is not exported.

Then, in case 2-21 above, the following conversion rule will be applied:
1. When the handling permission information indicating two methods of use (X, Y) is "permitted" at the export source, right data is converted and exported so that all usage constraint information on the "permitted" method of use is set to "no constraint" for the export destination. When "no constraint" cannot be set, a state with the least settable constraint is set.
2. When the handling permission information indicating two methods of use (X, Y) is "non-permitted" at the export source, the entire right data is not exported.

Then, in case 2-22 above, the following conversion rule will be applied:
1. When the handling permission information indicating two methods of use (X, Y) is "permitted" at the export source, right data is converted and exported so that all usage constraint information on the "permitted" method of use is set to "no constraint" for the export destination. When "no constraint" cannot be set, a state with the least settable constraint is set.
2. When the handling permission information indicating two methods of use (X, Y) is "non-permitted" at the export source, the entire right data is not exported.

Then, in case 2-23 above, the following conversion rule will be applied:
1. When the handling permission information indicating two methods of use (X, Y) is "permitted" at the export source, right data is converted and exported so that all usage constraint information on the method of use X is set to "no constraint" for the export destination. When "no constraint" cannot be set, a state with the least settable constraint is set.
2. When the handling permission information indicating two methods of use (X, Y) is "non-permitted" at the export source, the entire right data is not exported.

Then, in case 2-24 above, the following conversion rule will be applied:
1. When the handling permission information indicating two methods of use (X, Y) is "permitted" at the export source, right data is converted and exported so that all usage constraint information on the method of use Y is set to "no constraint" for the export destination. When "no constraint" cannot be set, a state with the least settable constraint is set.
2. When the handling permission information indicating two methods of use (X, Y) is "non-permitted" at the export source, the entire right data is not exported.

Then, in case 2-25 above, the following conversion rule will be applied:
1. When the handling permission information on the method of use X is "permitted" at the export source, right data is converted and exported so that the handling permission information content of the method of use X is inherited to the export destination (however, all other handling permission information at the export destination is set to "non-permitted").
2. When the handling permission information on the method of use X is "non-permitted" at the export source, the entire right data is not exported.

Then, in case 2-26 above, the entire right data is not exported.

Then, in case 2-27 above, the following conversion rule will be applied:
1. When the handling permission information on the method of use X is "permitted" at the export source, right data is converted and exported so that the handling permission information content of the method of use X is inherited to the export destination (however, all other handling permission information at the export destination is set to "non-permitted").
2. When the handling permission information on the method of use X is "non-permitted" at the export source, the entire right data is not exported.

Then, in case 2-28 above, the entire right data is not exported.

Then, in case 2-29 above, the following conversion rule will be applied:
1. When the handling permission information on the method of use X is "permitted" at the export source, right data is converted and exported so that the handling permission information content of the method of use X is inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information on the method of use X is "non-permitted" at the export source, the entire right data is not exported.

Then, in case 2-30 above, the entire right data is not exported.

Then, in case 2-31 above, the following conversion rule will be applied:
1. When the handling permission information on the method of use X is "permitted" at the export source, right data is converted and exported so that the handling permission information content of the method of use X is inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information on the method of use X is "non-permitted" at the export source, the entire right data is not exported.

Then, in case 2-32 above, the entire right data is not exported.

Then, in case 2-33 above, the following conversion rule will be applied:
1. When the handling permission information on the method of use X is "permitted" at the export source, right data is converted and exported so that all usage constraint information on the method of use X is set to "no constraint" for the export destination. When "no constraint" cannot be set, a state with the least settable constraint is set.
2. When the handling permission information on the method of use X is "non-permitted" at the export source, the entire right data is not exported.

Then, in case 2-34 above, the entire right data is not exported.

Then, in case 2-35 above, the following conversion rule will be applied:
1. When the handling permission information on the method of use X is "permitted" at the export source, right data is converted and exported so that all usage constraint information on the method of use X is set to "no constraint" for the export destination. When "no constraint" cannot be set, a state with the least settable constraint is set.
2. When the handling permission information on the method of use X is "non-permitted" at the export source, the entire right data is not exported.

Then, in case 2-36 above, the entire right data is not exported.

Then, in case 2-37 above, the following conversion rule will be applied:
1. When the handling permission information on the method of use Y is "permitted" at the export source, right data is converted and exported so that the handling permission information content of the method of use Y is inherited to the export destination (however, all other handling permission information at the export destination is set to "non-permitted").
2. When the handling permission information on the method of use Y is "non-permitted" at the export source, the entire right data is not exported.

Then, in cases 2-38, 2-39 above, the entire right data is not exported.

Then, in case 2-40 above, the following conversion rule will be applied:
1. When the handling permission information on the method of use Y is "permitted" at the export source, right data is converted and exported so that the handling permission information content of the method of use Y is inherited to the export destination (however, all other handling permission information at the export destination is set to "non-permitted").
2. When the handling permission information on the method of use Y is "non-permitted" at the export source, the entire right data is not exported.

Then, in case 2-41 above, the following conversion rule will be applied:
1. When the handling permission information on the method of use Y is "permitted" at the export source, right data is converted and exported so that the handling permission information content of the method of use Y is inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When a the handling permission information on the method of use Y is "non-permitted" t the export source, the entire right data is not exported.

Then, in cases 2-42, 2-43 above, the entire right data is not exported.

Then, in case 2-44 above, the following conversion rule will be applied:
1. When the handling permission information on the method of use Y is "permitted" at the export source, right data is converted and exported so that the handling permission information content of the method of use Y is inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted").
2. When the handling permission information on the method of use Y is "non-permitted" at the export source, the entire right data is not exported.

Then, in case 2-45 above, the following conversion rule will be applied:
1. When the handling permission information on the method of use Y is "permitted" at the export source, right data is converted and exported so that all usage constraint information on the method of use Y is set to "no constraint" for the export destination. When "no constraint" cannot be set, a state with the least settable constraint is set.
2. When the handling permission information on the method of use Y is "non-permitted" at the export source, the entire right data is not exported.

Then, in cases 2-46, 2-47 above, the entire right data is not exported.

Then, in case 2-48 above, the following conversion rule will be applied:
1. When the handling permission information on the method of use Y is "permitted" at the export source, right data is converted and exported so that all usage constraint information on the method of use Y is set to "no constraint" for the export destination. When "no constraint" cannot be set, a state with the least settable constraint is set.
2. When the handling permission information on the method of use Y is "non-permitted" at the export source, the entire right data is not exported.

Then, in case 2-49 above, the following conversion rule will be applied:
1. When both pieces of the handling permission information on the two methods of use (X, Y) are "permitted" at the export source
   1-1. When all usage constraint information for the two pieces of the handling permission information at the export source is "no constraint", right data is converted and exported so that both handling permission information contents on the methods of use X, Y are set to "permitted" for the export destination (however, all other handling permission information at the export destination is set to "non-permitted").
   1-2. When all usage constraint information for the handling permission information on the method of use X at the export source is "no constraint" and at least one piece of usage constraint information for the handling permission information on the method of use Y at the export source is other than "no constraint", right data is converted and exported so that the handling permission information content of the method of use X is set to "permitted" for the export destination (however, all other handling permission information at the export destination is set to "non-permitted").
   1-3. When all usage constraint information for the handling permission information on the method of use Y at the export source is "no constraint" and at least one piece of usage constraint information for the handling permission information on the method of use X at the export source is other than "no constraint", right data is converted and exported so that the handling permission information content of the method of use Y is set to "permitted" for the export destination (however, all other handling permission information at the export destination is set to "non-permitted").
   1-4. When at least one of the two pieces of usage constraint information for the two pieces of handling permission information at the export source is other than "no constraint", the entire right data is not exported.
2. When at least one piece of the handling permission information on the two methods of use (X, Y) is "permitted" at the export source
   2-1. When all usage constraint information for the handling permission information set to "permitted" at the export source is "no constraint", right data is converted and exported so that the handling permission information content is set to "permitted" for the export destination (however, all other handling permission information at the export destination is set to "non-permitted").
   2-2. When at least one piece of usage constraint information for the handling permission information set to "permitted" at the export source is other than "no constraint", the entire right data is not exported.
3. When the two pieces of the handling permission information on the two methods of use (X, Y) are both "non-permitted" at the export source, the entire right data is not exported.

Then, in case 2-50 above, the following conversion rule will be applied:
1. When both pieces of the source handling permission information on the two methods of use (X, Y) are "permitted" at the export
   1-1. When all usage constraint information for the two pieces of the handling permission information at the export source is "no constraint", right data is converted and exported so that the handling permission information content is set to "permitted" for the export destination (however, all other handling permission information at the export destination is set to "non-permitted").
   1-2. When at least one piece of usage constraint information for the two pieces of the handling permission information at the export source is other than "no constraint", the entire right data is not exported.
2. When at least one piece of the handling permission information on the two methods of use (X, Y) is "non-permitted" at the export source, the entire right data is not exported.

Then, in case 2-51 above, the following conversion rule will be applied:
1. When the handling permission information on the method of use X is "permitted" at the export source
   1-1. When all usage constraint information for the handling permission information on the method of use X is at the export source "no constraint", right data is converted and exported so that the handling permission information content of the method of use X is set to "permitted" for the export destination (however, all other handling permission information at the export destination is set to "non-permitted").
   1-2. When at least one piece of usage constraint information for the handling permission information on the method of use X at the export source is other than "no constraint", the entire right data is not exported.
2. When the handling permission information on the method of use X is "non-permitted" at the export source, the entire right data is not exported.

Then, in case 2-52 above, the following conversion rule will be applied:
1. When the handling permission information on the method of use Y is "permitted" at the export source
   1-1. When all usage constraint information for the handling permission information on Y at the export source is "no constraint", right data is converted and exported so that the handling permission information content of the method of use Y is set to "permitted" for the export destination (however, all other handling permission information at the export destination is set to "non-permitted").
   1-2. When at least one piece of usage constraint information for the handling permission information on the method of use Y at the export source is other than "no constraint", the entire right data is not exported.
2. When the handling permission information on the method of use Y is "non-permitted" at the export source, the entire right data is not exported.

Then, in case 2-53 above, the following conversion rule will be applied:
1. When both pieces of the handling permission information on the two methods of use (X, Y) are "permitted" at the export source
   1-1. When the usage constraint of the handling permission information on both methods of use X and Y at the export destination DRM can realize a usage constraint equivalent to that at the export source, right data is converted and exported so that handling permission information contents of both methods of use X and Y are set to "permitted" and an equivalent usage constraint is set (however, all other handling permission information at the export destination is set to "non-permitted").
   1-2. When the usage constraint on the handling permission information on the method of use X at the export destination DRM can realize a usage constraint equivalent to that at the export source and the usage constraint on the handling permission information on the method of use Y at the export destination DRM cannot realize a usage constraint equivalent to that at the export source
      1-2-1. When the usage constraint on the handling permission information on the method of use Y at the export destination DRM allows a description in a direction in which the usage constraint is tightened compared to the export source, right data is converted and exported so that the handling permission information contents of both methods of use X and Y are set to "permitted", the usage constraint information content of the handling permission information on the method of use X is set to a usage constraint equivalent to that at the export source and the usage constraint information content of the handling permission information on the method of use Y is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to a usage constraint equivalent to that at the export source (however, all other handling permission information at the export destination is set to "non-permitted").
   1-3. When the usage constraint of the handling permission information on the method of use Y at the export destination DRM can realize a usage constraint equivalent to that at the export source and the usage constraint of the handling permission information on the method of use X at the export destination DRM cannot realize a usage constraint equivalent to that at the export source
      1-3-1. When the usage constraint of the handling permission information on the method of use X at the export destination DRM allows a description in a direction in which the usage constraint is tightened compared to the export source, right data is converted and exported so that the handling permission information contents of both methods of use X and Y are set to "permitted", the usage constraint information content of the handling permission information on the method of use Y is set to a usage constraint equivalent to that at the export source and the usage constraint information content of the handling permission information on the method of use X is set to the closest possible usage constraint content with a tightened usage constraint with respect to the export source (however, all other handling permission information at the export destination is set to "non-permitted").
      1-3-2. When the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraint information content of the handling permission information on the method of use Y is set to a usage constraint equivalent to that at the export source (however, all other handling permission information at the export destination is set to "non-permitted").
   1-4. When the usage constraint of the handling permission information on both methods of use X and Y at the export destination DRM cannot realize a usage constraint equivalent to that at the export source
      1-4-1. When the usage constraint of the handling permission information on both methods of use X and Y at the export destination DRM allows a description in a direction in which the usage constraint is tightened compared to the export source, right data is converted and exported so that the handling permission information contents of both methods of use X and Y are set to "permitted" and the usage constraint information contents of the handling permission information on the methods of use X and Y are set to the closest possible usage constraint contents with a tightened usage constraint with respect to the export source (however, all other handling permission information at the export destination is set to "non-permitted").
      1-4-2. When the usage constraint of the handling permission information on the method of use X at the export destination DRM allows a description in a direction in which the usage constraint is tightened compared to the export source and the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to the closest possible usage constraint content with a tightened usage constraint with respect to the export source (however, all other handling permission information at the export destination is set to "non-permitted").
      1-4-3. When the usage constraint of the handling permission information on the method of use Y at the export destination DRM allows a description in a direction in which the usage constraint is tightened compared to the export source and the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraint information content of the handling permission information on the method of use Y is set to the closest possible usage constraint content with a tightened usage constraint with respect to the export source (however, all other handling permission information at the export destination is set to "non-permitted").
      1-4-4. When the usage constraint of the handling permission information on both methods of use X and Y at the export destination DRM does not allow a description in a direction in which the usage constraint is tightened compared to the export source, the entire right data is not exported.
2. When only the handling permission information on the method of use X is "permitted" at the export source
   2-1. When the usage constraint of the handling permission information on the method of use X at the export destination DRM can realize a usage constraint equivalent to that at the export source, right data is converted and exported so that the handling permission information content of the method of use X is set to "permitted" and the usage constraint information content of the handling permission information on the methodof use X at the export destination is set to a usage constraint equivalent to that at the export source (however, all other handling permission information at the export destination is set to "non-permitted").
   2-2. When the usage constraint of the handling permission information on the method of use X at the export destination DRM cannot realize a usage constraint equivalent to that at the export source
      2-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information on the method of use X at the export destination is set to the closest possible usage constraint content with a tightened usage constraint with respect to the export source (however, all other handling permission information at the export destination is set to "non-permitted").
      2-2-2. When the usage constraint of the handling permission information on the method of use X at the export destination DRM does not allow a description in a direction in which the usage constraint is tightened compared to the export source, the entire right data is not exported.
3. When only the handling permission information on the method of use Y is "permitted" at the export source
   3-1. When the usage constraint of the handling permission information on the method of use Y at the export destination DRM can realize a usage constraint equivalent to that at the export source, right data is converted and exported so that the handling permission information content of the method of use Y is set to "permitted" and the usage constraint information content of the handling permission information on the method of use Y at the export destination is set to a usage constraint equivalent to that at the export source (however, all other handling permission information at the export destination is set to "non-permitted").
   3-2. When the usage constraint of the handling permission information on the method of use Y at the export destination DRM cannot realize a usage constraint equivalent to that at the export source
      3-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted", the usage constraint information content of the handling permission information on the method of use Y at the export destination is set to the closest possible usage constraint content with a tightened usage constraint with respect to the export source (however, all other handling permission information at the export destination is set to "non-permitted").
      3-2-2. When the usage constraint of the handling permission information on the method of use Y at the export destination DRM does not allow a description in a direction in which the usage constraint is tightened compared to the export source, the entire right data is not exported.
4. When both pieces of handling permission information on the two methods of use (X, Y) at the export source are "non-permitted", the entire right data is not exported.

Then, in case 2-54 above, the following conversion rule will be applied:
1. When both pieces of the handling permission information on the two methods of use (X, Y) are "permitted" at the export source
   1-1 . When the export destination DRM can realize a usage constraint equivalent to the usage constraint information on two pieces of handling permission information at the export source, right data is converted and exported so that the handling permission information content is set to "permitted" for the export destination and the usage constraint information content of the handling permission information at the export destination is set to a usage constraint equivalent to that at the export source (however, all other handling permission information at the export destination is set to "non-permitted").
   1-2. When the export destination DRM cannot realize a usage constraint equivalent to the usage constraint information for two pieces of handling permission information at the export source
      1-2-1. When the export destination DRM allows a description in a direction in which the usage constraint is tightened compared to the usage constraint information on two pieces of handling permission information at the export source, right data is converted and exported so that the handling permission information content is set to "permitted" for the export destination and the usage constraint information content of the handling permission information at the export destination is set to the closest possible usage constraint content with a tightened usage constraint with respect to the export source (however, all other handling permission information at the export destination is set to "non-permitted").
      1-2-2. When the export destination DRM does not allow a description in a direction in which the usage constraint is tightened compared to the usage constraint information on the two pieces of handling permission information at the export source, the entire right data is not exported.
2. When at least one piece of the handling permission information on the two methods of use (X, Y) at the export source is "non-permitted", the entire right data is not exported.

Then, in case 2-55 above, the following conversion rule will be applied:
1. When the handling permission information on the method of use X at the export source is "permitted"
   1-1. When the usage constraint of the handling permission information on the method of use X at the export destination DRM can realize a usage constraint equivalent to that at the export source, right data is converted and exported so that the handling permission information content of the method of use X is set to "permitted" and the usage constraintinformationcontentofthehandlingpermission information on the method of use X at the export destination is set to a usage constraint equivalent to that at the export source (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information on the method of use X at the export destination is set to the closest possible usage constraint content with a tightened usage constraint with respect to the export source (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When the handling permission information on the method of use X at the export source is "non-permitted", the entire right data is not exported.

Then, in case 2-56 above, the following conversion rule will be applied:
1. When the handling permission information on the method of use Y is "permitted" at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and the usage constraint information content of the handling permission information on the method of use Y at the export destination is set to a usage constraint equivalent to that at the export source (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information on the method of use Y at the export destination is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When the handling permission information on the method of use Y is "non-permitted" at the export source, the entire right data is not exported.

Then, in case 2-57 above, the following conversion rule will be applied:
1. When both pieces of the handling permission information on the two methods of use (X, Y) are "permitted" at the export source
   1-1. When the usage constraint on both methods of use X and Y at the export destination DRM can realize a usage constraint equivalent to that at the export source, right data is converted and exported so that an equivalent usage constraint is set.
   1-2. When the usage constraint on the method of use X at the export destination DRM can realize a usage constraint equivalent to that at the export source and the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use X is set to a usage constraint equivalent to that at the export source and the usage constraint information content of the method of use Y is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, the entire right data is not exported.
   1-3. When the usage constraint on the method of use Y at the export destination DRM can realize a usage constraint equivalent to that at the export source and the usage constraint on the method of use X at the export destination DRM cannot realize a usage constraint equivalent to that at the export source
      1-3-1. When the usage constraint on the method of use X at the export destination DRM allows a description in a direction in which the usage constraint is tightened compared to the export source, right data is converted and exported so that the usage constraint information content on the method of use Y is set to a usage constraint equivalent to that at the export source and the usage constraint information content of the method of use X is set to the closest possible usage constraint content with a tightened usage constraint with respect to the export source.
      1-3-2. When the usage constraint on the method of use X at the export destination DRM does not allow a description in a direction in which the usage constraint is tightened compared to the export source, the entire right data is not exported.
   1-4. When the usage constraint on both methods of use X and Y at the export destination DRM cannot realize a usage constraint equivalent to that at the export source
      1-4-1. When the usage constraint on both methods of use X and Y at the export destination DRM allows a description in a direction in which the usage constraint is tightened compared to the export source, right data is converted and exported so that the usage constraint information contents of the methods of use X and Y are set to the closest possible usage constraint contents with a tightened usage constraint with respect to the export source.
      1-4-2. When at least any one of the methods of use X and Y at the export destination DRM does not allow a description in a direction in which the usage constraint is tightened compared to the export source, the entire right data is not exported.
2. When only the handling permission information on the method of use X is "permitted" at the export source
   2-1. When the usage constraint on the method of use X at the export destination DRM can realize a usage constraint equivalent to that at the export source, right data is converted and exported so that the usage constraint information content of the method of use X at the export destination is set to a usage constraint equivalent to that at the export source.
   2-2. When the usage constraint on the method of use X at the export destination DRM cannot realize a usage constraint equivalent to that at the export source
      2-2-1. When the usage constraint on the method of use X at the export destination DRM allows a description in a direction in which the usage constraint is tightened compared to the export source, right data is converted and exported so that the usage constraint information content of the method of use X at the export destination is set to the closest possible usage constraint content with a tightened usage constraint with respect to the export source.
      2-2-2. When the usage constraint on the method of use X at the export destination DRM does not allow a description in a direction in which the usage constraint is tightened compared to the export source, the entire right data is not exported.
3. When only the handling permission information on the method of use Y is "permitted" at the export source
   3-1. When the usage constraint on the method of use Y at the export destination DRM can realize a usage constraint equivalent to that at the export source, right data is converted and exported so that the usage constraint information content of the method of use Y at the export destination is set to a usage constraint equivalent to that at the export source.
   3-2. When the usage constraint on the method of use Y at the export destination DRM cannot realize a usage constraint equivalent to that at the export source
      3-2-1. When the usage constraint on the method of use Y at the export destination DRM allows a description in a direction in which the usage constraint is tightened compared to the export source, right data is converted and exported so that the usage constraint information content of the method of use Y at the export destination is set to the closest possible usage constraint content with a tightened usage constraint with respect to the export source.
      3-2-2. When the usage constraint on the method of use Y at the export destination DRM does not allow a description in a direction in which the usage constraint is tightened compared to the export source, the entire right data is not exported.
4. When both pieces of the handling permission information on the two methods of use (X, Y) are "non-permitted" at the export source, the entire right data is not exported.

Then, in case 2-58 above, the following conversion rule will be applied:
1. When both pieces of the handling permission information on the two methods of use (X, Y) are "permitted" at the export source
   1-1. When the export destination can realize a usage constraint equivalent to the usage constraint on the two methods of use (X, Y) at the export source, right data is converted and exported so that an equivalent usage constraint is set.
   1-2. When the export destination cannot realize a usage constraint equivalent to the usage constraint of two methods of use (X, Y) at the export source
      1-2-1. When the export destination allows a description in a direction in which the usage constraint is tightened for the usage constraint of two methods of use (X, Y) at the export source, right data is converted and exported so that the closest possible usage constraint content with a tightened usage constraint is set.
      1-2-2. When the export destination does not allow a description in a direction in which the usage constraint is tightened for usage constraint on the two methods of use (X, Y) at the export source, the entire right data is not exported.
2. When at least one piece of the handling permission information on the two methods of use (X, Y) is "non-permitted" at the export source, the entire right data is not exported.

Then, in case 2-59 above, the following conversion rule will be applied:
1. When the handling permission information on the method of use X is "permitted" at the export source
   1-1. When the usage constraint on the method of use X at the export destination DRM can realize a usage constraint equivalent to that at the export source, right data is converted and exported so that the usage constraint information content of the method of use X at the export destination is set to a usage constraint equivalent to that at the export source.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the usage constraint information content of the method of use X at the export destination is set to the closest possible usage constraint content with a tightened usage constraint with respect to the export source.
      1-2-2. When the usage constraint on the method of use X at the export destination DRM does not allow a description in a direction in which the usage constraint is tightened compared to the export source, the entire right data is not exported.
2. When the handling permission information on the method of use X is "non-permitted" at the export source, the entire right data is not exported.

Then, in case 2-60 above, the following conversion rule will be applied:
1. When the handling permission information on the method of use Y is "permitted" at the export source
   1-1. When the usage constraint on the method of use Y at the export destination DRM can realize a usage constraint equivalent to that at the export source, right data is converted and exported so that the usage constraint information content of the method of use Y at the export destination is set to a usage constraint equivalent to that at the export source.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use Y at the export destination is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, the entire right data is not exported.
2. When the handling permission information on the method of use Y is "non-permitted" at the export source, the entire right data is not exported.

Then, in case 2-61 above, the following conversion rule will be applied:
1. When the handling permission information indicating two methods of use (X, Y) is "permitted" at the export source
   1-1. When all usage constraint information for the handling permission information at the export source is "no constraint", right data is converted and exported so that both handling permission information contents of the methods of use X, Y are set to "permitted" for the export destination (however, all other handling permission information at the export destination is set to "non-permitted").
   1-2. When at least one piece of the usage constraint information for the handling permission information at the export source is other than "no constraint", the entire right data is not exported.
2. When the handling permission information indicating two methods of use (X, Y) is "non-permitted" at the export source, the entire right data is not exported.

Then, in case 2-62 above, the following conversion rule will be applied:
1. When the handling permission information indicating two methods of use (X, Y) is "permitted" at the export source
   1-1. When all usage constraint information for the handling permission information at the export source is "no constraint", right data is converted and exported so that the handling permission information content is set to "permitted" for the export destination (however, all other handling permission information at the export destination is set to "non-permitted").
   1-2. When at least one piece of the usage constraint information for the handling permission information at the export source is other than "no constraint", the entire right data is not exported.
2. When the handling permission information indicating two methods of use (X, Y) is "non-permitted" at the export source, the entire right data is not exported.

Then, in case 2-63 above, the following conversion rule will be applied:
1. When the handling permission information indicating two methods of use (X, Y) is "permitted" at the export source
   1-1. When all usage constraint information for the handling permission information at the export source is "no constraint", right data is converted and exported so that the handling permission information content of the method of use X is set to "permitted" for the export destination (however, all other handling permission information at the export destination is set to "non-permitted").
   1-2. When at least one piece of the usage constraint information for the handling permission information at the export source is other than "no constraint", the entire right data is not exported.
2. When the handling permission information indicating two methods of use (X, Y) is "non-permitted" at the export source, the entire right data is not exported.

Then, in case 2-64 above, the following conversion rule will be applied:
1. When the handling permission information indicating two methods of use (X, Y) is "permitted" at the export source
   1-1. When all usage constraint information for the handling permission information at the export source is "no constraint", right data is converted and exported so that the handling permission information content of the method of use Y is set to "permitted" for the export destination (however, all other handling permission information at the export destination is set to "non-permitted").
   1-2. When at least one piece of the usage constraint information for the handling permission information at the export source is other than "no constraint", the entire right data is not exported.
2. When the handling permission information indicating two methods of use (X, Y) is "non-permitted" at the export source, the entire right data is not exported.

Then, in case 2-65 above, the following conversion rule will be applied:
1. When the handling permission information on the two methods of use (X, Y) is "permitted" at the export source
   1-1. When the usage constraint of handling permission information on both methods of use X and Y at the export destination DRM can realize a usage constraint equivalent to that at the export source, right data is converted and exported so that the handling permission information contents of both methods of use X and Y are set to "permitted" and an equivalent usage constraint is set (however, all other handling permission information at the export destination is set to "non-permitted").
   1-2. When the usage constraint of the handling permission information on the method of use X at the export destination DRM can realize a usage constraint equivalent to that at the export source and the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information contents of both methods of use X and Y are set to "permitted", the usage constraintinformationcontentofthehandlingpermission information on the method of use X is set to a usage constraint equivalent to that at the export source and the usage constraint information content of the handling permission information on the method of use Y is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to a usage constraint equivalent to that at the export source (however, all other handling permission information at the export destination is set to "non-permitted").
   1-3. When the usage constraint of the handling permission information on the method of use Y at the export destination DRM can realize a usage constraint equivalent to that at the export source and the usage constraint of the handling permission information on the method of use X at the export destination DRM cannot realize a usage constraint equivalent to that at the export source
      1-3-1. When the usage constraint of the handling permission information on the method of use X at the export destination DRM allows a description in a direction in which the usage constraint is tightened compared to the export source, right data is converted and exported so that the handling permission information contents of both methods of use X and Y are set to "permitted", the usage constraint information content of the handling permission information on the method of use Y is set to a usage constraint equivalent to that at the export source and the usage constraint information content of the handling permission information on the method of use X is set to the closest possible usage constraint content with a tightened usage constraint with respect to the export source (however, all other handling permission information at the export destination is set to "non-permitted").
      1-3-2. When the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraint information content of the handling permission information on the method of use Y is set to a usage constraint equivalent to that at the export source (however, all other handling permission information at the export destination is set to "non-permitted").
   1-4. When the usage constraint of the handling permission information on both methods of use X and Y at the export destination DRM cannot realize a usage constraint equivalent to that at the export source
      1-4-1. When the usage constraint of the handling permission information on both methods of use X and Y at the export destination DRM allows a description in a direction in which the usage constraint is tightened compared to the export source, right data is converted and exported so that the handling permission information contents of both methods of use X and Y are set to "permitted" and the usage constraint information content of the handling permission information on the methods of use X and Y is set to the closest possible usage constraint content with a tightened usage constraint with respect to the export source (however, all other handling permission information at the export destination is set to "non-permitted").
      1-4-2. When the usage constraint of the handling permission information on the method of use X at the export destination DRM allows a description in a direction in which the usage constraint is tightened compared to the export source and the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to the closest possible usage constraint content with a tightened usage constraint with respect to the export source (however, all other handling permission information at the export destination is set to "non-permitted").
      1-4-3. When the usage constraint of the handling permission information on the method of use Y at the export destination DRM allows a description in a direction in which the usage constraint is tightened compared to the export source and the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraint information content of the handling permission information on the method of use Y is set to the closest possible usage constraint content with a tightened usage constraint with respect to the export source (however, all other handling permission information at the export destination is set to "non-permitted").
      1-4-4. When the usage constraint of the handling permission information on both methods of use X and Y at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-66 above, the following conversion rule will be applied:
1. When the handling permission information on the two methods of use (X, Y) is "permitted" at the export source
   1-1. When the usage constraint of the handling permission information on the methods of use X and Y at the export destination DRM can realize a usage constraint equivalent to that at the export source, right data is converted and exported so that the handling permission information content is set to "permitted" and an equivalent usage constraint is set (however, all other handling permission information at the export destination is set to "non-permitted").
   1-2. When the usage constraint of the handling permission information on the methods of use X and Y at the export destination DRM cannot realize a usage constraint equivalent to that at the export source
      1-2-1. When the usage constraint of the handling permission information on the methods of use X and Y at the export destination DRM allows a description in a direction in which the usage constraint is tightened compared to the export source, right data is converted and exported so that the handling permission information content is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the methods of use X and Y at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-67 above, the following conversion rule will be applied:
1. When the handling permission information on the two methods of use (X, Y) is "permitted" at the export source
   1-1. When the usage constraint of the handling permission information on the method of use X at the export destination DRM can realize a usage constraint equivalent to that at the export source, right data is converted and exported so that the handling permission information content of the method of use X is set to "permitted" and an equivalent usage constraint is set (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information is set to the closest possible usage constraint content with a tightened usage constraint (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-68 above, the following conversion rule will be applied:
1. When the handling permission information on the two methods of use (X, Y) is "permitted" at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and an equivalent usage constraint is set (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-69 above, the following conversion rule will be applied:
1. When the handling permission information on the two methods of use (X, Y) is "permitted" at the export source
   1-1. When the usage constraint of the handling permission information on both methods of use X and Y at the export destination DRM can realize a usage constraint equivalent to that at the export source, right data is converted and exported so that an equivalent usage constraint is set.
   1-2. When the usage constraint on the method of use X at the export destination DRM can realize a usage constraint equivalent to that at the export source and the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use X is set to a usage constraint equivalent to that at the export source and the usage constraint information content of the method of use Y is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, right data is converted and exported so that the usage constraint information content of the method of use X is set to a usage constraint equivalent to that at the export source.
   1-3. When the usage constraint on the method of use Y at the export destination DRM can realize a usage constraint equivalent to that at the export source and the usage constraint on the method of use X at the export destination DRM cannot realize a usage constraint equivalent to that at the export source
      1-3-1. When the usage constraint on the method of use X at the export destination DRM allows a description in a direction in which the usage constraint is tightened compared to the export source, right data is converted and exported so that the usage constraint information content of the method of use Y is set to a usage constraint equivalent to that at the export source and the usage constraint information content of the method of use X is set to the closest possible usage constraint content with a tightened usage constraint with respect to the export source.
      1-3-2. When the usage constraint on the method of use X at the export destination DRM does not allow a description in a direction in which the usage constraint is tightened compared to the export source, right data is converted and exported so that the usage constraint information content of the method of use Y is set to a usage constraint equivalent to that at the export source.
   1-4. When the usage constraint on both methods of use X and Y at the export destination DRM cannot realize a usage constraint equivalent to that at the export source
      1-4-1. When the usage constraint on both methods of use X and Y at the export destination DRM allows a description in a direction in which the usage constraint is tightened compared to the export source, right data is converted and exported so that the usage constraint information contents of the methods of use X and Y are set to the closest possible usage constraint content with a tightened usage constraint with respect to the export source.
      1-4-2. When the usage constraint on the method of use X at the export destination DRM allows a description in a direction in which the usage constraint is tightened compared to the export source and the usage constraint on the method of use Y at the export destination DRM does not allow a description in a direction in which the usage constraint is tightened compared to the export source, right data is converted and exported so that the usage constraint information content of the method of use X is set to the closest possible usage constraint content with a tightened usage constraint with respect to the export source.
      1-4-3. When the usage constraint on the method of use Y at the export destination DRM allows a description in a direction in which the usage constraint is tightened compared to the export source and the usage constraint on the method of use Y at the export destination DRM does not allow a description in a direction in which the usage constraint is tightened compared to the export source, right data is converted and exported so that the usage constraint information content of the method of use Y is set to the closest possible usage constraint content with a tightened usage constraint with respect to the export source.
      1-4-4. When the usage constraint on both methods of use X and Y at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-70 above, the following conversion rule will be applied:
1. When the handling permission information on the two methods of use (X, Y) is "permitted" at the export source
   1-1. When the usage constraint on the methods of use X and Y at the export destination DRM can realize a usage constraint equivalent to that at the export source, right data is converted and exported so that an equivalent usage constraint is set.
   1-2. When the usage constraint on the methods of use X and Y at the export destination DRM cannot realize a usage constraint equivalent to that at the export source
      1-2-1. When the usage constraint on the methods of use X and Y at the export destination DRM allows a description in a direction in which the usage constraint is tightened compared to the export source, right data is converted and exported so that the closest possible usage constraint content with a tightened usage constraint is set with respect to the export source.
      1-2-2. When the usage constraint on the methods of use X and Y at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-71 above, the following conversion rule will be applied:
1. When the handling permission information on the two methods of use (X, Y) is "permitted" at the export source
   1-1. When the usage constraint on the method of use X at the export destination DRM can realize a usage constraint equivalent to that at the export source, right data is converted and exported so that an equivalent usage constraint is set.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the closest possible usage constraint content with a tightened usage constraint is set with respect to the export source.
      1-2-2. When the usage constraint on the method of use X at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-72 above, the following conversion rule will be applied:
1. When the handling permission information on the two methods of use (X, Y) is "permitted" at the export source
   1-1. When the usage constraint on the method of use Y at the export destination DRM can realize a usage constraint equivalent to that at the export source, right data is converted and exported so that an equivalent usage constraint is set.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the closest possible usage constraint content with a tightened usage constraint is set with respect to the export source.
      1-2-2. When the usage constraint on the method of use Y at the export destination DRM does not allow a description in a direction in which the usage constraint is tightened compared to the export source, the entire right data is not exported.
2. When the handling permission information on the two methods of use (X, Y) is "non-permitted" at the export source, the entire right data is not exported.

Then, in case 2-73 above, the following conversion rule will be applied:
1. When the handling permission information indicating the method of use X is "permitted" at the export source
   1-1. When all usage constraint information for the handling permission information at the export source is "no constraint", right data is converted and exported so that the handling permission information content of the method of use X is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When the handling permission information indicating the method of use X is "non-permitted" at the export source, the entire right data is not exported.

Then, in case 2-74 above, the entire right data is not exported.

Then, in case 2-75 above, the following conversion rule will be applied:
1. When the handling permission information indicating the method of use X is "permitted" at the export source
   1-1. When all usage constraint information for the handling permission information at the export source is "no constraint", right data is converted and exported so that the handling permission information content of the method of use X is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When the handling permission information indicating the method of use X is "non-permitted" at the export source, the entire right data is not exported.

Then, in case 2-76 above, the entire right data is not exported.

Then, in case 2-77 above, the following conversion rule will be applied:
1. When the handling permission information on the method of use X is "permitted" at the export source
   1-1. When the usage constraint of the handling permission information on the method of use X at the export destination DRM can realize a usage constraint equivalent to that at the export source, right data is converted and exported so that the handling permission information content of the method of use X is set to "permitted" and an equivalent usage constraint is set (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information on the method of use X is set to the closest possible usage constraint content with a tightened usage constraint with respect to the export source (however, all other handling permission information at the export destination is set to "non-permitted").
2. When the handling permission information on the method of use X is "non-permitted" at the export source, the entire right data is not exported.

Then, in case 2-78 above, the entire right data is not exported.

Then, in case 2-79 above, the following conversion rule will be applied:
1. When the handling permission information on the method of use X is "permitted" at the export source
   1-1. When the usage constraint of the handling permission information on the method of use X at the export destination DRM can realize a usage constraint equivalent to that at the export source, right data is converted and exported so that the handling permission information content of the method of use X is set to "permitted" and an equivalent usage constraint is set (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened equivalent to that at the export source, right data is converted and exported so that the handling permission information content of the method of use X is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When the handling permission information on the method of use X is "non-permitted" at the export source, the entire right data is not exported.

Then, in case 2-80 above, the entire right data is not exported.

Then, in case 2-81 above, the following conversion rule will be applied:
1. When the handling permission information on the method of use X is "permitted" at the export source
   1-1. When the usage constraint on the method of use X at the export destination DRM can realize a usage constraint equivalent to that at the export source, right data is converted and exported so that an equivalent usage constraint is set.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the usage constraint information content of the method of use X is set to the closest possible usage constraint content with a tightened usage constraint with respect to the export source.
      1-2-2. When the usage constraint on the method of use X at the export destination DRM does not allow a description in a direction in which the usage constraint is tightened compared to the export source, the entire right data is not exported.
2. When the handling permission information on the method of use X is "non-permitted" at the export source, the entire right data is not exported.

Then, in case 2-82 above, the entire right data is not exported.

Then, in case 2-83 above, the following conversion rule will be applied:
1. When the handling permission information on the method of use X is "permitted" at the export source
   1-1. When the usage constraint on the method of use X at the export destination DRM can realize a usage constraint equivalent to that at the export source, right data is converted and exported so that an equivalent usage constraint is set.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the usage constraint information content is set to the closest possible usage constraint content with a tightened usage constraint with respect to the export source.
      1-2-2. When the usage constraint on the method of use X at the export destination DRM does not allow a description in a direction in which the usage constraint is tightened compared to the export source, the entire right data is not exported.
2. When the handling permission information on the method of use X is "non-permitted" at the export source, the entire right data is not exported.

Then, in case 2-84 above, the entire right data is not exported.

Then, in case 2-85 above, the following conversion rule will be applied:
1. When the handling permission information indicating the method of use Y at the export source is "permitted"
   1-1. When all usage constraint information for the handling permission information at the export source is "no constraint", right data is converted and exported so that the handling permission information content of the method of use Y is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When the handling permission information indicating the method of use Y at the export source is "non-permitted", the entire right data is not exported.

Then, in case 2-86 and case 2-87 above, the entire right data is not exported.

Then, in case 2-88 above, the following conversion rule will be applied:
1. When the handling permission information indicating the method of use Y at the export source is "permitted"
   1-1. When all usage constraint information for the handling permission information at the export source is "no constraint", right data is converted and exported so that the handling permission information content of the method of use Y is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When the handling permission information indicating the method of use Y at the export source is "non-permitted", the entire right data is not exported.

Then, in case 2-89 above, the following conversion rule will be applied:
1. When the handling permission information on the method of use Y is "permitted" at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and an equivalent usage constraint is set (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information on the method of use Y is set to the closest possible usage constraint content with a tightened usage constraint with respect to the export source (however, all other handling permission information at the export destination is set to "non-permitted").
      1-2-2. When the usage constraint of the handling permission information on the method of use Y at the destination DRM does not allow a description in a direction in which the usage constraint is tightened compared to the export source, the entire right data is not exported.
2. When the handling permission information on the method of use Y is "non-permitted" at the export source, the entire right data is not exported.

Then, in case 2-90 and case 2-91 above, the entire right data is not exported.

Then, in case 2-92 above, the following conversion rule will be applied:
1. When the handling permission information on the method of use Y is "permitted" at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and an equivalent usage constraint is set (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the destination DRM allows a description in a direction in which the usage constraint is tightened compared to the export source, right data is converted and exported so that the handling permission information content of the method of use Y is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When the handling permission information on the method of use Y is "non-permitted" at the export source, the entire right data is not exported.

Then, in case 2-93 above, the following conversion rule will be applied:
1. When the handling permission information on the method of use Y is "permitted" at the export source
   1-1. When the usage constraint on the method of use Y at the export destination DRM can realize a usage constraint equivalent to that at the export source, right data is converted and exported so that an equivalent usage constraint is set.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use Y is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, the entire right data is not exported.
2. When the handling permission information on the method of use Y is "non-permitted" at the export source, the entire right data is not exported.

Then, in case 2-94 and case 2-95 above, the entire right data is not exported.

Then, in case 2-96 above, the following conversion rule will be applied:
1. When the handling permission information on the method of use Y is "permitted" at the export source
   1-1. When the usage constraint on the method of use Y at the export destination DRM can realize a usage constraint equivalent to that at the export source, right data is converted and exported so that an equivalent usage constraint is set.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, the entire right data is not exported.
2. When the handling permission information on the method of use Y is "non-permitted" at the export source, the entire right data is not exported.

Then, in case 2-97 above, the following conversion rule will be applied:
1. When usage constraint information exists for two methods of use (X, Y) at the export source
   1-1. When all usage constraint information on the two methods of use at the export source is "no constraint", right data is converted and exported so that the handling permission information contents of both X, Y are set to "permitted" for the export destination (however, all other handling permission information at the export destination is set to "non-permitted").
   1-2. When all usage constraint information on the method of use X at the export source is "no constraint" and at least one piece of the usage constraint information on the method of use Y at the export source is other than "no constraint", right data is converted and exported so that the handling permission information content of the method of use X is set to "permitted" for the export destination (however, all other handling permission information at the export destination is set to "non-permitted").
   1-3. When all usage constraint information on the method of use Y at the export source is "no constraint" and at least one piece of usage constraint information on the method of use X at the export source is other than "no constraint", right data is converted and exported so that the handling permission information content of the method of use Y is set to "permitted" for the export destination (however, all other handling permission information at the export destination is set to "non-permitted").
   1-4. When at least one piece of the usage constraint information on the two methods of use (X, Y) at the export source is other than "no constraint", the entire right data is not exported.
2. When usage constraint information on the two methods of use (X, Y) exists for only one of the two methods at the export source
   2-1. When all usage constraint information on the method of use having usage constraint information at the export source is "no constraint", right data is converted and exported so that the handling permission information content is set to "permitted" for the export destination (however, all other handling permission information at the export destination is set to "non-permitted").
   2-2. When at least one piece of the usage constraint information on the method of use having usage constraint information at the export source is other than "no constraint", the entire right data is not exported.
3. When usage constraint information on the two methods of use (X, Y) at the export source exists for none of the two, the entire right data is not exported.

Then, in case 2-98 above, the following conversion rule will be applied:
1. When the usage constraint information on the two methods of use (X, Y) exists for both at the export source
   1-1. When all usage constraint information on the two methods of use (X, Y) is "no constraint" at the export source, right data is converted and exported so that the handling permission information content on the methods of use X, Y is set to "permitted" for the export destination (however, all other handling permission information at the export destination is set to "non-permitted").
   1-2. When the usage constraint information on the two methods of use (X, Y) at the export source is other than "no constraint" for at least one of the methods of use, the entire right data is not exported.
2. When the usage constraint information on the two methods of use (X, Y) does not exist for at least one of the two methods at the export source, the entire right data is not exported.

Then, in case 2-99 above, the following conversion rule will be applied:
1. When usage constraint information on the method of use X exists at the export source
   1-1. When all usage constraint information on the method of use X at the export source is "no constraint", right data is converted and exported so that the handling permission information content on the method of use X is set to "permitted" for the export destination (however, all other handling permission information at the export destination is set to "non-permitted").
   1-2. When at least one piece of the usage constraint information on the method of use X at the export source is other than "no constraint", the entire right data is not exported.
2. When no usage constraint information on the method of use X exists at the export source, the entire right data is not exported.

Then, in case 2-100 above, the following conversion rule will be applied:
1. When usage constraint information on the method of use Y exists at the export source
   1-1. When all usage constraint information on the method of use Y at the export source is "no constraint", right data is converted and exported so that the handling permission information content on the method of use Y is set to "permitted" for the export destination (however, all other handling permission information at the export destination is set to "non-permitted").
   1-2. When at least one piece of the usage constraint information on the method of use Y at the export source is other than "no constraint", no export is performed.
2. When no usage constraint information on the method of use Y exists at the export source, the entire right data is not exported.

Then, in case 2-101 above, the following conversion rule will be applied:
1. When the usage constraint information on the two methods of use (X, Y) exists for both methods at the export source
   1-1. When the usage constraint of the handling permission information on both methods of use X and Y at the export destination DRM can realize a usage constraint equivalent to that at the export source, right data is converted and exported so that the handling permission information contents of both methods of use X and Y are set to "permitted" and an equivalent usage constraint is set (however, all other handling permission information at the export destination is set to "non-permitted").
   1-2. When the usage constraint of the handling permission information on the method of use X at the export destination DRM can realize a usage constraint equivalent to that at the export source and the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information contents of both methods of use X and Y are set to "permitted", the usage constraint information content of the handling permission information on the method of use X is set to a usage constraint equivalent to that at the export source and the usage constraint information content of the handling permission information on the method of use Y is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to a usage constraint equivalent to that at the export source (however, all other handling permission information at the export destination is set to "non-permitted").
   1-3. When the usage constraint of the handling permission information on the method of use Y at the export destination DRM can realize a usage constraint equivalent to that at the export source and the usage constraint of the handling permission information on the method of use X at the export destination DRM cannot realize a usage constraint equivalent to that at the export source
      1-3-1. When the usage constraint of the handling permission information on the method of use X at the export destination DRM allows a description in a direction in which the usage constraint is tightened compared to the export source, right data is converted and exported so that the handling permission information contents of both methods of use X and Y are set to "permitted", the usage constraint information content of the handling permission information on the method of use Y is set to a usage constraint equivalent to that at the export source and the usage constraint information content of the handling permission information on the method of use X is set to the closest possible usage constraint content with a tightened usage constraint with respect to the export source (however, all other handling permission information at the export destination is set to "non-permitted").
      1-3-2. When the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraint information content of the handling permission information on the method of use Y is set to a usage constraint equivalent to that at the export source (however, all other handling permission information at the export destination is set to "non-permitted").
   1-4. When the usage constraint of the handling permission information on both methods of use X and Y at the export destination DRM cannot realize a usage constraint equivalent to that at the export source
      1-4-1. When the usage constraint of the handling permission information on both methods of use X and Y at the export destination DRM allows a description in a direction in which the usage constraint is tightened compared to the export source, right data is converted and exported so that the handling permission information contents of both methods of use X and Y are set to "permitted" and the usage constraint in formation contents of the handling permission information on the methods of use X and Y are set to the closest possible usage constraint content with a tightened usage constraint with respect to the export source (however, all other handling permission information at the export destination is set to "non-permitted").
      1-4-2. When the usage constraint of the handling permission information on the method of use X at the export destination DRM allows a description in a direction in which the usage constraint is tightened compared to the export source and the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to the closest possible usage constraint content with a tightened usage constraint with respect to the export source (however, all other handling permission information at the export destination is set to "non-permitted").
      1-4-3. When the usage constraint of the handling permission information on the method of use Y at the export destination DRM allows a description in a direction in which the usage constraint is tightened compared to the export source and the usage constraint of the handling permission information on the method of use X at the export destination DRM does not allow a description in a direction in which the usage constraint is tightened compared to the export source, right data is changed and exported so that only the handling permission information content of the method of use Y is set to "permitted" and the usage constraint information content of the handling permission information on the method of use Y is set to the closest possible usage constraint content with a tightened usage constraint with respect to the export source (however, all other handling permission information at the export destination is set to "non-permitted").
      1-4-4. When the usage constraint of the handling permission information on both methods of use X and Y at the export destination DRM does not allow a description in a direction in which the usage constraint is tightened compared to the export source, the entire right data is not exported.
2. When only usage constraint information on the method of use X exists at the export source
   2-1. When the usage constraint of the handling permission information on the method of use X at the export destination DRM can realize a usage constraint equivalent to that at the export source, right data is converted and exported so that the handling permission information content of the method of use X is set to "permitted" and the usage constraint information content of the handling permission information on the method of use X at the export destination is set to a usage constraint equivalent to that at the export source (however, all other handling permission information at the export destination is set to "non-permitted").
   2-2. When the usage constraint of the handling permission information on the method of use X at the export destination DRM cannot realize a usage constraint equivalent to that at the export source
      2-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information on the method of use X at the export destination is set to the closest possible usage constraint content with a tightened usage constraint with respect to the export source (however, all other handling permission information at the export destination is set to "non-permitted").
      2-2-2. When the usage constraint of the handling permission information on the method of use X at the export destination DRM does not allow a description in a direction in which the usage constraint is tightened compared to the export source, the entire right data is not exported.
3. When only the usage constraint information on the method of use Y exists at the export source
   3-1. When the usage constraint of the handling permission information on the method of use Y at the export destination DRM can realize a usage constraint equivalent to that at the export source, right data is converted and exported so that the handling permission information content of the method of use Y is set to "permitted" and the usage constraint information content of the handling permission information on the method of use Y at the export destination is set to a usage constraint equivalent to that at the export source (however, all other handling permission information at the export destination is set to "non-permitted").
   3-2. When the usage constraint of the handling permission information on the method of use Y at the export destination DRM cannot realize a usage constraint equivalent to that at the export source
      3-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information on the method of use Y at the export destination is set to the closest possible usage constraint content with a tightened usage constraint with respect to the export source (however, all other handling permission information at the export destination is set to "non-permitted").
      3-2-2. When the usage constraint of the handling permission information on the method of use Y at the export destination DRM does not allow a description in a direction in which the usage constraint is tightened compared to the export source, the entire right data is not exported.
4. When the usage constraint information on the two methods of use (X, Y) exists for none of the two methods at the export source, the entire right data is not exported.

Then, in case 2-102 above, the following conversion rule will be applied:
1. When the usage constraint information on the two methods of use (X, Y) exists for both methods at the export source
   1-1. When the export destination DRM can realize a usage constraint information equivalent to the usage constraint for the two pieces of handling permission information at the export source, the handling permission information content is set to "permitted" for the export destination and the usage constraint information content of the handling permission information at the export destination is set to a usage constraint equivalent to that at the export source and exported (however, all other handling permission information at the export destination is set to "non-permitted").
   1-2. When the export destination DRM cannot realize a usage constraint equivalent to the usage constraint information for the two pieces of the handling permission information at the export source
      1-2-1. When the export destination DRM allows a description in a direction in which the usage constraint is tightened compared to the usage constraint information for the two pieces of the handling permission information at the export source, right data is converted and exported so that the handling permission information content is set to "permitted" for the export destination and the usage constraint information content of the handling permission information at the export destination is set to the closest possible usage constraint content with a tightened usage constraint with respect to the export source (however, all other handling permission information at the export destination is set to "non-permitted").
      1-2-2. When the export destination DRM does not allow a description in a direction in which the usage constraint is tightened compared to the usage constraint information for the two pieces of handling permission information at the export source, the entire right data is not exported.
2. When the usage constraint information on the two methods of use (X, Y) does not exist at least one of the two methods at the export source, the entire right data is not exported.

Then, in case 2-103 above, the following conversion rule will be applied:
1. When the usage constraint information on the method of use X exists at the export source
   1-1. When the usage constraint of the handling permission information on the method of use X at the export destination DRM can realize a usage constraint equivalent to that at the export source, the handling permission information content on the method of use X is set to "permitted" and the usage constraint information content of the handling permission information on the method of use X at the export destination is set to a usage constraint equivalent to that at the export source and exported (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information on the method of use X at the export destination is set to the closest possible usage constraint content with a tightened usage constraint with respect to the export source (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When no usage constraint information on the method of use X exists at the export source, the entire right data is not exported.

Then, in case 2-104 above, the following conversion rule will be applied:
1. When the usage constraint information on the method of use Y exists at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and the usage constraintinformationcontentofthehandlingpermission information on the method of use Y at the export destination is set to a usage constraint equivalent to that at the export source (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information on the method of use Y at the export destination is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When no usage constraint information on the method of use Y exists at the export source, the entire right data is not exported.

Then, in case 2-105 above, the following conversion rule will be applied:
1. When both pieces of the usage constraint information on the two methods of use (X, Y) exist at the export source
   1-1. When the usage constraint of the handling permission information on both methods of use X and Y at the export destination DRM can realize a usage constraint equivalent to that at the export source, right data is converted and exported so that an equivalent usage constraint is set.
   1-2. When the usage constraint on the method of use X at the export destination DRM can realize a usage constraint equivalent to that at the export source and the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use X is set to a usage constraint equivalent to that at the export source and the usage constraint information content of the method of use Y is set to the closest possible usage constraint content with a tightened usage constraint with respect to the export source.
      1-2-2. When the usage constraint of the handling permission information on the method of use Y at the export destination DRM does not allow a description in a direction in which the usage constraint is tightened compared to the export source, the entire right data is not exported.
   1-3. When the usage constraint on the method of use Y at the export destination DRM can realize a usage constraint equivalent to that at the export source and the usage constraint on the method of use X at the export destination DRM cannot realize a usage constraint equivalent to that at the export source
      1-3-1. When the usage constraint on the method of use X at the export destination DRM allows a description in a direction in which the usage constraint is tightened compared to the export source, right data is converted and exported so that the usage constraint information content of the method of use Y is set to a usage constraint equivalent to that at the export source and the usage constraint information content of the method of use X is set to the closest possible usage constraint content with a tightened usage constraint with respect to the export source.
      1-3-2. When the usage constraint on the method of use X at the export destination DRM does not allow a description in a direction in which the usage constraint is tightened compared to the export source, the entire right data is not exported.
   1-4. When the usage constraint on both methods of use X and Y at the export destination DRM cannot realize a usage constraint equivalent to that at the export source
      1-4-1. When the usage constraint on both methods of use X and Y at the export destination DRM allows a description in a direction in which the usage constraint is tightened compared to the export source, right data is converted and exported so that the usage constraint information content of the methods of use X and Y is set to the closest possible usage constraint content with a tightened usage constraint with respect to the export source.
      1-4-2. When at least any one of the methods of use X and Y at the export destination DRM does not allow a description in a direction in which the usage constraint is tightened compared to the export source, the entire right data is not exported.
2. When only the usage constraint information on the method of use X exists at the export source
   2-1. When the usage constraint on the method of use X at the export destination DRM can realize a usage constraint equivalent to that at the export source, right data is converted and exported so that the usage constraint information content of the method of use X at the export destination is set to a usage constraint equivalent to that at the export source.
   2-2. When the usage constraint on the method of use X at the export destination DRM cannot realize a usage constraint equivalent to that at the export source
      2-2-1. When the usage constraint on the method of use X at the export destination DRM allows a description in a direction in which the usage constraint is tightened compared to the export source, right data is converted and exported so that the usage constraint information content of the method of use X at the export destination is set to the closest possible usage constraint content with a tightened usage constraint with respect to the export source.
      2-2-2. When the usage constraint on the method of use X at the export destination DRM does not allow a description in a direction in which the usage constraint is tightened compared to the export source, the entire right data is not exported.
3. When only the usage constraint information on the method of use Y exists at the export source
   3-1. When the usage constraint on the method of use Y at the export destination DRM can realize a usage constraint equivalent to that at the export source, right data is converted and exported so that the usage constraint information content of the method of use Y at the export destination is set to a usage constraint equivalent to that at the export source.
   3-2. When the usage constraint on the method of use Y at the export destination DRM cannot realize a usage constraint equivalent to that at the export source
      3-2-1. When the usage constraint on the method of use Y at the export destination DRM allows a description in a direction in which the usage constraint is tightened compared to the export source, right data is converted and exported so that the usage constraint information content of the method of use Y at the export destination is set to the closest possible usage constraint content with a tightened usage constraint with respect to the export source.
      3-2-2. When the usage constraint on the method of use Y at the export destination DRM does not allow a description in a direction in which the usage constraint is tightened compared to the export source, the entire right data is not exported.
4. When no usage constraint information on the two methods of use (X, Y) exists at the export source, the entire right data is not exported.

Then, in case 2-106 above, the following conversion rule will be applied:
1. When the usage constraint information on the two methods of use (X, Y) exists for both methods at the export source
   1-1. When the export destination can realize a usage constraint equivalent to the usage constraint on the two methods of use (X, Y) at the export source, right data is converted and exported so that an equivalent usage constraint is set.
   1-2. When the export destination cannot realize a usage constraint equivalent to the usage constraint on the two methods of use (X, Y) at the export source
      1-2-1. When the export destination allows a description in a direction in which the usage constraint is tightened for the usage constraint on the two methods of use (X, Y) at the export source, right data is converted and exported so that the closest possible usage constraint content with a tightened usage constraint is set.
      1-2-2. When the export destination does not allow a description in a direction in which the usage constraint is tightened for the usage constraint on the two methods of use (X, Y) at the export source, the entire right data is not exported.
2. When the usage constraint information on the two methods of use (X, Y) does not exist for at least one of the two methods at the export source, the entire right data is not exported.

Then, in case 2-107 above, the following conversion rule will be applied:
1. When the usage constraint information on the method of use X exists at the export source
   1-1. When the usage constraint on the method of use X at the export destination DRM can realize a usage constraint equivalent to that at the export source, right data is converted and exported so that the usage constraint information content of the method of use X at the export destination is set to a usage constraint equivalent to that at the export source.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the usage constraint information content of the method of use X at the export destination is set to the closest possible usage constraint content with a tightened usage constraint with respect to the export source.
      1-2-2. When the usage constraint on the method of use X at the export destination DRM does not allow a description in a direction in which the usage constraint is tightened compared to the export source, the entire right data is not exported.
2. When no usage constraint information on the method of use X exists at the export source, the entire right data is not exported.

Then, in case 2-108 above, the following conversion rule will be applied:
1. When the usage constraint information on the method of use Y exists at the export source
   1-1. When the usage constraint on the method of use Y at the export destination DRM can realize a usage constraint equivalent to that at the export source, right data is converted and exported so that the usage constraint information content of the method of use Y at the export destination is set to a usage constraint equivalent to that at the export source.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use Y at the export destination is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, the entire right data is not exported.
2. When no usage constraint information on the method of use Y exists at the export source, the entire right data is not exported.

Then, in case 2-109 above, the following conversion rule will be applied:
1. When the usage constraint information on the two methods of use (X, Y) exists at the export source
   1-1. When all usage constraint information for the handling permission information at the export source is "no constraint", right data is converted and exported so that the handling permission information contents of both methods of use X, Y are set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the two methods of use (X, Y) exists at the export source, the entire right data is not exported.

Then, in case 2-110 above, the following conversion rule will be applied:
1. When the usage constraint information on the two methods of use (X, Y) exists at the export source
   1-1. When all usage constraint information for the handling permission information at the export source is "no constraint", the handling permission information content is set to "permitted" for the export destination and exported (however, all other handling permission information at the export destination is set to "non-permitted").
   1-2. When at least one piece of usage constraint information for the handling permission information at the export source is other than "no constraint", the entire right data is not exported.
2. When no usage constraint information on the two methods of use (X, Y) exists at the export source, the entire right data is not exported.

Then, in case 2-111 above, the following conversion rule will be applied:
1. When the usage constraint information on the two methods of use (X, Y) exists at the export source
   1-1. When all usage constraint information for the handling permission information at the export source is "no constraint", right data is converted and exported so that the handling permission information content of the method of use X is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the two methods of use (X, Y) exists at the export source, the entire right data is not exported.

Then, in case 2-112 above, the following conversion rule will be applied:
1. When the usage constraint information on the two methods of use (X, Y) exists at the export source
   1-1. When all usage constraint information for the handling permission information at the export source is "no constraint", right data is converted and exported so that the handling permission information content of the method of use Y is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the two methods of use (X, Y) exists at the export source, the entire right data is not exported.

Then, in case 2-113 above, the following conversion rule will be applied:
1. When the usage constraint information on the two methods of use (X, Y) exists at the export source
   1-1. When the usage constraint of the handling permission information on both methods of use X and Y at the export destination DRM can realize a usage constraint equivalent to that at the export source, right data is converted and exported so that the handling permission information contents of both methods of use X and Y are set to "permitted" and an equivalent usage constraint is set (however, all other handling permission information at the export destination is set to "non-permitted").
   1-2. When the usage constraint of the handling permission information on the method of use X at the export destination DRM can realize a usage constraint equivalent to that at the export source and the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information contents of both methods of use X and Y are set to "permitted", the usage constraint information content of the permission information on the method of use X is set to a usage constraint equivalent to that at the export source and the usage constraint information content of the handling permission information on the method of use Y is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to a usage constraint equivalent to that at the export source (however, all other handling permission information at the export destination is set to "non-permitted").
   1-3. When the usage constraint of the handling permission information on the method of use Y at the export destination DRM can realize a usage constraint equivalent to that at the export source and the usage constraint of the handling permission information on the method of use X at the export destination DRM cannot realize a usage constraint equivalent to that at the export source
      1-3-1. When the usage constraint of the handling permission information on the method of use X at the export destination DRM allows a description in a direction in which the usage constraint is tightened compared to the export source, right data is converted and exported so that the handling permission information contents of both methods of use X and Y are set to "permitted", the usage constraint information content of the handling permission information on the method of use Y is set to a usage constraint equivalent to that at the export source and the usage constraint information content of the handling permission information on the method of use X is set to the closest possible usage constraint content with a tightened usage constraint with respect to the export source (however, all other handling permission information at the export destination is set to "non-permitted").
      1-3-2. When the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraint information content of the handling permission information on the method of use Y is set to a usage constraint equivalent to that at the export source (however, all other handling permission information at the export destination is set to "non-permitted").
   1-4. When the usage constraint of the handling permission information on both methods of use X and Y at the export destination DRM cannot realize a usage constraint equivalent to that at the export source
      1-4-1. When the usage constraint of the handling permission information on both methods of use X and Y at the export destination DRM allows a description in a direction in which the usage constraint is tightened compared to the export source, right data is converted and exported so that the handling permission information contents of the methods of use X and Y are set to "permitted" and the usage constraint information contents of the handling permission information on both methods of use X and Y are set to the closest possible usage constraint content with a tightened usage constraint with respect to the export source (however, all other handling permission information at the export destination is set to "non-permitted").
      1-4-2. When the usage constraint of the handling permission information on the method of use X at the export destination DRM allows a description in a direction in which the usage constraint is tightened compared to the export source and the usage constraint of the handling permission information on the method of use Y at the export destination DRM does not allow a description in a direction in which the usage constraint is tightened compared to the export source, right data is converted and exported so that only the handling permission information content of the method of use X is set to "permitted" and the usage constraint information content of the handling permission information on the method of use X is set to the closest possible usage constraint content with a tightened usage constraint with respect to the export source (however, all other handling permission information at the export destination is set to "non-permitted").
      1-4-3. When the usage constraint of the handling permission information on the method of use Y at the export destination DRM allows a description in a direction in which the usage constraint is tightened compared to the export source and the usage constraint of the handling permission information on the method of use X at the export destination DRM does not allow a description in a direction in which the usage constraint is tightened compared to the export source, right data is converted and exported so that only the handling permission information content of the method of use Y is set to "permitted" and the usage constraintinformationcontentofthehandlingpermission information on the method of use Y is set to the closest possible usage constraint content with a tightened usage constraint with respect to the export source (however, all other handling permission information at the export destination is set to "non-permitted").
      1-4-4. When the usage constraint of the handling permission information on both methods of use X and Y at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-114 above, the following conversion rule will be applied:
1. When the usage constraint information on the two methods of use (X, Y) exists at the export source
   1-1. When the usage constraint of the handling permission information on the methods of use X and Y at the export destination DRM can realize a usage constraint equivalent to that at the export source, right data is converted and exported so that the handling permission information content is set to "permitted" and an equivalent usage constraint is set (however, all other handling permission information at the export destination is set to "non-permitted").
   1-2. When the usage constraint of the handling permission information on the methods of use X and Y at the export destination DRM cannot realize a usage constraint equivalent to that at the export source
      1-2-1. When the usage constraint of the handling permission information on the methods of use X and Y at the export destination DRM allows a description in a direction in which the usage constraint is tightened compared to the export source, right data is converted and exported so that the handling permission information content is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the methods of use X and Y at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-115 above, the following conversion rule will be applied:
1. When the usage constraint information on the two methods of use (X, Y) exists at the export source
   1-1. When the usage constraint of the handling permission information on the method of use X at the export destination DRM can realize a usage constraint equivalent to that at the export source, right data is converted and exported so that the handling permission information content of the method of use X is set to "permitted" and an equivalent usage constraint is set (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When no usage constraint information on the two methods of use (X, Y) exists at the export source, no export is performed.

Then, in case 2-116 above, the following conversion rule will be applied:
1. When the usage constraint information on the two methods of use (X, Y) exists at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and an equivalent usage constraint is set (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-117 above, the following conversion rule will be applied:
1. When the usage constraint information on the two methods of use (X, Y) exists at the export source
   1-1. When the usage constraint of the handling permission information on both methods of use X and Y at the export destination DRM can realize a usage constraint equivalent to that at the export source, right data is converted and exported so that an equivalent usage constraint is set.
   1-2. When the usage constraint on the method of use X at the export destination DRM can realize a usage constraint equivalent to that at the export source and the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use X is set to a usage constraint equivalent to that at the export source and the usage constraint information content of the method of use Y is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, right data is converted and exported so that the usage constraint information content of the method of use X is set to a usage constraint equivalent to that at the export source.
   1-3. When the usage constraint on the method of use Y at the export destination DRM can realize a usage constraint equivalent to that at the export source and the usage constraint on the method of use X at the export destination DRM cannot realize a usage constraint equivalent to that at the export source
      1-3-1. When the usage constraint on the method of use X at the export destination DRM allows a description in a direction in which the usage constraint is tightened compared to the export source, right data is converted and exported so that the usage constraint information content of the method of use Y is set to a usage constraint equivalent to that at the export source and the usage constraint information content of the method of use X is set to the closest possible usage constraint content with a tightened usage constraint with respect to the export source.
      1-3-2. When the usage constraint on the method of use X at the export destination DRM does not allow a description in a direction in which the usage constraint is tightened compared to the export source, right data is converted and exported so that the usage constraint information content of the method of use Y is set to a usage constraint equivalent to that at the export source.
   1-4. When the usage constraint on both methods of use X and Y at the export destination DRM cannot realize a usage constraint equivalent to that at the export source
      1-4-1. When the usage constraint on both methods of use X and Y at the export destination DRM allows a description in a direction in which the usage constraint is tightened compared to the export source, right data is converted and exported so that the usage constraint information contents of the methods of use X and Y are set to the closest possible usage constraint content with a tightened usage constraint with respect to the export source.
      1-4-2. When the usage constraint on the method of use X at the export destination DRM allows a description in a direction in which the usage constraint is tightened compared to the export source and the usage constraint on the method of use Y at the export destination DRM does not allow a description in a direction in which the usage constraint is tightened compared to the export source, right data is converted and exported so that the usage constraint information content of the method of use X is set to the closest possible usage constraint content with a tightened usage constraint with respect to the export source.
      1-4-3. When the usage constraint on the method of use Y at the export destination DRM allows a description in a direction in which the usage constraint is tightened compared to the export source and the usage constraint on the method of use X at the export destination DRM does not allow a description in a direction in which the usage constraint is tightened compared to the export source, right data is converted and exported so that the usage constraint information content of the method of use Y is set to the closest possible usage constraint content with a tightened usage constraint with respect to the export source.
      1-4-4. When the usage constraint on both methods of use X and Y at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-118 above, the following conversion rule will be applied:
1. When the usage constraint information on the two methods of use (X, Y) exists at the export source
   1-1. When the usage constraint on the methods of use X and Y at the export destination DRM can realize a usage constraint equivalent to that at the export source, right data is converted and exported so that an equivalent usage constraint is set.
   1-2. When the usage constraint on the methods of use X and Y at the export destination DRM cannot realize a usage constraint equivalent to that at the export source
      1-2-1. When the usage constraint on the methods of use X and Y at the export destination DRM allows a description in a direction in which the usage constraint is tightened compared to the export source, right data is converted and exported so that the closest possible usage constraint content with a tightened usage constraint is set with respect to the export source.
      1-2-2. When the usage constraint on the methods of use X and Y at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-119 above, the following conversion rule will be applied:
1. When the usage constraint information on the two methods of use (X, Y) exists at the export source
   1-1. When the usage constraint on the method of use X at the export destination DRM can realize a usage constraint equivalent to that at the export source, right data is converted and exported so that an equivalent usage constraint is set.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the closest possible usage constraint content with a tightened usage constraint is set with respect to the export source.
      1-2-2. When the usage constraint on the method of use X at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-120 above, the following conversion rule will be applied:
1. When usage constraint information on the two methods of use (X, Y) exists at the export source
   1-1. When the usage constraint on the method of use Y at the export destination DRM can realize a usage constraint equivalent to that at the export source, right data is converted and exported so that an equivalent usage constraint is set.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the closest possible usage constraint content with a tightened usage constraint is set with respect to the export source.
      1-2-2. When the usage constraint on the method of use Y at the export destination DRM does not allow a description in a direction in which the usage constraint is tightened compared to the export source, the entire right data is not exported.
2. When no usage constraint information on the two methods of use (X, Y) exists at the export source, the entire right data is not exported.

Then, in case 2-121 above, the following conversion rule will be applied:
1. When the usage constraint information on the method of use X exists at the export source
   1-1. When all usage constraint information for the handling permission information at the export source is "no constraint", right data is converted and exported so that the handling permission information content on the method of use X is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the method of use X exists at the export source, the entire right data is not exported.

Then, in case 2-122 above, the entire right data is not exported.

Then, in case 2-123 above, the following conversion rule will be applied:
1. When usage constraint information on the method of use X exists at the export source
   1-1. When all usage constraint information for the handling permission information at the export source is "no constraint", right data is converted and exported so that the handling permission information content on the method of use X is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the method of use X exists at the export source, the entire right data is not exported.

Then, in case 2-124 above, the entire right data is not exported.

Then, in case 2-125 above, the following conversion rule will be applied:
1. When the usage constraint information on the method of use X exists at the export source
   1-1. When the usage constraint of the handling permission information on the method of use X at the export destination DRM can realize a usage constraint equivalent to that at the export source, right data is converted and exported so that the handling permission information content of the method of use X is set to "permitted" and an equivalent usage constraint is set (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information on the method of use X is set to the closest possible usage constraint content with a tightened usage constraint with respect to the export source (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When no usage constraint information on the method of use X exists at the export source, the entire right data is not exported.

Then, in case 2-126 above, the entire right data is not exported.

Then, in case 2-127 above, the following conversion rule will be applied:
1. When the usage constraint information on the method of use X exists at the export source
   1-1. When the usage constraint of the handling permission information on the method of use X at the export destination DRM can realize a usage constraint equivalent to that at the export source, right data is converted and exported so that the handling permission information content of the method of use X is set to "permitted" and an equivalent usage constraint is set (however, all other handling permission information at the export destination is set to "non-permitted").
   1-2. When the usage constraint of the handling permission information on the method of use X at the export destination DRM cannot realize a usage constraint equivalent to that at the export source
      1-2-1. When the usage constraint of the handling permission information on the method of use X at the export destination DRM allows a description in a direction in which the usage constraint is tightened compared to the export source, right data is converted and exported so that the handling permission information content of the method of use X is set to "permitted" and the usage constraint information content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use X at the export destination DRM does not allow a description in a direction in which the usage constraint is tightened compared to the export source, the entire right data is not exported.
2. When no usage constraint information on the method of use X exists at the export source, the entire right data is not exported.

Then, in case 2-128 above, the entire right data is not exported.

Then, in case 2-129 above, the following conversion rule will be applied:
1. When the usage constraint information on the method of use X exists at the export source
   1-1. When the usage constraint on the method of use X at the export destination DRM can realize a usage constraint equivalent to that at the export source, right data is converted and exported so that an equivalent usage constraint is set.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the usage constraint information content of the method of use X is set to the closest possible usage constraint content with a tightened usage constraint with respect to the export source.
      1-2-2. When the usage constraint on the method of use X at the export destination DRM does not allow a description in a direction in which the usage constraint is tightened compared to the export source, the entire right data is not exported.
2. When no usage constraint information on the method of use X exists at the export source, the entire right data is not exported.

Then, in case 2-130 above, the entire right data is not exported.

Then, in case 2-131 above, the following conversion rule will be applied:
1. When the usage constraint information on the method of use X exists at the export source
   1-1. When the usage constraint on the method of use X at the export destination DRM can realize a usage constraint equivalent to that at the export source, right data is converted and exported so that an equivalent usage constraint is set.
   1-2. When the usage constraint on the method of use X at the export destination DRM cannot realize a usage constraint equivalent to that at the export source
      1-2-1. When the usage constraint on the method of use X at the export destination DRM allows a description in a direction in which the usage constraint is tightened compared to the export source, right data is converted and exported so that the usage constraint information content is set to the closest possible usage constraint content with a tightened usage constraint with respect to the export source.
      1-2-2. When the usage constraint on the method of use Xat the export destination DRM does not allow a description in a direction in which the usage constraint is tightened compared to the export source, the entire right data is not exported.
2. When no usage constraint information on the method of use X exists at the export source, the entire right data is not exported.

Then, in case 2-132 above, the entire right data is not exported.

Then, in case 2-133 above, the following conversion rule will be applied:
1. When the usage constraint information on the method of use Y exists at the export source
   1-1. When all usage constraint information for the handling permission information at the export source is "no constraint", right data is converted and exported so that the handling permission information content of the method of use Y is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the method of use Y exists at the export source, the entire right data is not exported.

Then, in case 2-134 and case 2-135 above, the entire right data is not exported.

Then, in case 2-136 above, the following conversion rule will be applied:
1. When the usage constraint information on the method of use Y exists at the export source
   1-1. When all usage constraint information for the handling permission information at the export source is "no constraint", right data is converted and exported so that the handling permission information content of the method of use Y is set to "permitted" for the export destination (however, all other handling permission information at the export destination is set to "non-permitted").
   1-2. When at least one piece of usage constraint information for the handling permission information at the export source is other than "no constraint", the entire right data is not exported.
2. When no usage constraint information on the method of use Y exists at the export source, the entire right data is not exported.

Then, in case 2-137 above, the following conversion rule will be applied:
1. When the usage constraint information on the method of use Y exists at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and an equivalent usage constraint is set (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint information content of the handling permission information on the method of use Y is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When no usage constraint information on the method of use Y exists at the export source, the entire right data is not exported.

Then, in case 2-138 and case 2-139 above, the entire right data is not exported.

Then, in case 2-140 above, the following conversion rule will be applied:
1. When the usage constraint information on the method of use Y exists at the export source
   1-1. When the usage constraint of the handling permission information on the method of use Y at the export destination DRM can realize a usage constraint equivalent to that at the export source, right data is converted and exported so that the handling permission information content of the method of use Y is set to "permitted" and an equivalent usage constraint is set (however, all other handling permission information at the export destination is set to "non-permitted").
   1-2. When the usage constraint of the handling permission information on the method of use Y at the export destination DRM cannot realize a usage constraint equivalent to that at the export source
      1-2-1. When the usage constraint of the handling permission information on the method of use Y at the export destination DRM allows a description in a direction in which the usage constraint is tightened compared to the export source, right data is converted and exported so that the handling permission information content of the method of use Y is set to "permitted" and the usage constraint in formation content of the handling permission information is set to the closest possible usage constraint content with a tightened usage constraint with respect to the export source (however, all other handling permission information at the export destination is set to "non-permitted").
      1-2-2. When the usage constraint of the handling permission information on the method of use Y at the export destination DRM does not allow a description in a direction in which the usage constraint is tightened compared to the export source, the entire right data is not exported.
2. When no usage constraint information on the method of use Y exists at the export source, the entire right data is not exported.

Then, in case 2-141 above, the following conversion rule will be applied:
1. When the usage constraint information on the method of use Y exists at the export source
   1-1. When the usage constraint on the method of use Y at the export destination DRM can realize a usage constraint equivalent to that at the export source, right data is converted and exported so that an equivalent usage constraint is set.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content of the method of use Y is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, the entire right data is not exported.
2. When no usage constraint information on the method of use Y exists at the export source, the entire right data is not exported.

Then, in case 2-142 and case 2-143 above, the entire right data is not exported.

Then, in case 2-144 above, the following conversion rule will be applied:
1. When the usage constraint information on the method of use Y exists at the export source
   1-1. When the usage constraint on the method of use Y at the export destination DRM can realize a usage constraint equivalent to that at the export source, right data is converted and exported so that an equivalent usage constraint is set.
   1-2. When the usage constraint on the method of use Y at the export destination DRM cannot realize a usage constraint equivalent to that at the export source
      1-2-1. When the usage constraint on the method of use Y at the export destination DRM allows a description in a direction in which the usage constraint is tightened compared to the export source, right data is converted and exported so that the usage constraint information content is set to the closest possible usage constraint content with a tightened usage constraint with respect to the export source.
      1-2-2. When the usage constraint on the method of use Y at the export destination DRM does not allow a description in a direction in which the usage constraint is tightened compared to the export source, right data is not exported.
2. When no usage constraint information on the method of use Y exists at the export source, right data is not exported.

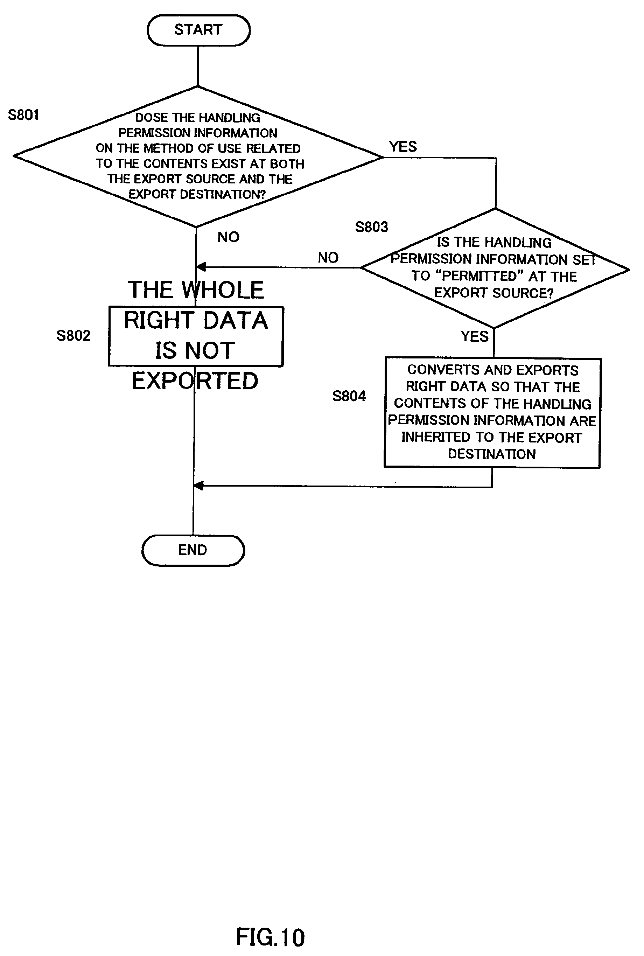

Then, hereinafter, specific examples of right data conversion processing corresponding to case 1-1 shown in Table 1 above will be explained with reference to the matrix table shown in Table 3 and the flow chart shown in FIG.10. In this case, as the digital contents of only one type of method of use, an example of right data conversion processing when export processing is carried out on the audio contents whose method of use is only "reproduction" will be shown.

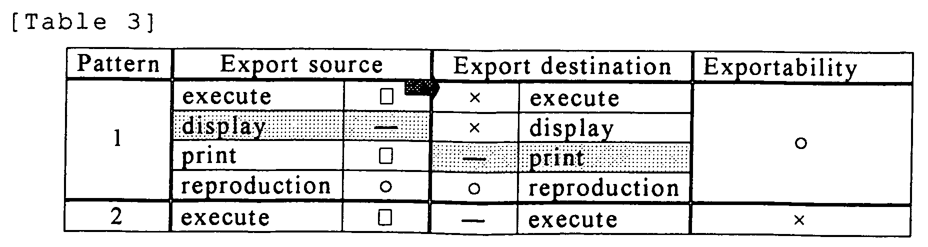

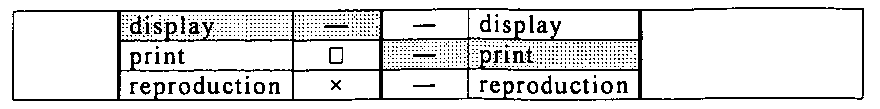

The matrix table in Table 3 shows an example where both the export source DRM and the export destination DRM adopt "1-A: Right permission model" in Table 1, and an example where both the export source DRM and the export destination DRM can apply handlingpermissioninformation for method of use "reproduction". More specifically, the example in Table 3 is an example of the right data conversion processing where the export source DRM is a DRM which can apply three of "execute", "print" and "reproduction" as the handling permission information but cannot apply the handling permission information related to "display", while the export destination DRM is a DRM which can apply "execute", "display" and "reproduction" as the handling permission information but cannot apply handling permission information related to "print".

Pattern 1 shows that since the handling permission information for the method of use "reproduction" is set to "○: Usage permitted" at the export source DRM, right data is exported by setting the handling permission information for the method of use "reproduction" at the export destination DRM to "○: Usage permitted" and setting all other handling permission information at the export destination to "×: Usage non-permitted", that is, pattern 1 shows that export processing is "○: possible". Here, " 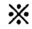 " in the table means that any one of "○: Usage permitted" "×: Usage non-permitted" is selectable.

Pattern 2 shows that since the handling permission information for the method of use "reproduction" is set to "×: Usage non-permitted" at the export source DRM, export of the right data is "×: impossible". Here, "-" in the table means that since export is not performed, no setting is performed in the handling permission information at the export destination DRM.

In this case, when the audio contents are exported from the export source DRM to the export destination DRM, case 1-1 is applied to the conversion rule to convert the right data ("only one type of method of use is available to digital contents to be exported" and "only handling permission information is applicable at the export source DRM" and "only the handling permission information is applicable at the export destination DRM") "1. When the handling permission information on the method of use related to the contents exists at both the export source and export destination, 1-1. When the handling permission information is "permitted" at the export source, right data is converted and exported so that the handling permission information content is inherited to the export destination (however, all other handling permission information at the export destination is set to "non-permitted"), 1-2. When the handling permission information is "non-permitted" at the export source, right data is not exported".

Then, the right data conversion processing in case 1-1 which is executed based on the setting contents of the handling permission information at the export source DRM in the matrix table shown in Table 3 will be explained with reference to the flow chart shown in FIG.10. Here, this right data conversion processing is executed by the contents conversion section 27.

The contents conversion section 27 first decides whether the handling permission information on the method of use (reproduction) related to the audio contents exists at both the export source DRM and the export destination DRM or not (step S801). When it decides that the handling permission information on the method of use (reproduction) exists at none of them (step S801: NO), the contents conversion section 27 moves on to step S802 and terminates this processing without exporting the right data.

Furthermore, when it decides that the handling permission information on the method of use (reproduction) exists in both of them (step S801: YES), the contents conversion section 27 moves on to step S803 and decides whether the handling permission information is set to "permitted" at the export source or not. In pattern 1 in Table 3, the handling permission information on the method of use "reproduction" related to audio contents is set to "○: Usage permitted". For this reason, the contents conversion section 27 decides that the handling permission information is set to "permitted" at the export source (step S803: YES), moves on to step S804, converts and exports right data so that the setting contents of the handling permission information are inherited to the export destination and all other handling permission information at the export destination is set to "non-permitted" and terminates this processing.

Furthermore, in pattern 2 in Table 3, the handling permission information on the method of use "reproduction" related to the audio contents is set to " × : Usage non-permitted". For this reason, the contents conversion section 27 decides that the handling permission information is not set to "permitted" at the export source DRM (step S803: NO), moves on to step S802 and terminates this processing without exporting the right data.

As shown above, when the digital contents of only one type of method of use are exported and both the export source DRM and export destination DRM adopt a right permission model, and the handling permission information on the method of use corresponding to the digital contents is applicable at the export source DRM and the export destination DRM, it is possible to convert right data so that the export destination DRM also has usage permission equivalent to that at the export source DRM by executing conversion processing on the right data based on the conversion rule shown in case 1-1 based on the setting contents of the handling permission information related to the method of use corresponding to the digital contents of one type of method of use at the export source, and consequently perform export so as to appropriately constrain the method of use of exported digital contents according to the method of use permitted at the export source DRM.

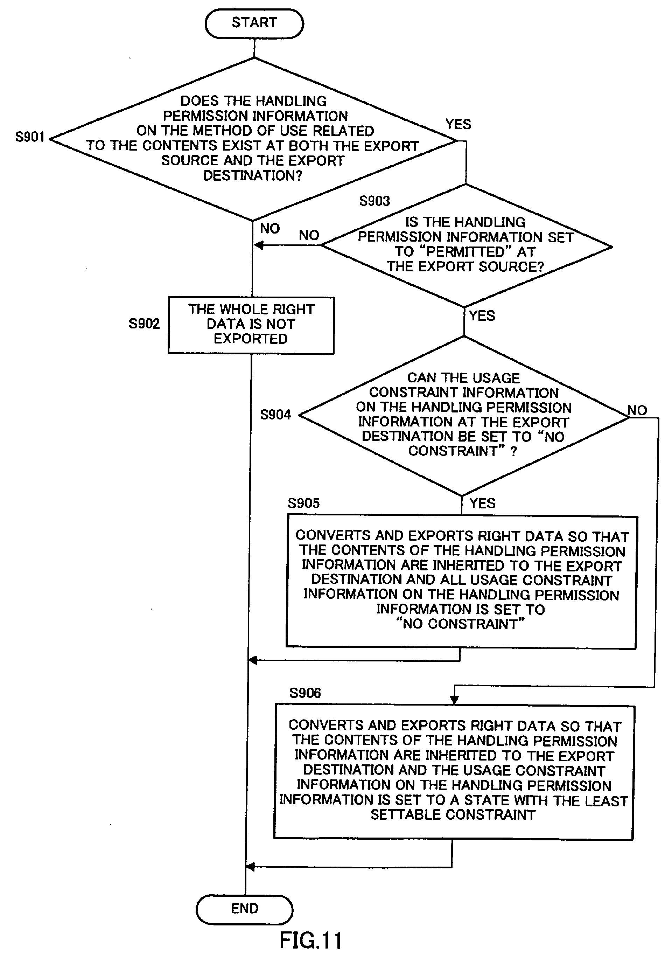

Then, specific examples of the right data conversion processing where the export source DRM adopts"1-A: Right permission model" in Table 1 and the export destination DRM adopts "1-B: Right permission + usage constraint model" in Table 1 corresponding to case 1-2 shown in Table 1 will be explained with reference to the flow chart shown in FIG.11.

In this case, when contents are exported from the export source DRM to the export destination DRM, case 1-2 is applied to the conversion rule for converting right data, "1. When the handling permission information on the method of use related to the contents exists at both the export source and export destination ("only one type of method of use is available to digital contents to be exported", "only the handling permission information is applicable at the export DRM and both the handling permission information and constraint information for the handling permission information are applicable at the export destination DRM") "1-1. When the handling permission information is "permitted" at the export source, right data is converted and exported so that the handling permission information content is inherited to the export destination. In this case, all usage constraint information for the handling permission information at the export destination is set to "no constraint". When "no constraint" cannot be set, a state with the least settable constraint is set (however, all other handling permission information at the export destination is set to "non-permitted"). 1-2. When the handling permission information is "non-permitted" at the export source, right data is not exported. 2. When the handling permission information on the method of use related to the contents does not exist at the export destination, right data is not exported. When the handling permission information on the method of use related to the contents does not exist at the export source, right data is not exported".

Then, right data conversion processing at the export source DRM in case 1-2 will be explained with reference to the flow chart shown in FIG.11. This right data conversion processing will be executed by the contents conversion section 27.

The contents conversion section 27 first decides whether the handling permission information on the method of use (reproduction) related to the audio contents exists at both the export source and export destination or not (stepS901). When it decides that the handlingpermission information on the method of use (reproduction) does not exist at both the export source and export destination (step S901: NO), the contents conversion section 27 moves on to step S902 and terminates this processing without exporting the right data.

Furthermore, when it decides that the handling permission information on the method of use (reproduction) exists at both the export source and export destination (step S901: YES), the contents conversion section 27 moves on to step S903 and decides whether the handling permission information is set to "permitted" at the export source or not. When it decides that the handling permission information is set to "permitted" at the export source (step S903: YES), the contents conversion section 27 moves on to step S904.

In step S904, the contents conversion section 27 decides whether the usage constraint information related to the handling permission information at the export destination can be set to "no constraint" or not. When it decides that "no constraint" can be set (step S904: YES), the contents conversion section 27 moves on to step S905.

In step S905, the contents conversion section 27 converts and exports right data so that the setting contents of the handling permission information are inherited to the export destination, all usage constraint information related to the handling permission information is set to "no constraint" and all other handling permission information at the export destination is set to "non-permitted" and terminates this processing.

Furthermore, when it decides that the usage constraintinformationrelatedtothehandlingpermission information at the export destination cannot be set to "no constraint" (step S904: NO), the contents conversion section 27 moves on to step S906, converts and exports right data so that the setting contents of the handling permission information are inherited to the export destination and the usage constraint information related to the handling permission information is set to a state with the least settable constraint. Furthermore, instep S906, the contents conversion section 27 sets all handling permission information other than the handling permission information at the export destination to "×: Usage non-permitted".

Furthermore, when it decides in step S903 that the handlingpermissioninformationissetto"non-permitted" at the export source (step S903: NO), the contents conversion section 27 moves on to step S902 and terminates this processing without exporting the right data.

As shown above, when the export source and export destination follow the DRM model above, continuing to make the aforementioned decisions makes it possible to appropriately decide whether or not to export and rationally convert right data, when right data is exported, so that the export destination DRM also has a usage permission equivalent to that at the export source or usage permission whose right is reduced.

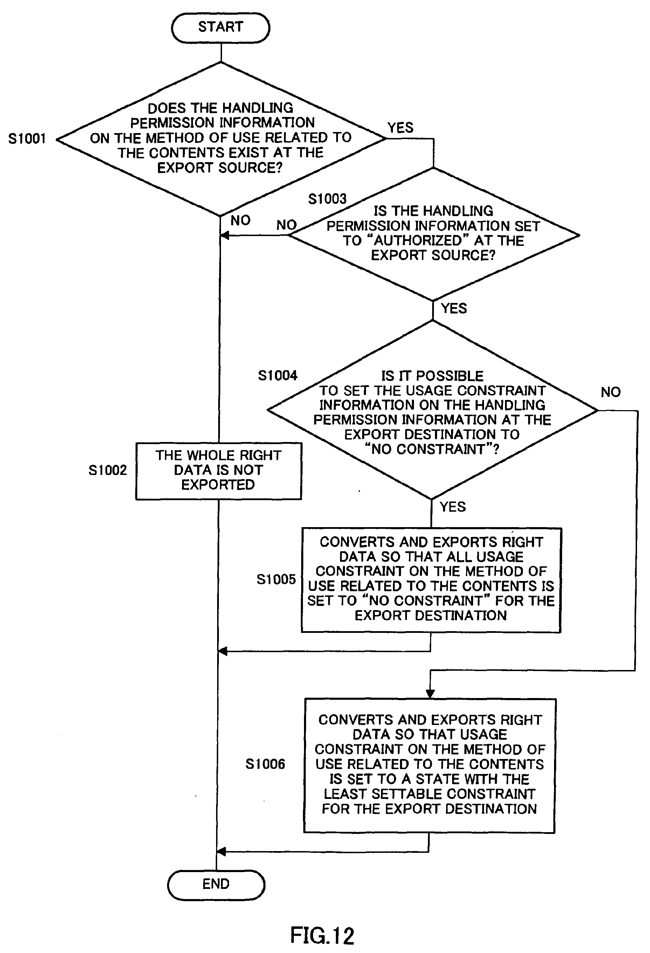

Then, specific examples of right data conversion processing corresponding to case 1-3 shown in Table 1 will be explained with reference to the matrix table shown in Table 4 and the flow chart shown in FIG.12. In this case, examples of right data conversion processing where export processing is carried out on audio contents with only the method of use "reproduction" as the digital contents with only one type of method of use will be shown.

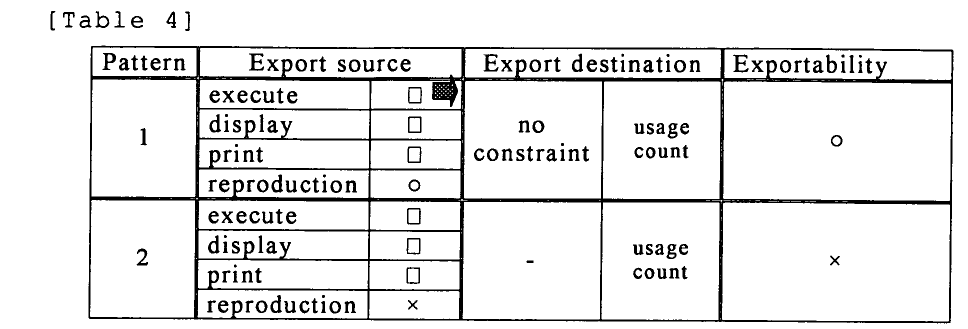

The matrix table in Table 4 shows examples where the export source DRM adopts "1-A: Right permission model" in Table 1, the export destination DRM adopts "1-C: Usage constraint model" in Table 1, the export source DRM can apply only the handling permission information and the export destination DRM can apply usage constraint information on the method of use available to the contents. More specifically, the examples in Table 4 show right data conversion processing examples where the export source DRM is a DRM that can apply four of "execute", "display", "print" and "reproduction" as the handling permission information and the export destination DRM is a DRM that can apply "usage count" as the usage constraint information. Furthermore, suppose a case where a count setting such as "no constraint" is also possible for "usage count" as the usage constraint information at the export destination DRM.

Pattern 1 shows that since the handling permission information on the method of use "reproduction" is set to "○: Usage permitted" at the export source DRM, usage constraint information on the method of use "reproduction" at the export destination DRM is set to "non-constrained", that is, "no constraint", and all other usage constraint information at the export destination is set to contents meaning "not available", thereby indicating that right data is exported, that is, export processing is "○: possible". Here, " 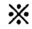 " in the table means that any one of "○: Usage permitted" or "×: Usage non-permitted" is selectable.

Pattern 2 shows that since the handling permission information on the method of use "reproduction" is set to "×: Usage non-permitted" at the export source DRM, export of right data is "×: impossible". Here, "-" in the table means that since no export is performed, no usage constraint information is set at the export destination DRM.

In this case, when audio contents are exported from the export source DRM to the export destination DRM, case 1-3 is applied to the conversion rule for converting right data, ("only one type of method of use is available to digital contents to be exported", "only the handling permission information is applicable at the export source DRM, only usage constraint information is applicable at the export destination DRM") "1. When the handling permission information on the method of use related to the contents exists at the export source, 1-1. When the handling permission information on the method of use related to the contents is "permitted" at the export source, right data is converted and exported so that all usage constraint information on the method of use related to the contents at the export destination is set to "no constraint". When "no constraint" cannot be set, a state with the least settable constraint is set (however, other usage constraint information is set to contents meaning "not available"). 1-2. When the handling permission information on the method of use related to the contents is "non-permitted" at the export source, right data is not exported. 2. When the handling permission information on the method of use related to the contents does not exist at the export source, right data is not exported".

Then, the right data conversion processing in case 1-3 executed based on the setting contents of the handling permission information at the export source DRM in the matrix table shown in Table 4 will be explained with reference to the flow chart shown in FIG.12. This right data conversion processing is executed by the contents conversion section 27.

The contents conversion section 27 first decides whether the handling permission information on the method of use (reproduction) related to the audio contents exists at the export source DRM or not (step S1001). When it decides that the handling permission information on the method of use (reproduction) does not exist at the export source (step S1001: NO), the contents conversion section 27 moves on to step S1002 and terminates this processing without exporting the right data.

Furthermore, when it decides that the handling permission information on the method of use (reproduction) exists at the export source (step S1001: YES), the contents conversion section 27 moves on to step S1003 and decides whether the handling permission information is set to "permitted" at the export source or not. In pattern 1 in Table 4, the handling permission information on the method of use "reproduction" related to the audio contents is set to "○: Usage permitted". For this reason, the contents conversion section 27 decides that the handling permission information is set to "permitted" at the export source (step S1003: YES), moves on to step S1004 and decides whether the usage constraint information of the method of use related to the handling permission information can be set to "no constraint" for the export destination or not.

Pattern 1 in Table 4 contemplates the case where a count setting of "no constraint" is also possible as the usage constraint information "usage count" of the method of use "reproduction" related to the handling permission information. Thus, the contents conversion section 27 decides that it is possible to set "no constraint" (step S1004: YES) and moves on to step S1005.

In step S1005, the contents conversion section 27 converts and exports right data so that all usage constraint information on the method of use related to the audio contents is set to "no constraint" for the export destination and other usage constraint information is set to contents meaning "not available", and terminates this processing.

Furthermore, it decides in step S1004 that the usage constraint information on the method of use "reproduction" related to the handling permission information cannot be set to "no constraint" for the export destination (step S1004: NO), the contents conversion section 27 moves on to step S1006, converts and exports right data so that the usage constraint on the method of use related to the contents is set to a state with the least settable constraint for the export destination and terminates this processing.

Furthermore, when it decides in step S1003 that the handlingpermissioninformationissetto"non-permitted" at the export source, that is, in the case of pattern 2 in Table 4, the contents conversion section 27 moves on to step S1002 and terminates this processing without exporting the right data.

As shown above, when the digital contents of only one type of method of use are exported, the export source DRM adopts a right permission model, the export source DRM adopts a right permission model, the export destination DRM adopts a usage constraint model, the export source DRM can apply the handling permission information on the method of use corresponding to the digital contents and the export destination DRM can apply the usage constraint information on the method of use corresponding to the digital contents, executing conversion processing on the right data based on the conversion rule shown in case 1-3 based on the setting contents of the handling permission information on the method of use corresponding to the digital contents of one type of method of use at the export source allows the export destination DRM to convert right data so as to obtain usage permission equivalent to that at the export source DRM or the usage permission closest possible to the equivalent usage permission although in a direction in which the right is reduced, with the result that it is possible to perform export in such a way that the method of use of the exported digital contents is constrained appropriately according to the method of use permitted at the export source DRM.

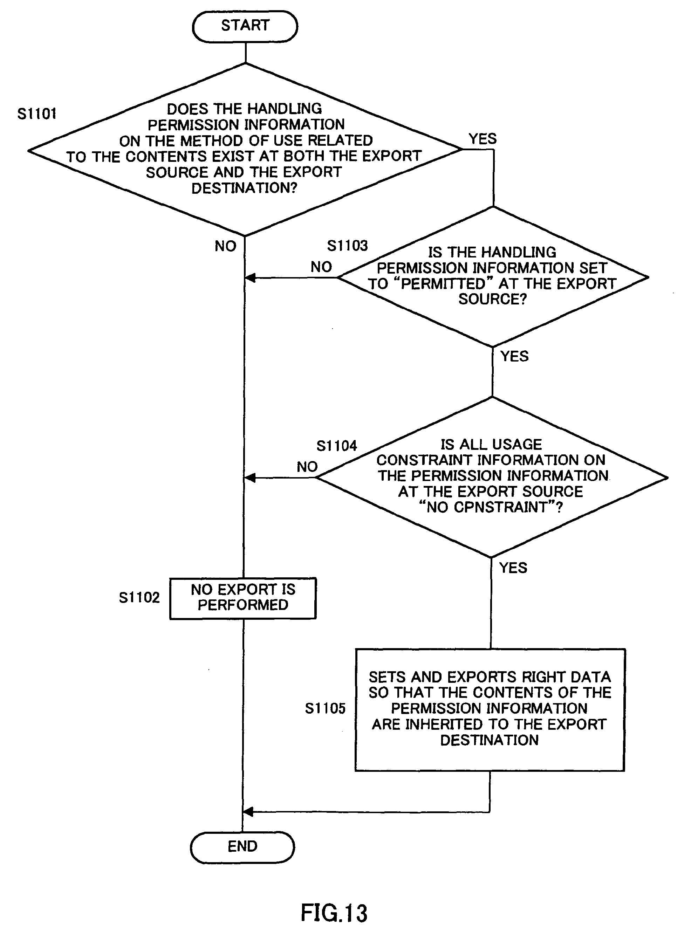

Then, specific examples of right data conversion processing corresponding to case 1-4 shown in Table 1 where the export source DRM adopts "1-B: Right permission + usage constraint model" in Table 1 and the export destination DRM adopts "1-A: Right permission model" in Table 1 will be explained with reference to the flow chart shown in FIG.13.

In this case, when audio contents are exported from the export source DRM to the export destination DRM, case 1-4 is applied to the conversion rule for converting right data ("only one type of method of use is available to the digital contents to be exported", "both handling permission information and constraint information for the handling permission information are applicable at the export source DRM, and only the handling permission information is applicable at the export destination DRM") "1. When the handling permission information on the method of use related to the contents exists at both the export source and the export destination, 1-1. When the handling permission information is "permitted" at the export source, 1-1-1. When all usage constraint information for the handling permission information at the export source is "no constraint", right data is converted and exported so that the handling permission information content is inherited to the export destination (however, all other handling permission information at the export destination is set to "non-permitted"). 1-1-2. When at least one piece of usage constraint information for the handling permission information at the export source is other than "no constraint", right data is not exported. 1-2. When the handling permission information is "non-permitted" above at the export source, right data is not exported. 2. When the handling permission information on the method of use related to the contents does not exist at the export destination, right data is not exported. 3. When the handling permission information on the method of use related to the contents does not exist at the export source, right data is not exported".

Then, the right data conversion processing in case 1-4 will be explained with reference to the flow chart shown in FIG.13. Here, this right data conversion processing is executed by the contents conversion section 27.

The contents conversion section 27 first decides whether the handling permission information on the method of use (reproduction) related to the audio contents exists at both the export source and the export destination or not (step S1101). When it decides that the handling permission information on the method of use (reproduction) does not exist at both the export source and the export destination (step S1101: NO), the contents conversion section 27 moves on to step S1102 and terminates this processing without exporting the right data.

Furthermore, when it decides that the handling permission information on the method of use (reproduction) exists at both the export source and the export destination (step S1101: YES), the contents conversion section 27 moves on to step S1103 and decides whether the handling permission information is set to "permitted" at the export source or not. When it decides that the handling permission information is set to "permitted" at the export source (step S1103: YES), the contents conversion section 27 moves on to step S1104.

In step S1104, the contents conversion section 27 decides whether all usage constraint information related to the handling permission information at the export source is "no constraint" or not. When it decides that all usage constraint information is set to "no constraint" (step S1104: YES), the contents conversion section 27 moves on to step S1105.

In step S1105, the contents conversion section 27 converts and exports right data so that the setting contents of the handling permission information are inherited to the export destination and all other handling permission information is set to "non-permitted", and terminates this processing.

Furthermore, when it decides in step S1103 that the handling permission information is not set to "permitted" at the export source (step S1103: NO), the contents conversion section 27 moves on to step S1102, and terminates this processing without exporting the right data.

Furthermore, when it decides in step S1104 that all usage constraint information related to the handling permission information at the export source is not set to "no constraint" (step S1104: NO), the contents conversion section 27 moves on to step S1102, and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

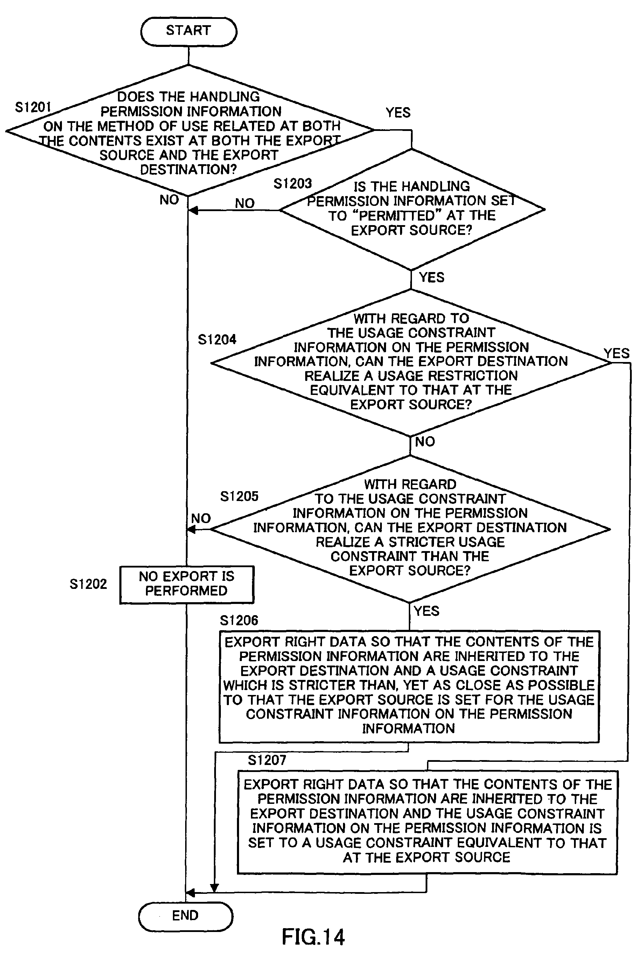

Then, specific examples of right data conversion processing corresponding to case 1-5 shown in Table 1 where both the export source DRM and the export destination DRM adopt "1-B: Right permission + usage constraint model" in Table 1 will be explained with reference to the flow chart shown in FIG.14.

In this case, when audio contents are exported from the export source DRM to the export destination DRM, case 1-5 is applied to the conversion rule for converting right data ("only one type of method of use is available to digital contents to be exported", "both handling permission information and constraint information for the handling permission information are applicable at both the export source DRM and the export destination DRM") "1. When the handling permission information on the method of use related to the contents exists at both the export source and the export destination, 1-1. When the handling permission information is "permitted" at the export source, 1-1-1. When an equivalent usage constraint can be realized at the export destination DRM, right data is changed so that the handling permission information content is inherited to the export destination and an equivalent usage constraint is set (however, all other handling permission information at the export destination is set to "non-permitted"). 1-1-2. When an equivalent usage constraint cannot be realized at the export destination DRM and a description in a direction in which the usage constraint is tightened is possible, right data is converted and exported so that the handling permission information content is inherited to the export destination and the closest possible usage constraint content with a tightened usage constraint is set (however, all other handling permission information at the export destination is set to "non-permitted"). 1-1-3. When an equivalent usage constraint cannot be realized at the export destination DRM and a description in a direction in which the usage constraint is tightened is not possible, right data is not exported. 1-2. When the handling permission information is "non-permitted" at the export source, right data is not exported. 2. When the handling permission information on the method of use related to the contents does not exist at the export destination, right data is not exported. 3. When the handling permission information on the method of use related to the contents does not exist at the export source, right data is not exported".

Then, the right data conversion processing in case 1-5 will be explained with reference to the flow chart shown in FIG.14. Here, this right data conversion processing is executed by the contents conversion section 27.

The contents conversion section 27 first decides whether the handling permission information on the method of use (reproduction) related to the audio contents exists at both the export source and the export destination or not (step S1201). When it decides that the handling permission information on the method of use (reproduction) does not exist at both the export source and the export destination (step S1201: NO), the contents conversion section 27 moves on to step S1202 and terminates this processing without exporting the right data.

Furthermore, when it decides that the handling permission information on the method of use (reproduction) exists at both the export source and the export destination (step S1201: YES), the contents conversion section 27 moves on to step S1203 and decides whether the handling permission information is set to "permitted" at the export source or not. When it decides that the handling permission information is set to "permitted" at the export source (step S1203: YES), the contents conversion section 27 moves on to step S1204.

In step S1204, the contents conversion section 27 decides whether or not the export destination can realize a usage constraint equivalent to that at the export source with regard to the usage constraint information related to the handling permission information. When it decides that the export destination cannot realize a usage constraint equivalent to that at the export source (step S1204: NO), the contents conversion section 27 moves on to step S1205.

In step S1205, the contents conversion section 27 decides whether or not the export destination can realize a stricter usage constraint than the export source with regard to the usage constraint information related to the handling permission information. When it decides that the export destination can realize a stricter usage constraint than the export source (step S1205: YES), the contents conversion section 27 moves on to step S1206.

In step S1206, the contents conversion section 27 converts and exports right data so that the setting contents of the handling permission information are inherited to the export destination, a usage constraint which is stricter than, yet as close as possible to that at the export source is set for the usage constraint information related to the handling permission information and all other handling permission information at the export destination is set to "non-permitted", and terminates this processing.

Furthermore, when it decides in step S1204 that the export destination can realize a usage constraint equivalent to that at the export source (step S1204: YES) the contents conversion section 27 moves on to step S1207. In step S1207, the contents conversion section 27 converts and exports right data so that the setting contents of the handling permission information are inherited to the export destination, the usage constraint information related to the handling permission information is set to a usage constraint equivalent to that at the export source and all other handling permission information at the export destination is set to "non-permitted" and terminates this processing.

Furthermore, when it decides in step 1203 that the handling permission information is not set to "permitted" at the export source (step 1203: NO), the contents conversion section 27 moves on to step 1202 and terminates this processing without exporting the right data.

Furthermore, when it decides in step S1205 that the export destination cannot realize a stricter usage constraint than the export source (step S1205: NO), the contents conversion section 27 moves on to step S1202 and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

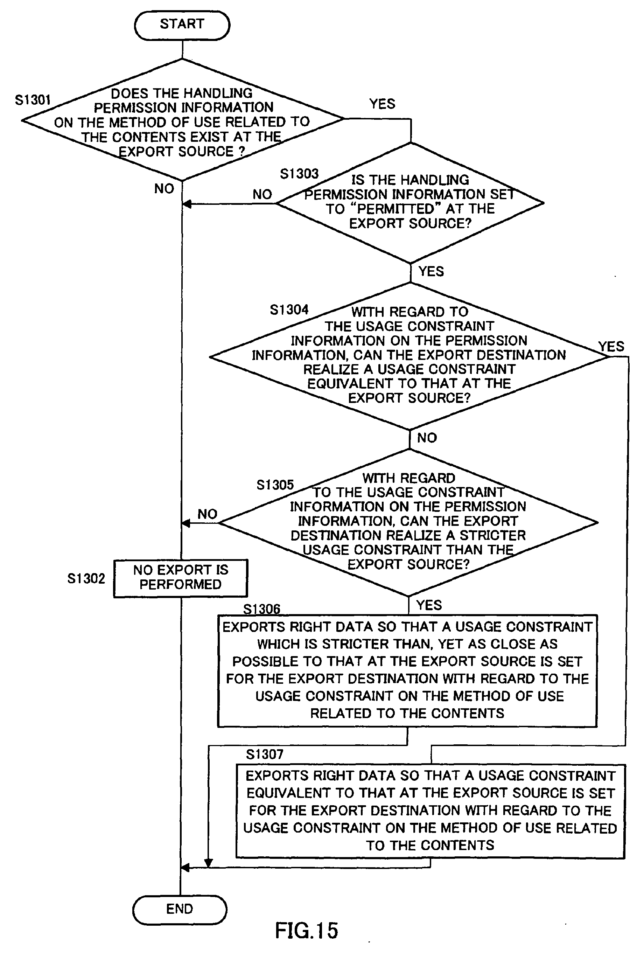

Then, specific examples of right data conversion processing corresponding to case 1-6 shown in Table 1 where the export source DRM adopts "1-B: Right permission + usage constraint model" in Table 1 and the export destination DRM adopts"1-C: Usage constraint model" in Table 1 will be explained with reference to the flow chart shown in FIG.15.

In this case, when contents are exported from the export source DRM to the export destination DRM, case 1-6 is applied to the conversion rule for converting right data ("only one type of method of use is available to the digital contents to be exported", "both the handling permission information and constraint information for the handling permission information are applicable at the export source DRM, only the constraint information is applicable at the export destination DRM") "1. When the handling permission information on the method of use related to the contents exists at the export source, 1-1. When the handling permission information is "permitted" at the export source, 1-1-1. When an equivalent usage constraint can be realized at the export destination DRM, right data is converted and exported so that an equivalent usage constraint is set. 1-1-2. When an equivalent usage constraint cannot be realized at the export destination DRM and a description in a direction in which the usage constraint is tightened is possible, right data is converted and exported so that the closest possible usage constraint content with a tightened usage constraint is set. 1-1-3. When an equivalent usage constraint cannot be realized at the export destination DRM and a description in a direction in which the usage constraint is tightened is not possible, right data is not exported. 1-2. When the handling permission information is "non-permitted" at the export source, right data is not exported. 2. When the handling permission information on the method of use related to the contents does not exist at the export source, right data is not exported".

Then, right data conversion processing in case 1-6 will be explained with reference to the flow chart shown in FIG.15. Here, this right data conversion processing is executed by the contents conversion section 27.

The contents conversion section 27 first decides whether the handling permission information on the method of use (reproduction) related to the audio contents exists at the export source or not (step S1301). When it decides that the handling permission information on the method of use (reproduction) does not exist at the export source (step S1301: NO), the contents conversion section 27 moves on to step S1302 and terminates this processing without exporting the right data.

Furthermore, when it decides that the handling permission information exists at the export source (step S1301: YES), the contents conversion section 27 moves on to step S1303, and decides whether the handling permission information is set to "permitted" at the export source or not. When it decides that the handling permission information is set to "permitted" at the export source (step S1303: YES), the contents conversion section 27 moves on to step S1304.

In step S1304, the contents conversion section 27 decides whether or not the export destination can realize a usage constraint equivalent to that at the export source with regard to the usage constraint information related to the handling permission information. When it decides that the export destination cannot realize a usage constraint equivalent to that at the export source (step S1304: NO), the contents conversion section 27 moves on to step S1305.

In step S1305, the contents conversion section 27 decides whether or not the export destination can realize a stricter usage constraint than the export source with regard to the usage constraint information related to the handling permission information. When it decides that the export destination can realize a stricter usage constraint than the export source (step S1305: YES), the contents conversion section 27 moves on to step S1306.

In step S1306, the contents conversion section 27 converts and exports right data so that a usage constraint which is stricter than, yet as close as possible to that at the export source is set for the export destination with regard to the usage constraint on the method of use related to the digital contents, and terminates this processing.

Furthermore, when it decides in step S1304 that the export destination can realize a usage constraint equivalent to that at the export source (step S1304: YES), the contents conversion section 27 moves on to step S1307. In step S1307, the contents conversion section 27 converts and exports right data so that a usage constraint equivalent to that at the export source is set for the export destination with regard to the usage constraint on the method of use related to the digital contents, and terminates this processing.

Furthermore, when it decides in step 1303 that the handling permission information is not set to "permitted" at the export source (step 1303: NO), the contents conversion section 27 moves on to step 1302 and terminates this processing without exporting the right data.

Furthermore, when it decides in step S1305 that the export destination cannot realize a stricter usage constraint than the export source (step S1305: NO), the contents conversion section 27 moves on to step S1302, and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

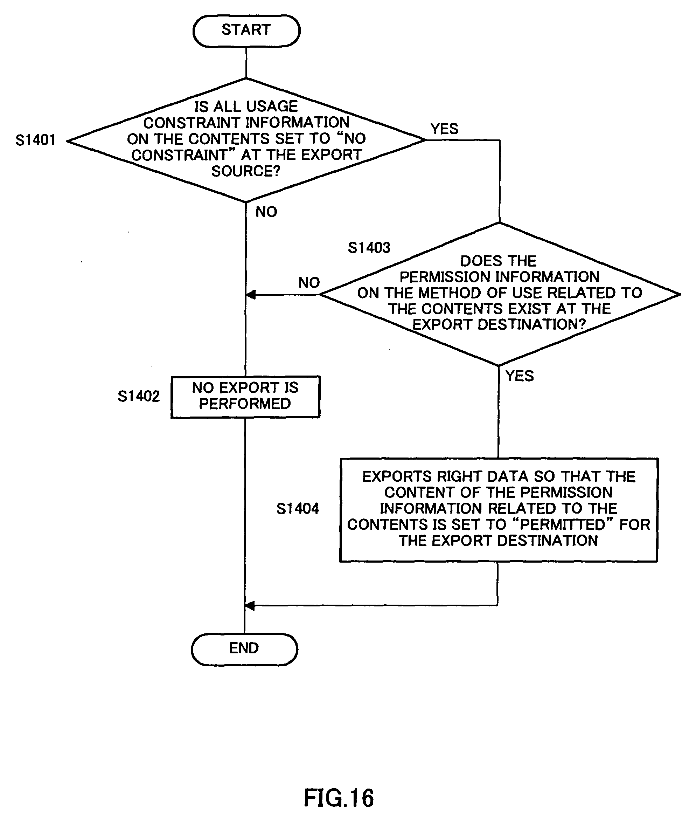

Then, specific examples of right data conversion processing corresponding to case 1-7 shown in Table 1 will be explained with reference to the matrix table shown in Table 5 and the flow chart shown in FIG.16. In this case, a right data conversion processing example when export processing is carried out on audio contents whose method of use is only "reproduction" as digital content with only one type of method of use will be shown.

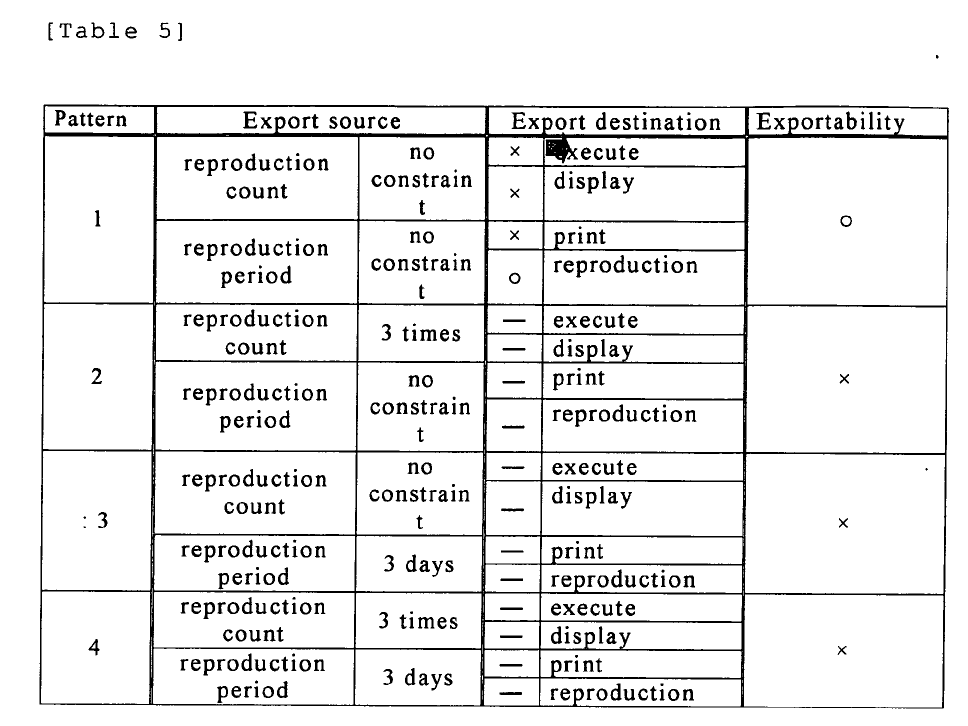

The matrix table in Table 5 shows examples where the export source DRM adopts "1-C: Usage constraint model" in Table 1, the export destination DRM adopts "1-A: Right permission model" in Table 1, and the export source DRM can apply the usage constraint information for the method of use "reproduction" and the export destination DRM can apply the handling permission information for the method of use "reproduction". Furthermore, more specifically, the examples in Table 5 are right data conversion processing examples where the export source DRM is a DRM which can apply "reproduction count" and "reproduction period" as the usage constraint information, the export destination DRM is a DRM which can apply four of "execute", "display", "print" and "reproduction" as the handling permission information.

Pattern 1 shows that the usage constraint information on the method of use "reproduction" is set to "reproduction count: NO constraint" "reproduction period: NO constraint" at the export source DRM, and the handling permission information on the method of use "reproduction" related to the audio contents exists at the export destination DRM, and therefore right data is thereby exported by setting the setting content of the handling permission information to "permitted", that is, the export processing is "○: possible". Furthermore, "×" in the table here indicates " ×: Usage non-permitted".

Pattern 2 shows that since the usage constraint information for the method of use "reproduction" is set to "reproduction count: 3 times (with constraint)" at the export source DRM, export of the right data is "×: impossible". Furthermore, "-" in the table here means that since no export is performed, handling permission information is not set at the export destination DRM.

Pattern 3 shows that since the usage constraint information for the method of use "reproduction" is set to "reproduction period: 3 days (with constraint)" at the export source DRM, export of the right data is "×: impossible". Furthermore, "-" in the table here means that since no export is performed, handling permission information is not set at the export destination DRM.

Pattern 4 shows that the usage constraint information for the method of use "reproduction" is set to "reproduction count: 3 times (with constraint)" "reproduction period: 3 days (with constraint)" at the export source DRM, export of the right data is "×: impossible". Furthermore, "-" in the table here means that since no export is performed, the handling permission information is not set at the export destination DRM.

In this case, when audio contents are exported from the export source DRM to the export destination DRM, case 1-7 is applied to the conversion rule for converting right data ("only one type of method of use is available to digital contents to be exported", "only the constraint information is applicable at the export source DRM and only the handling permission information is applicable at the export destination DRM") "1. When all usage constraint information related to the contents is "no constraint" at the export source, 1-1. When the handling permission information on the method of use related to the contents exists at the export destination, right data is converted and exported so that the handling permission information content is set to "permitted". 1-2. When the handling permission information on the method of use related to the contents does not exist at the export destination, right data is not exported. 2. When at least one piece of usage constraint information at the export source is other than "no constraint", right data is not exported".

Then, the right data conversion processing in case 1-7 will be explained with reference to the flow chart shown in FIG.16. This right data conversion processing is executed by the contents conversion section 27.

The contents conversion section 27 first decides whether all usage constraint information on the method of use related to the audio contents is set to "no constraint" at the export source or not (step S1401). In pattern 1 in Table 5, "reproduction count" and "reproduction period" which are usage constraint information at the export source DRM are all set to "no constraint". For this reason, the contents conversion section 27 decides that all usage constraint information is set to "no constraint" (step S1401: YES) and moves on to step S1403.

In step S1403, the contents conversion section 27 decides whether the handling permission information on the method of use (reproduction) related to the audio contents exists at export destination or not (step S1403). Since in pattern 1 in Table 5, the handling permission information on the method of use "reproduction" at the export destination DRM exists, the contents conversion section 27 decides that the handling permission information exists at the export destination (step S1403: YES) and moves on to step S1404.

In step S1404, the contents conversion section 27 converts and exports right data so that the setting content of the handling permission information related to the audio contents is set to "permitted" for the export destination and terminates this processing. Therefore, in pattern 1 in Table 5, right data is converted and exported so that the setting content of the handling permission information related to the audio contents is set to "permitted" for the export destination and all other handling permission information is set to "non-permitted".

Furthermore, in patterns 2, 3 and 4 in Table 5, the usage constraint information on the method of use related to the audio contents is set to "reproduction count: 3 times (with constraint)" or "reproduction period: 3 days (with constraint)". For this reason, the contents conversion section 27 decides in step S1401 that all usage constraint information related to the audio contents is not set to "no constraint" at the export source (step S1401: NO), moves on to step S1402 and terminates this processing without exporting the right data.

Furthermore, when it decides in step S1403 that the handling permission information on the method of use (reproduction) related to the audio contents does not exist at the export destination (step S1403: NO), the contents conversion section 27 moves on to step S1402 and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

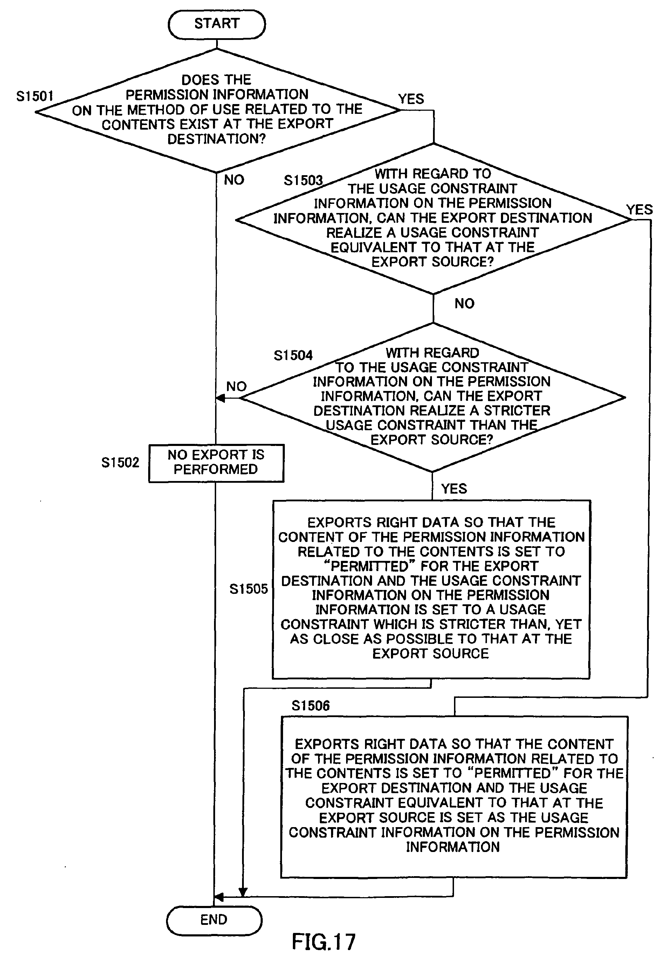

Then, specific examples of right data conversion processing corresponding to case 1-8 in Table 1 where the export source DRM adopts "1-C: Usage constraint model" in Table 1, the export destination DRM adopts "1-B: Right permission + usage constraint model" in Table 1 will be explained with reference to the flow chart shown in FIG.17.

In this case, when contents are exported from the export source DRM to the export destination DRM, case 1-8 is applied to the conversion rule for converting right data ("only one type of method of use is available to digital contents to be exported" "only constraint information is applicable at the export source DRM, both handling permission information and usage constraint information are applicable at the export destination DRM) "1. When the handling permission information on the method of use related to the contents exists at the export destination DRM, 1-1. When an equivalent usage constraint can be realized at the export destination DRM, right data is converted and exported so that the handling permission information content is set to "permitted" for the export destination and an equivalent usage constraint is set (however, all other handling permission information at the export destination is set to "non-permitted"). 1-2. When an equivalent usage constraint cannot be realized at the export destination DRM and a description in a direction in which the usage constraint is tightened is possible, right data is converted and exported so that the handling permission information content is set to "permitted" for the export destination and the closest possible usage constraint content with a tightened usage constraint is set (all other handling permission information at the export destination is set to "non-permitted"). 1-3. When an equivalent usage constraint cannot be realized at the export destination DRM and a description in a direction in which the usage constraint is tightened is not possible, right data is not exported. 2. When the handling permission information on the method of use related to the contents does not exist at the export destination DRM, right data is not exported".

Then, the right data conversion processing in case 1-8 will be explained with reference to the flow chart shown in FIG.17. This right data conversion processing is executed by the contents conversion section 27.

The contents conversion section 27 first decides whether the handling permission information on the method of use (reproduction) related to the audio contents exists at the export destination or not (step S1501). When it decides that the handling permission information on the method of use (reproduction) does not exist at the export destination (step S1501: NO), the contents conversion section 27 moves on to step S1502 and terminates this processing without exporting the right data.

Furthermore, when it decides that the handling permission information on the method of use (reproduction) exists at the export destination (step S1501: YES), the contents conversion section 27 moves on to step S1503, and decides whether or not the export destination can realize a usage constraint equivalent to that at the export source with regard to the usage constraintinformationrelatedtothehandlingpermission information. When it decides that the export destination cannot realize a usage constraint equivalent to that at the export source (step S1503: NO), the contents conversion section 27 moves on to step S1504.

In step S1504, the contents conversion section 27 decides whether or not the export destination can realize a stricter usage constraint than the export source with regard to the usage constraint information related to the handling permission information. When it decides that the export destination can realize a stricter usage constraint than the export source (step S1504: NO), the contents conversion section 27 moves on to step S1505.

In step S1505, the contents conversion section 27 converts and exports right data so that the setting content of the handling permission information related to the audio contents is set to "permitted" for the export destination, the usage constraint information related to the handling permission information is set to a usage constraint which is stricter than, yet as close as possible to that at the export source and all other handling permission information at the export destination is set to "non-permitted", and terminates this processing.

Furthermore, when it decides in step S1503 that with regard to the usage constraint information related to the handling permission information, the export destination can realize a usage constraint equivalent to that at the export source (step S1503: YES), the contents conversion section 27 moves on to step S1506.

In step S1506, the contents conversion section 27 converts and exports right data so that the setting contents of the handling permission information related to the audio contents are set to "permitted" for the export destination, a usage constraint equivalent to that at the export source is set as the usage constraint information related to the handling permission information and all other handling permission information at the export destination is set to "non-permitted", and terminates this processing.

Furthermore, when it decides in step S1504 that with regard to the usage constraint information related to the handling permission information, the export destination cannot realize a stricter usage constraint than the export source (step S1504: NO), the contents conversion section 27 moves on to step S1502 and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

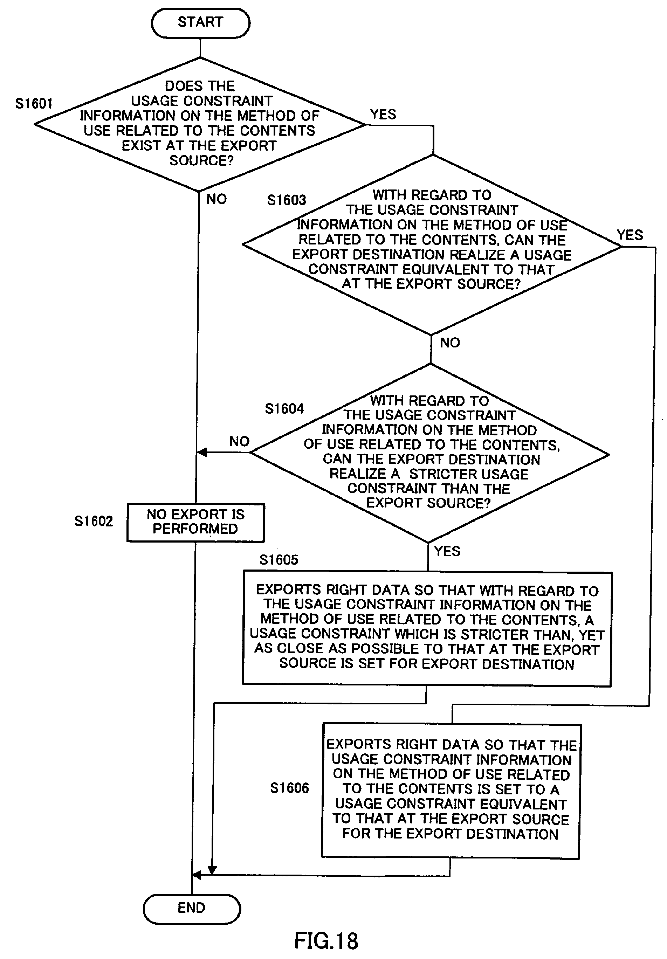

Then, specific examples of the right data conversion processing corresponding to case 1-9 in Table 1 where both the export source DRM and the export destination DRM adopt "1-C: Usage constraint model" in Table 1 will be explained with reference to the flow chart shown in FIG.18.

In this case, when contents are exported from the export source DRM to the export destination DRM, case 1-9 is applied to the conversion rule for converting right data ("only one type of method of use is available to digital contents to be exported", "only the constraint information is applicable at both the export source DRM and the export destination DRM") "1. When the usage constraint information on the method of use related to the contents exists at the export source, 1-1. When an equivalent usage constraint can be realized at the export destination DRM, right data is converted and exported so that an equivalent usage constraint is set. 1-2. When an equivalent usage constraint cannot be realized at the export destination DRM and a description in a direction in which the usage constraint is tightened is possible, right data is converted and exported so that the closest possible usage constraint content with a tightened usage constraint is set. 1-3. When an equivalent usage constraint cannot be realized at the export destination DRM and a description in a direction in which the usage constraint is tightened is not possible, right data is not exported. 2. When the usage constraint information on the method of use related to the contents does not exist at the export source, right data is not exported".

Then, right data conversion processing in case 1-9 will be explained with reference to the flow chart shown in FIG.18. Here, this right data conversion processing is executed by the contents conversion section 27.

The contents conversion section 27 first decides whether the usage constraint information on the method of use (reproduction) related to the audio contents exists at the export source or not (step S1601). When it decides that the usage constraint information on the method of use (reproduction) does not exist at the export source (step S1601 : NO), the contents conversion section 27 moves on to step S1602 and terminates this processing without exporting the right data.

Furthermore, when it decides that the usage constraint information on the method of use (reproduction) exists at the export source (step S1601: YES), the contents conversion section 27 moves on to step S1603 and decides whether or not the export destination can realize a usage constraint equivalent to that at the export source with regard to the usage constraint information on the method of use related to the contents. When it decides that the export destination cannot realize a usage constraint equivalent to that at the export source (step S1603: YES), the contents conversion section 27 moves on to step S1604.

In step S1604, the contents conversion section 27 decides whether or not the export destination can realize a stricter usage constraint than the export source with regard to the usage constraint information on the method of use related to the contents. When it decides that the export destination can realize a stricter usage constraint than the export source (step S1604: YES), the contents conversion section 27 moves on to step S1605.

In step S1605, the contents conversion section 27 converts and exports right data so that with regard to the usage constraint information on the method of use related to the contents, a usage constraint which is stricter than, yet as close as possible to that at the export source is set for the export destination, and terminates this processing.

Furthermore, when it decides in step S1603 that with regard to the usage constraint information on the method of use related to the contents, the export destination can realize a usage constraint equivalent to that at the export source (step S1603: YES), the contents conversion section 27 moves on to step S1606.

In step S1606, the contents conversion section 27 converts and exports right data so that the usage constraint information on the method of use related to the contents is set to a usage constraint equivalent to that at the export source for the export destination, and terminates this processing.

Furthermore, when it decides in step S1604 that with regard to the usage constraint information on the method of use related to the contents, the export destination cannot realize a stricter usage constraint than the export source (step S1604: NO), the contents conversion section 27 moves on to step S1602 and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

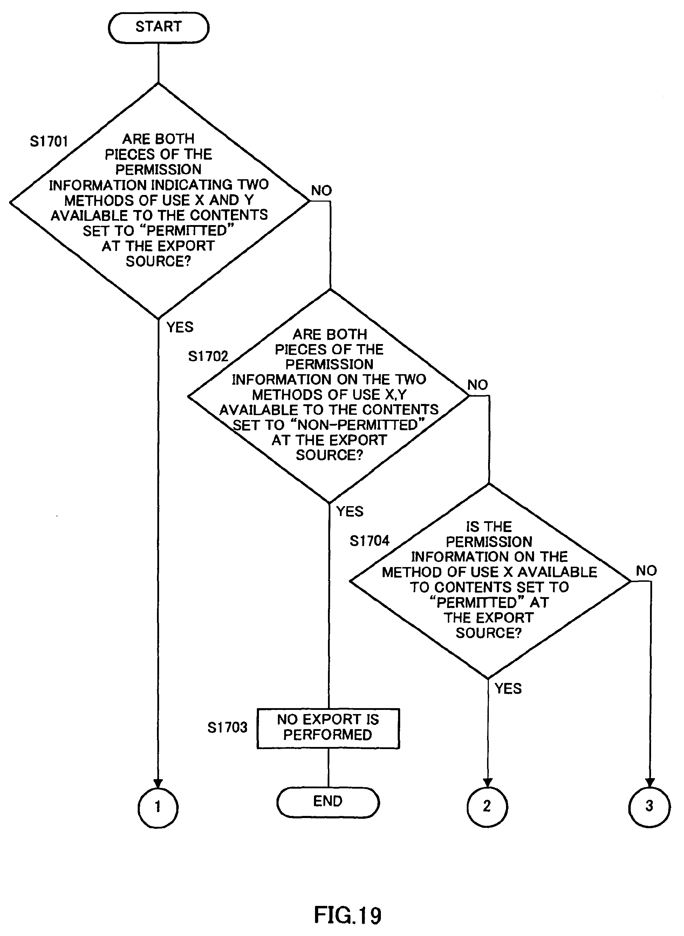

Then, specific examples of the right data conversion processing corresponding to case 2-53 shown in Table 2 will be explained with reference to the matrix table shown in Table 6 and the flow charts shown in FIG.19 to FIG.25. In this case, an example of right data conversion processing where export processing is carried out on wallpaper contents for which methods of use "display" and "print" are available as digital contents with two types of method of use will be shown. However, Table 6 shows typical examples of combinations of handling permission information and usage constraint information of the export source DRM and does not show all combinations.

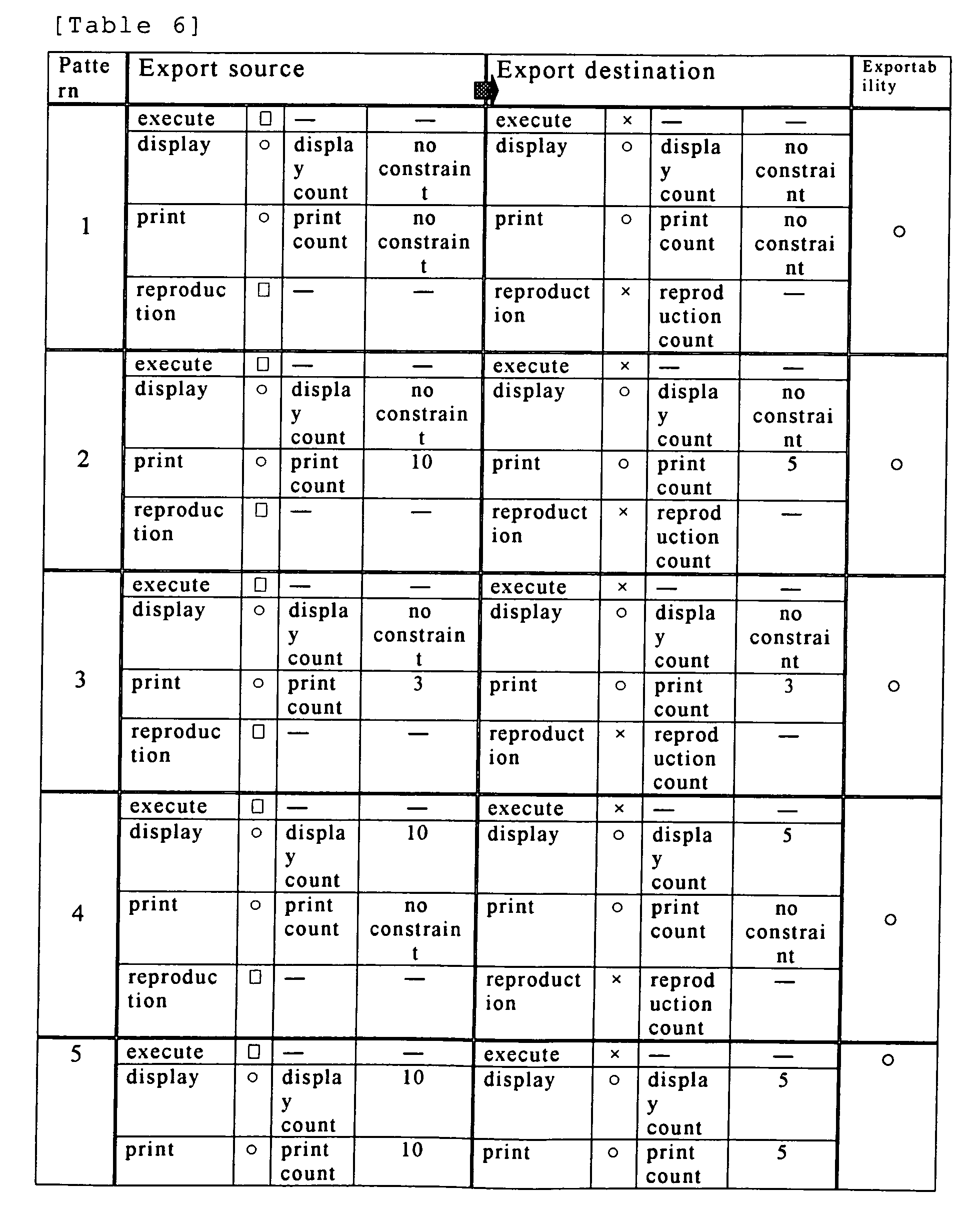

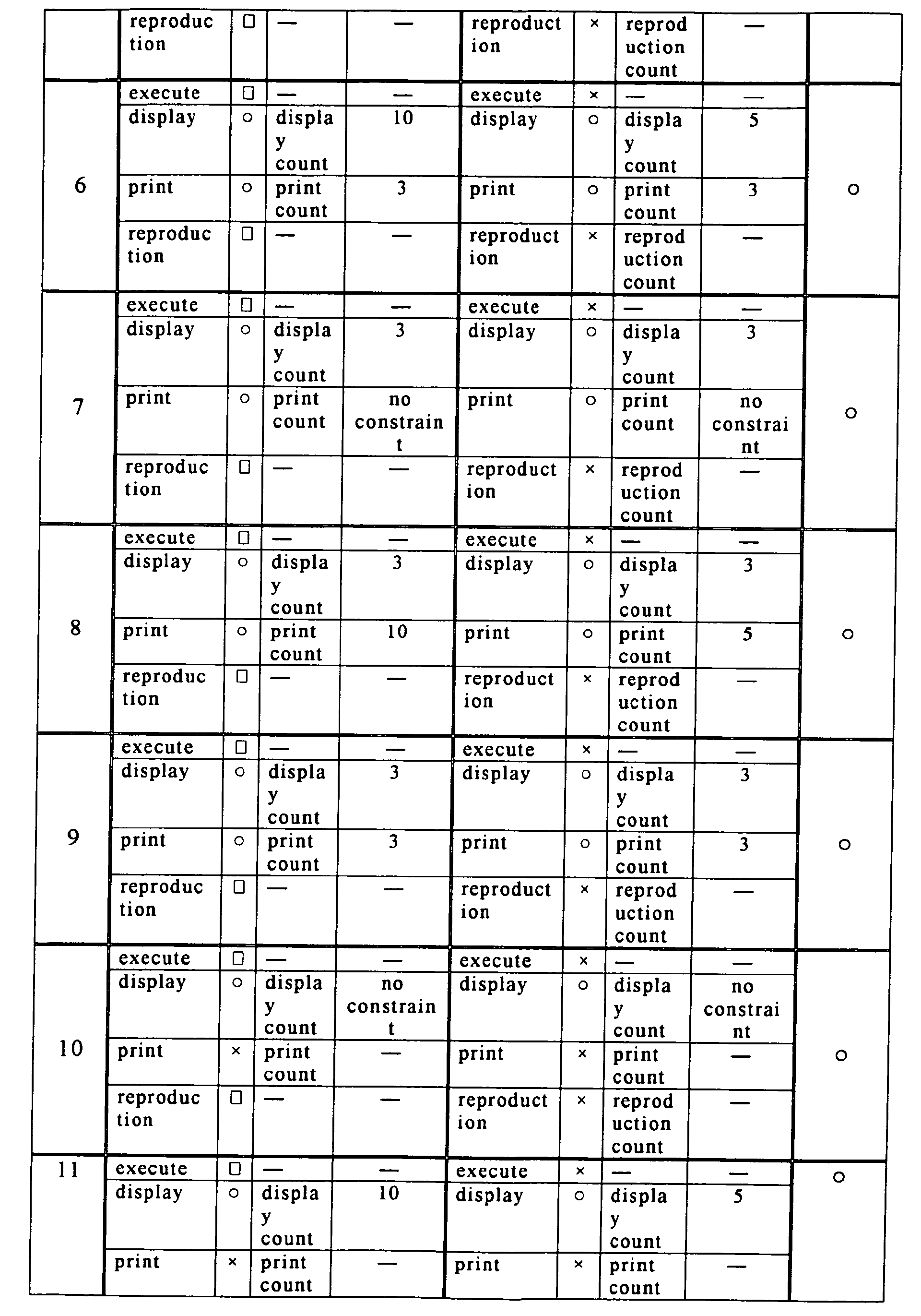

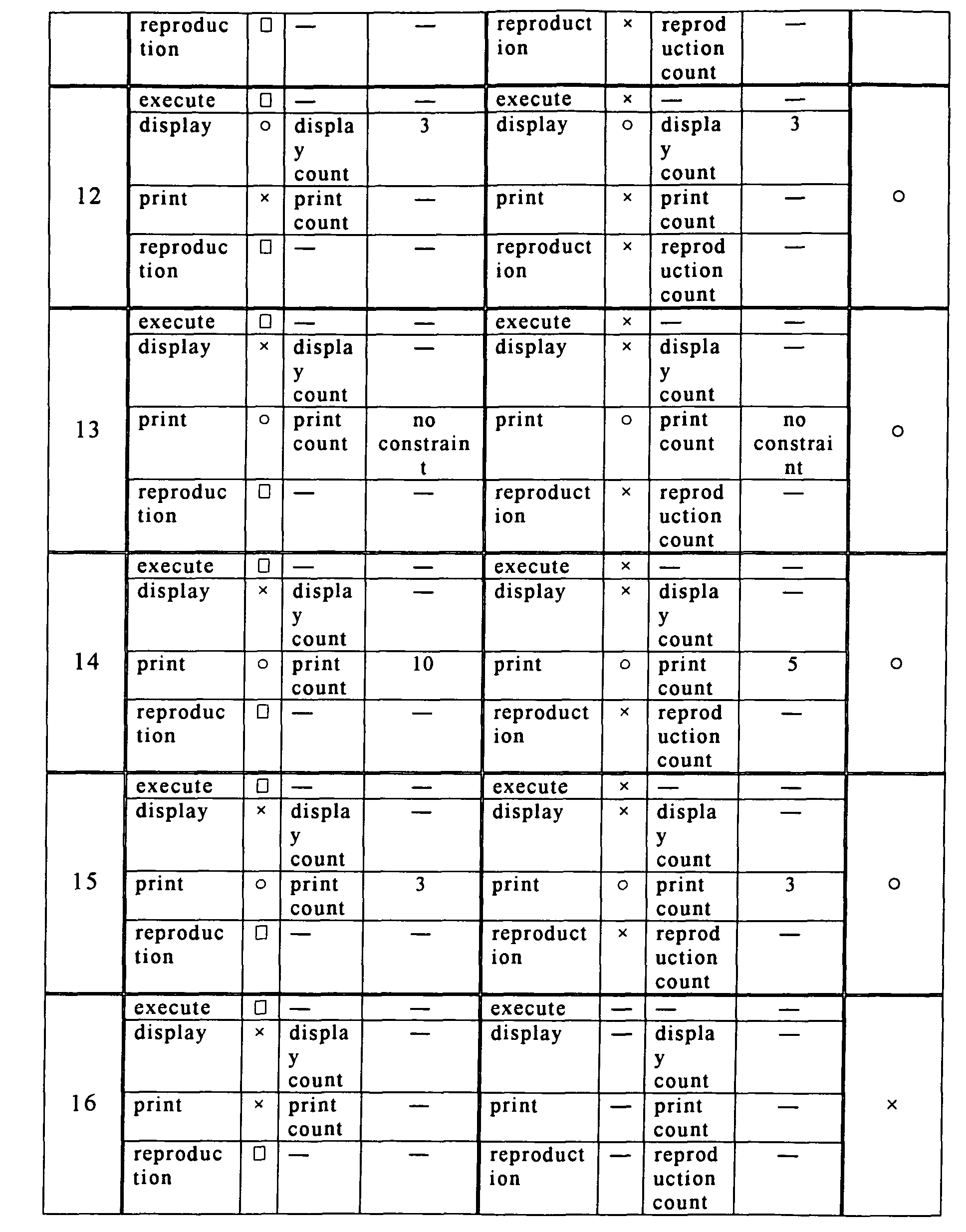

The matrix table in Table 6 shows an example where both the export source DRM and the export destination DRM adopt "2-E: Right permission + usage constraint model (two types of method of use are individually supported)" in Table 2 and both the export source DRM and the export destination DRM can apply handling permissioninformation and constraint information. More specifically, the example in Table 6 is an example of right data conversion processing where the export source DRM is a DRM to which four of "execute", "display", "print" and "reproduction" are applicable as the handling permission information and two of "display count" and "print count" are applicable as usage constraint information, while the export destination DRM is a DRM to which four of "execute", "display", "print" and "reproduction" are applicable as the handling permission information and three of "display count", "print count" and "reproduction count" are applicable as the usage constraint information. Furthermore, this example shows a case where "0 times (not available)/1 time/2 times/···/9 times/10 times/no constraint" can be set for the usage constraint information "display count" and "print count" at the export source DRM and "0 times(not available)/1 time/2 times/3 times/4 times/5 times/no constraint" can be set for the usage constraint information "display count", "print count" and "reproduction count" at the export destination DRM.

Pattern 1 shows an example where both pieces of the handling permission information on the two methods of use "display" and "print" available to digital contents to be exported at the export source DRM are set to "○: Usage permitted" and the usage constraint information on the methods of use "display" and "print" is set to "display count: No constraint" and "print count: No constraint". This case shows that when export is carried out to the export destination DRM, since the handling permission information for the two methods of use "display" and "print" is also applicable at the export destination DRM, and the usage constraint information "display count", "print count" on the handling permission information "display", "print" can realize a usage constraint equivalent to that at the export source, right data is exported, that is, indicating that export processing is "○: possible" by setting the setting contents of the handling permission information at the export destination DRM to "permitted", setting an equivalent usage constraint (in this case "no constraint") and setting all other handling permission information at the export destination DRM to "non-permitted". Furthermore, "×" in the table here denotes "×: Usage non-permitted", " 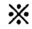 " in the table means that any one of "○: Usage permitted" or "×: Usage non-permitted" is selectable. "-" means that there is nothing to be set.

Pattern 2 shows an example where both pieces of the handling permission information for two methods of use "display" and "print" available to digital contents to be exported at the export source DRM are set to "○: Usage permitted" and usage constraint information for the respective methods of use "display" and "print" is set to "display count: No constraint", "print count:10 times". This case shows that when export is carried out to the export destination DRM, since the handling permission information on the two methods of use "display" and "print" are also applicable to the export destination DRM, and with regard to the usage constraint information "display count", "print count" on the handling permission information "display", "print", the usage constraint of the handling permission information on the method of use "display" at the export destination DRM can realize a usage constraint equivalent to that at the export source, the usage constraint of the handling permission information on the method of use "print" at the export destination DRM cannot realize a usage constraint equivalent to that at the export source and can make a setting in a direction in which usage constraint is tightened compared to the export source DRM, right data is exported, that is, the export processing is "○: possible" by setting the setting contents of the handling permission information for both methods of use "display" and "print" at the export destination DRM to "permitted", setting usage constraint information related to the handling permission information on the method of use "display" to a usage constraint equivalent at the export source DRM (in this case "no constraint"), setting the usage constraint information on the method of use "print" to the closest possible usage constraint content with a tightened usage constraint with respect to the export source DRM (in this case "5 times") and setting all other handling permission information at the export destination DRM to "non-permitted".

Pattern 3 shows an example where both pieces of the handling permission information on the two methods of use "display" and "print" available to digital contents to be exported at the export source DRM are set to "○: Usage permitted" and the usage constraint information on the respective methods of use "display" and "print" is set to "display count: No constraint", "print count: 3 times". This case shows that when export is carried out to the export destination DRM, since the handling permission information on the two methods of use "display" and "print" is also applicable at the export destination DRM and the usage constraint information "display count", "print count" on the handling permission information "display", "print" can realize a usage constraint equivalent to that at the export source, right data is exported, that is, the export processing is "○: possible" by setting the setting contents of the handling permission information at the export destination DRM to "permitted", setting an equivalent usage constraint (in this case "display count: No constraint", "print count: 3 times") and setting all other handling permission information at the export destination DRM to "non-permitted".

Pattern 4 shows an example where both pieces of the handling permission information on the two methods of use "display" and "print" available to digital contents to be exported at the export source DRM are set to "○: Usage permitted" and the usage constraint information of the respective methods of use "display" and "print" is set to "display count: 10 times", "print count: No constraint". This case shows that when export is carried out to the export destination DRM, since the handling permission information on the two methods of use "display" and "print" is also applicable at the export destination DRM, and with regard to the usage constraint information "display count", "print count" on the handling permission information "display", "print", the usage constraint of the handling permission information on the method of use "print" at the export destination DRM can realize a usage constraint equivalent to that at the export source DRM, the usage constraint of the handling permission information on the method of use "display" at the export destination DRM cannot realize a usage constraint equivalent to that at the export source DRM and can make a setting in a direction in which the usage constraint is tightened compared to the export source DRM, right data is exported, that is, the export processing is "○: possible" by setting the setting contents of the handling permission information on both methods of use "display" and "print" at the export destination DRM to "permitted", setting the setting contents of the usage constraint information of the handling permission information on the method of use "print" to a usage constraint equivalent to that at the export source (in this case "no constraint"), setting the setting contents of the usage constraint information for the handling permission information on the method of use "display" to the closest possible usage constraint content with a tightened usage constraint with respect to the export source (in this case "display count 5 times") and setting all other handling permission information at the export destination DRM to "non-permitted".

pattern 5 shows an example where both pieces of the handling permission information on the two methods of use "display" and "print" available to digital contents to be exported at the export source DRM are set to "○: Usage permitted" and the usage constraint information on the respective methods of use "display" and "print" is set to "display count: 10 times", "print count: 10 times". This case shows that when export is carried out to the export destination DRM, since the handling permission information on the two methods of use "display" and "print" is also applicable at the export destination DRM, the usage constraint information "display count", "print count" on the handling permission information "display", "print" at the export destination cannot realize a usage constraint equivalent to that at the export source and can make a setting in a direction in which the usage constraint is tightened compared to the export source DRM, right data is exported, that is, the export processing is "○: possible" by setting the setting contents of the handling permission information on both methods of use "display" and "print" at the export destination DRM to "permitted", setting the usage constraint information on the methods of use "display", "print" to the closest possible usage constraint content with a tightened usage constraint with respect to the export source DRM (in this case "5 times") and setting all other handling permission information at the export destination DRM to "non-permitted".

Pattern 6 shows an example where both pieces of the handling permission information on the two methods of use "display" and "print" available to digital contents to be exported at the export source DRM are set to "○: Usage permitted" and the usage constraint information on the respective methods of use "display" and "print" is set to "display count: 10 times", "print count: 3 times". This case shows that when export is carried out to the export destination DRM, since the handling permission information on the two methods of use "display" and "print" is also applicable at the export destination DRM, and with regard to the usage constraint information "display count", "print count" on the handling permission information "display", "print", the usage constraint of the handling permission information on the method of use "print" at the export destination DRM can realize a usage constraint equivalent to that at the export source, the usage constraint of the handling permission information on the method of use "display" at the export destination DRM cannot realize a usage constraint equivalent to that at the export source and can make a setting in a direction in which the usage constraint is tightened compared to the export source DRM, right data is exported, that is, the export processing is "○: possible" by setting the handling permission information on both methods of use "display" and "print" to "permitted", setting the usage constraint information for the handling permission information on the method of use "print" to a usage constraint equivalent to that at the export source DRM (in this case "3 times"), setting the usage constraint information on the method of use "display" to the closest possible usage constraint content with a tightened usage constraint with respect to the export source DRM (in this case "5 times") and setting all other handling permission information at the export destination DRM to "non-permitted".

Pattern 7 shows an example where both pieces of the handling permission information on the two methods of use "display" and "print" available to digital contents to be exported at the export source DRM are set to "○: Usage permitted" and the usage constraint information on the respective methods of use "display" and "print" is set to "display count: 3 times", "print count: No constraint". This case shows that when export is carried out to the export destination DRM, since the handling permission information on the two methods of use "display" and "print" is also applicable at the export destination DRM and the usage constraint information "display count", "print count" on the handling permission information "display", "print" can realize a usage constraint equivalent to that at the export source, right data is exported, that is, the export processing is "○: possible" by setting the setting contents of the handling permission information at the export destination DRM to "permitted", setting an equivalent usage constraint (in this case "display count: 3 times" "print count: No constraint") and setting all other handling permission information at the export destination DRM to "non-permitted".

Pattern 8 shows an example where both pieces of the handling permission information on the two methods of use "display" and "print" available to digital contents to be exported at the export source DRM are set to "○: Usage permitted" and the usage constraint information on the respective methods of use "display" and "print" is set to "display count: 3 times", "print count : 10 times". This case shows that when export is carried out to the export destination DRM, since the handling permission information on the two methods of use "display" and "print" is also applicable at the export destination DRM, and with regard to the usage constraint information "display count", "print count" on the handling permission information "display", "print", the usage constraint of the handling permission information on the method of use "display" at the export destination DRM can set a usage constraint equivalent to that at the export source DRM, the usage constraint of the handling permission information on the method of use "print" at the export destination DRM cannot realize a usage constraint equivalent to that at the export source DRM and can make a setting in a direction in which the usage constraint is tightened compared to the export source DRM, right data is exported, that is, the export processing is "○: possible" by setting the setting contents of the handling permission information on the methods of use "display" and "print" at the export destination DRM to "permitted", setting the usage constraint information for the handling permission information on the method of use "display" to a usage constraint equivalent to that at the export source DRM (in this case "3 times"), setting the usage constraint information on the method of use "print" to the closest possible usage constraint content with a tightened usage constraint with respect to the export source DRM (in this case "5 times") and setting all other handling permission information at the export destination DRM to "non-permitted".

Pattern 9 shows an example where both pieces of the handling permission information on the two methods of use "display" and "print" available to digital contents to be exported at the export source DRM are set to "○: Usage permitted" and the usage constraint information on the respective methods of use "display" and "print" is set to "display count: 3 times", "print count: 3 times". This case shows that when export is carried out to the export destination DRM, since the handling permission information on the two methods of use "display" and "print" is also applicable at the export destination DRM and the usage constraint information "display count", "print count" on the handling permission information "display", "print" can realize a usage constraint equivalent to that at the export source, right data is exported, that is, the export processing is "○: possible" by setting the setting contents of the handling permission information at the export destination DRM to "permitted", setting an equivalent usage constraint (in this case "display count: 3 times" "print count: 3 times") and setting all other handling permission information at the export destination DRM to "non-permitted".

Pattern 10 shows an example where the handling permission information on the method of use "display" available to digital contents to be exported at the export source DRM is set to "○: Usage permitted", the handling permission information on the method of use "print" is set to "×: Usage non-permitted" and the usage constraint information on the method of use "display" is set to "display count: No constraint". This case shows that when export is carried out to the export destination DRM, since the handling permission information on the method of use "display" is also applicable at the export destination DRM and the usage constraint of the handling permission information on the method of use "display" at the export destination DRM can realize a usage constraint equivalent to that at the export source DRM, right data is exported, that is, the export processing is "○: possible" by inheriting the setting contents of the handling permission information on the method of use "display", "print" at the export source DRM (in this case, the setting contents of the handling permission information on the method of use "display" are set to "permitted", the setting contents of the handling permission information on the method of use "print" are set to "non-permitted"), setting the setting contents of the usage constraint information related to the handling permission information on the method of use "display" at the export destination DRM to a usage constraint equivalent to that at the export source DRM (in this case "no constraint" is set) and setting all other handling permission information at the export destination DRM to "non-permitted".

Pattern 11 shows an example where the handling permission information on the method of use "display" available to digital contents to be exported at the export source DRM is set to "○: Usage permitted", the handling permission information on the method of use "print" is set to "×: Usage non-permitted" and the usage constraint information on the method of use "display" is set to "display count: 10 times". This case shows that when export is carried out to the export destination DRM, since the handling permission information on the method of use "display" is also applicable at the export destination DRM, the usage constraint of the handling permission information on the method of use "display" at the export destination DRM cannot realize a usage constraint equivalent to that at the export source DRM and can make a setting in a direction in which the usage constraint is tightened compared to the export source DRM, right data is exported, that is, the export processing is "○: possible" by inheriting the setting contents of the handling permission information on the methods of use "display" and "print" at the export source DRM (in this case, the setting contents of the handling permission information on the method of use "display" are set to "permitted", the setting contents of the handling permission information on the method of use "print" are set to "non-permitted"), setting the setting contents of the usage constraint information related to the handling permission information on the method of use "display" at the export destination DRM to the closest possible usage constraint content with a tightened usage constraint with respect to the export source DRM (in this case "5 times" is set) and setting all other handling permission information at the export destination DRM to "non-permitted".

Pattern 12 shows an example where the handling permission information on the method of use "display" available to digital contents to be exported at the export source DRM is set to "○: Usage permitted", the handling permission information on the method of use "print" is set to "×: Usage non-permitted" and the usage constraint information on the method of use "display" is set to "display count: 3 times". This case shows that when export is carried out to the export destination DRM, since the handling permission information on the method of use "display" is also applicable at the export destination DRM and the usage constraint of the handling permission information on the method of use "display" at the export destination DRM can realize a usage constraint equivalent to that at the export source DRM, right data is exported, that is, the export processing is "○: possible" by inheriting the setting contents of the handling permission information on the methods of use "display", "print" at the export source DRM (in this case, the setting contents of the handling permission information on the method of use "display" are set to "permitted" and the setting contents of the handling permission information on the method of use "print" are set to "non-permitted"), setting the setting contents of the usage constraint information on the handling permission information on the method of use "display" at the export destination DRM to a usage constraint equivalent to that at the export source DRM (in this case "3 times" is set) and setting all other handling permission information at the export destination DRM to "non-permitted".

Pattern 13 shows an example where the handling permission information on the method of use "print" available to digital contents to be exported at the export source DRM is set to "○: Usage permitted", the handling permission information on the method of use "display" is set to "×: Usage non-permitted" and the usage constraint information on the method of use "print" is set to "print count: No constraint". This case shows that when export is carried out to the export destination DRM, since the handling permission information on the method of use "display" is also applicable at the export destination DRM and the usage constraint of the handling permission information on the method of use "print" at the export destination DRM can realize a usage constraint equivalent to that at the export source DRM, right data is exported, that is, the export processing is "○: possible" by inheriting the setting contents of the handling permission information on the method of use "display", "print" at the export source DRM (in this case, the setting contents of the handling permission information on the method of use "print" are set to "permitted" and the setting contents of the handling permission information on the method of use "display" are set to "non-permitted"), setting the setting contents of the usage constraint information on the handling permission information on the method of use "print" at the export destination DRM to a usage constraint equivalent to that at the export source DRM (in this case "no constraint" is set) and setting all other handling permission information at the export destination DRM to "non-permitted".

Pattern 14 shows an example where only the handling permission information on the method of use "print" available to digital contents to be exported at the export source DRM is set to "○: Usage permitted", the handling permission information on the method of use "display" is set to "×: Usage non-permitted" and the usage constraint information on the method of use "print" is set to "print count: 10 times". This case shows that when export is carried out to the export destination DRM, since the handling permission information on the method of use "print" is also applicable at the export destination DRM, the usage constraint of the handling permission information on the method of use "print" at the export destination DRM cannot realize a usage constraint equivalent to that at the export source DRM and can make a setting in a direction in which the usage constraint is tightened compared to the export source DRM, right data is exported, that is, the export processing is "○: possible" by inheriting the setting contents of the handling permission information on the method of use "display", "print" at the export source DRM (in this case, the setting contents of the handling permission information on the method of use "print" are set to "permitted" and the setting contents of the handling permission information on the method of use "display" are set to "non-permitted"), setting the setting contents of the usage constraint information on the handling permission information on the method of use "print" at the export destination DRM to the closest possible usage constraint content with a tightened usage constraint with respect to the export source DRM (in this case "5 times" is set) and setting all other handling permission information at the export destination DRM to "non-permitted".

Pattern 15 shows an example where the handling permission information on the method of use "print" available to digital contents to be exported at the export source DRM is set to "○: Usage permitted", the handling permission information on the method of use "display" is set to "×: Usage non-permitted" and the usage constraint information on the method of use "print" is set to "print count: 3 times". This case shows that when export is carried out to the export destination DRM, since the handling permission information on the method of use "print" is also applicable at the export destination DRM and the usage constraint of the handling permission information on the method of use "print" at the export destination DRM can realize a usage constraint equivalent to that at the export source DRM, right data is exported, that is, the export processing is "○: possible" by inheriting the setting contents of the handling permission information on the methods of use "display", "print" at the export source DRM (in this case, the setting contents of the handling permission information on the method of use "print" are set to "permitted" and the setting contents of the handling permission information on the method of use "display" are set to "non-permitted"), setting the setting contents of the usage constraint information on the handling permission information on the method of use "print" at the export destination DRM to a usage constraint equivalent to that at the export source DRM (in this case "3 times" is set) and setting all other handling permission information at the export destination DRM to "non-permitted".

Pattern 16 shows that both pieces of the handling permission information on the method of use "display" and "print" at the export source DRM are set to "×: Usage non-permitted", and therefore right data is not exported, that is, the export processing is "×: impossible".

In this case, when wallpaper contents are exported from the export source DRM to the export destination DRM, case 2-53 is applied to the conversion rule for converting right data, (there are two types (X, Y) of method of use available to "digital contents to be exported", "the handling permission information and the constraint information for the handling permission information are applicable at both the export source DRM and the export destination DRM") "1. When both pieces of the handling permission information on the two methods of use (X, Y) are "permitted" at the export source, 1-1. When the usage constraint information on the handling permission information on both methods of use X and Y at the export destination DRM can realize a usage constraint equivalent to that at the export source, right data is converted and exported so that the handling permission information contents of both methods of use X and Y are set to "permitted" for the export destination and the usage constraint information on the handling permission information on both methods of use X and Y at the export destination is set to a usage constraint equivalent to that at the export source (however, all other handling permission information at the export destination is set to "non-permitted")" is assumed.

Furthermore, as the conversion rule in case 2-53, "1-2. When the usage constraint information on the handling permission information on the method of use X at the export destination DRM can realize a usage constraint equivalent to that at the export source and the usage constraint information on the handling permission information on the method of use Y at the export destination DRM cannot realize a usage constraint equivalent to that at the export source, 1-2-1. When the usage constraint information on the handling permission information on the method of use Y at the export destination DRM allows a description in a direction in which the usage constraint is tightened compared to the export source, right data is converted and exported so that the handling permission information contents of methods of use X and Y are set to "permitted" for the export destination, the usage constraint information content on the handling permission information on the method of use X at the export destination is set to a usage constraint equivalent to that at the export source and the usage constraint information content on the handling permission information on the method of use Y is set to the closest possible usage constraint content with a tightened usage constraint with respect to the export source (however, all other handling permission information at the export destination is set to "non-permitted")" is applied.

Furthermore, as the conversion rule in case 2-53, "1-2-2. When the usage constraint information on the handling permission information on the method of use Y at the export destination DRM does not allow a description in a direction in which the usage constraint is tightened compared to the export source, right data is converted and exported so that only the handling permission information content of the method of use X is set to "permitted" for the export destination and the usage constraintinformationcontentonthehandlingpermission information on the method of use X at the export destination is set to a usage constraint equivalent to that at the export source (however, all other handling permission information at the export destination is set to "non-permitted")" is applied.

Furthermore, as the conversion rule in case 2-53, "1-3. When the usage constraint information on the handling permission information on the method of use Y at the export destination DRM can realize a usage constraint equivalent to that at the export source and the usage constraint information on the handling permission information on the method of use X at the export destination DRM cannot realize a usage constraint equivalent to that at the export source, 1-3-1. When the usage constraint information on the handling permission information on the method of use X at the export destination DRM allows a description in a direction in which the usage constraint is tightened compared to the export source, right data is converted and exported so that the handling permission information contents of both methods of use X and Y are set to "permitted" for the export destination, the usage constraint information content on the handling permission information on the method of use Y at the export destination is set to a usage constraint equivalent to that at the export source and the usage constraint information content for the handling permission information on the method of use X is set to the closest possible usage constraint content with a tightened usage constraint with respect to the export source (however, all other handling permission information at the export destination is set to "non-permitted")" is applied.

Furthermore, as the conversion rule in case 2-53, "1-3-2. When the usage constraint information on the handling permission information on the method of use X at the export destination DRM does not allow a description in a direction in which the usage constraint is tightened compared to the export source, right data is converted and exported so that only the handling permission information content of the method of use Y is set to "permitted" for the export destination and the usage constraintinformationcontentonthehandlingpermission information on the method of use Y at the export destination is set to a usage constraint equivalent to that at the export source (however, all other handling permission information at the export destination is set to "non-permitted")" is applied.

Furthermore, as the conversion rule in case 2-53, "1-4. When the usage constraint information on the handling permission information on both methods of use X and Y at the export destination DRM cannot realize a usage constraint equivalent to that at the export source, 1-4-1. When the usage constraint information on the handling permission information on both methods of use X and Y at the export destination DRM allows a description in a direction in which the usage constraint is tightened compared to the export source, right data is converted and exported so that the handling permission information contents of both methods of use X and Y are set to "permitted" for the export destination, the usage constraint information content on the handling permission information on the methods of use X and Y at the export destination is set to the closest possible usage constraint content with a tightened usage constraint with respect to the export source (however, all other handling permission information at the export destination is set to "non-permitted")" is applied.

Furthermore, as the conversion rule in case 2-53, "1-4-2. When the usage constraint information on the handling permission information on the method of use X at the export destination DRM allows a description in a direction in which the usage constraint is tightened compared to the export source and the usage constraint information on the handling permission information on the method of use Y at the export destination DRM does not allow a description in a direction in which the usage constraint is tightened compared to the export source, right data is converted and exported so that only the handling permission information content of the method of use X is set to "permitted" for the export destination and the usage constraint information content of the handling permission information on the method of use X at the export destination is set to the closest possible usage constraint content with a tightened usage constraint with respect to the export source (however, all other handling permission information at the export destination is set to "non-permitted")" is applied.

Furthermore, as the conversion rule in case 2-53, "1-4-3. When the usage constraint information on the handling permission information on the method of use Y at the export destination DRM allows a description in a direction in which the usage constraint is tightened compared to the export source and the usage constraint information on the handling permission information on the method of use X at the export destination DRM does not allow a description in a direction in which the usage constraint is tightened compared to the export source, right data is converted and exported so that only the handling permission information content of the method of use Y is set to "permitted" for the export destination and the usage constraint information content of the handling permission information on the method of use Y at the export destination is set to the closest possible usage constraint content with a tightened usage constraint with respect to the export source (however, all other handling permission information at the export destination is set to "non-permitted")" is applied.

Furthermore, as the conversion rule in case 2-53, "1-4-4. When the usage constraint information on the handling permission information on both methods of use X and Y at the export destination DRM does not allow a description in a direction in which the usage constraint is tightened compared to the export source, right data is not exported" is applied.

Furthermore, as the conversion rule in case 2-53, "2. When only the handling permission information on the method of use X is "permitted" at the export source, 2-1. When the usage constraint information on the handling permission information on the method of use X at the export destination DRM can realize a usage constraint equivalent to that at the export source, right data is converted and exported so that the handling permission information content of the method of use X is set to "permitted" for the export destination and the usage constraint information content on the handling permission information on the method of use X at the export destination is set to a usage constraint equivalent to that at the export source (however, all other handling permission information at the export destination is set to "non-permitted")" is applied.

Furthermore, as the conversion rule in case 2-53, "2-2. When the usage constraint information on the handling permission information on the method of use X at the export destination DRM cannot realize a usage constraint equivalent to that at the export source, 2-2-1. When the usage constraint information on the handling permission information on the method of use X at the export destination DRM allows a description in a direction in which the usage constraint is tightened compared to the export source, right data is converted and exported so that the handling permission information content of the method of use X is set to "permitted" for the export destination and the usage constraint information content on the handling permission information on the method of use X at the export destination is set to the closest possible usage constraint content with a tightened usage constraint with respect to the export source (however, all other handling permission information at the export destination is set to "non-permitted")" is applied.

Furthermore, as the conversion rule in case 2-53, "2-2-2. When the usage constraint information on the handling permission information on the method of use X at the export destination DRM does not allow a description in a direction in which the usage constraint is tightened compared to the export source, right data is not exported" is applied.

Furthermore, as the conversion rule in case 2-53, "3. When only the handling permission information on the method of use Y is "permitted" at the export source, 3-1. When the usage constraint information on the handling permission information on the method of use Y at the export destination DRM can realize a usage constraint equivalent to that at the export source, right data is converted and exported so that the handling permission information content of the method of use Y is set to "permitted" for the export destination and the usage constraint information content on the handling permission information on the method of use Y at the export destination is set to a usage constraint equivalent to that at the export source (however, all other handling permission information at the export destination is set to "non-permitted")" is applied.

Furthermore, as the conversion rule in case 2-53, "3-2. When the usage constraint information on the handling permission information on the method of use Y at the export destination DRM cannot realize a usage constraint equivalent to that at the export source, 3-2-1. When the usage constraint information on the handling permission information on the method of use Y at the export destination DRM allows a description in a direction in which the usage constraint is tightened compared to the export source, right data is converted and exported so that the handling permission information content of the method of use Y is set to "permitted" for the export destination and the usage constraint information content of the handling permission information on the method of use Y at the export destination is set to the closest possible usage constraint content with a tightened usage constraint with respect to the export source (however, all other handling permission information at the export destination is set to "non-permitted")" is applied.

Furthermore, as the conversion rule in case 2-53, "3-2-2. When the usage constraint information on the handling permission information on the method of use Y at the export destination DRM does not allow a description in a direction in which the usage constraint is tightened compared to the export source, right data is not exported" is applied.

Furthermore, as the conversion rule in case 2-53, "4. When both pieces of the handling permission information on the two methods of use (X, Y) are "non-permitted" at the export source, right data is not exported" is applied.

Then, the right data conversion processing in case 2-53 shown in Table 2 executed based on the handling permission information and setting contents of the usage constraint information at the export source DRM in the matrix table shown in Table 6 will be explained with reference to the flow charts shown in FIG.19 to FIG.25. Here, this right data conversion processing is executed by the contents conversion section 27. Furthermore, in the following explanations, suppose the method of use X is "display" and the method of use Y is "print".

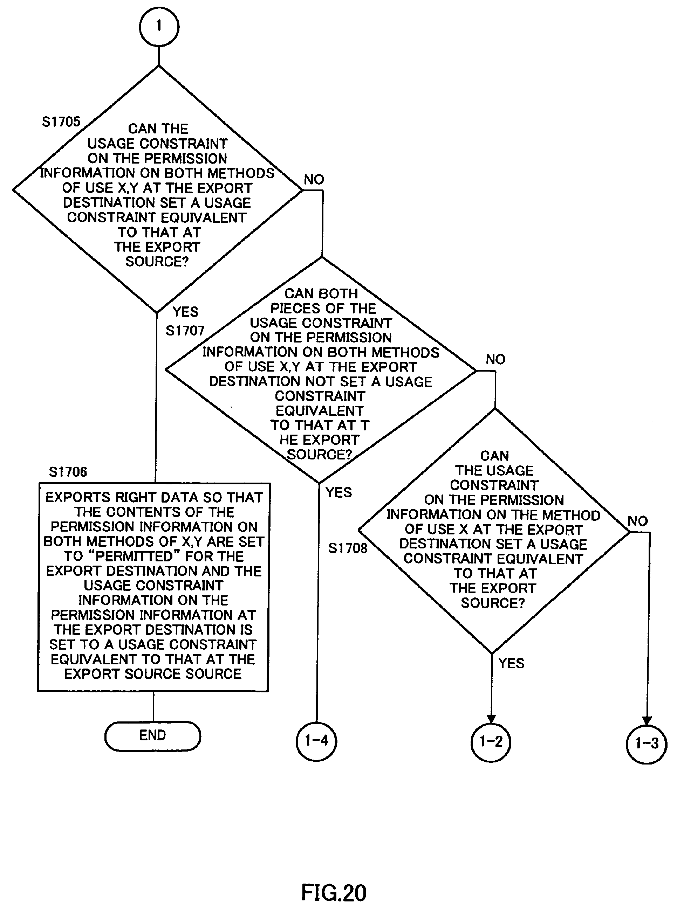

The contents conversion section 27 first decides whether both pieces of the handling permission information indicating two methods of use X "display" and Y "print" available to the wallpaper contents are set to "permitted" at the export source (FIG.19: step S1701) or not. In patterns 1 to 9 in Table 6, the handling permission information "○: Usagepermitted" at the export source is set for both methods of use "display/print" of wallpaper contents. For this reason, the contents conversion section 27 decides that both methods are set to "permitted" (step S1701: YES) and moves on to step S1705 in FIG.20.

Furthermore, when it decides in step S1701 in FIG.17 that the handling permission information indicating none of two methods of use X "display", Y "print" is set to "permitted" at the export source (patterns 10 to 16 in Table 6) (step S1701: NO), the contents conversion section 27 moves on to step S1702, decides whether both pieces of the handling permission information on the two methods of use X, Y available to wallpaper contents are set to "non-permitted" at the export source or not. In patterns 10 to 15 out of patterns 10 to 16 in Table 6, one or both of the handling permission information indicating the two methods of use "display/print" of wallpaper contents is/are set to "○: Usage permitted". For this reason, the contents conversion section 27 decides that the handling permission information indicating the two methods of use "display/print" are not set to "non-permitted" (step S1702: NO) and moves on to step S1704.

Furthermore, when it decides that both pieces of the handling permission information indicating the two methods of use "display/print" are set to "non-permitted" (pattern 16 in Table 6) (step S1702: YES), the contents conversion section 27 moves on to step S1703 and terminates this processing without exporting the right data.

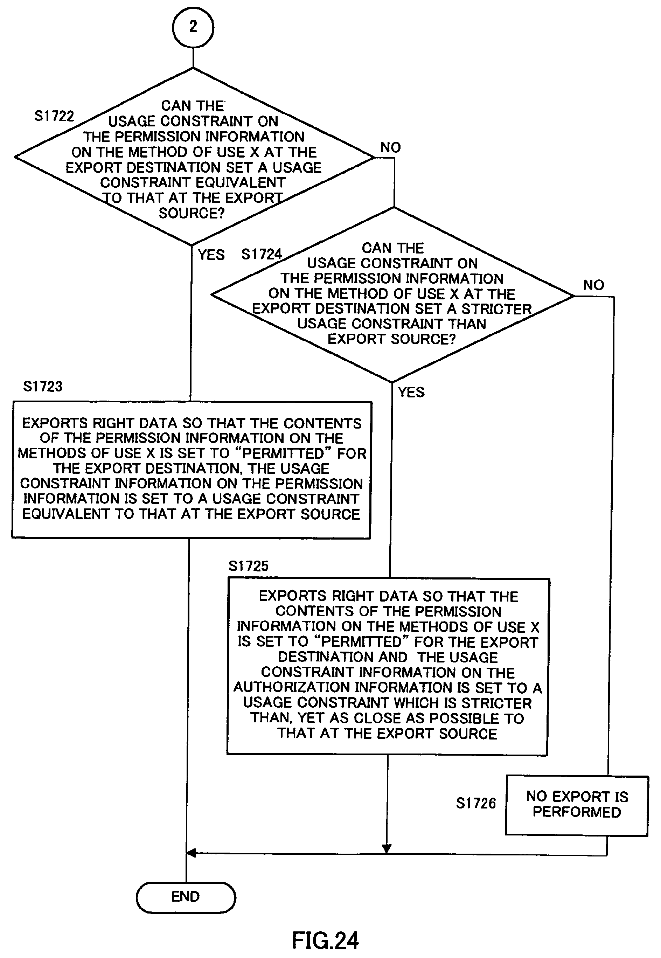

In step S1704, the contents conversion section 27 decides whether the handling permission information indicating the method of use X "display" available to wallpaper contents is set to "permitted" at the export source or not. In patterns 10 to 12 out of patterns 10 to 15 in Table 6, the handling permission information indicating the method of use X "display" is set to "permitted" at the export source. For this reason, the contents conversion section 27 decides that the handling permission information indicating the method of use X "display" is set to "permitted" at the export source (step S1704: YES) and moves on to step S1722 in FIG.24.

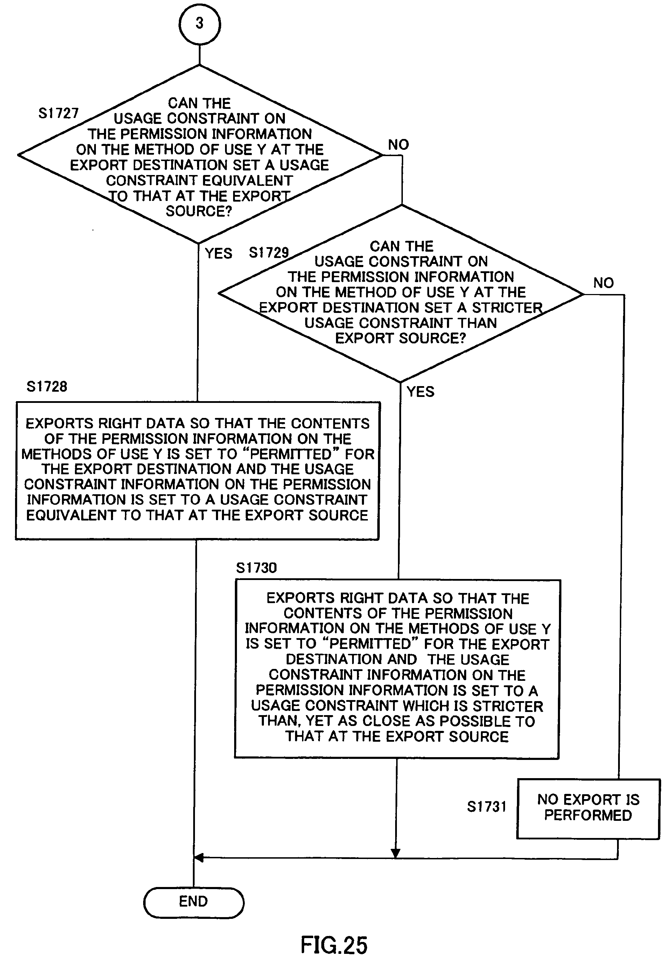

Furthermore, when it decides that the handling permission information indicating the method of use X "display" is not set to "permitted" at the export source (patterns 13 to 15 in Table 6) (step S1704: NO), the contents conversion section 27 moves on to step S1727 in FIG.25.

Furthermore, when it decides in step S1701 in FIG.19 that both pieces of the handling permission information indicating the methods of use X, Y are set to "permitted" at the export source (patterns 1 to 9 in Table 6) (step S1701: YES), the contents conversion section 27 decides whether the usage constraint information on the handling permission information indicating both methods of use X, Y at the export destination can set a usage constraint equivalent to that at the export source or not in step S1705 in FIG.20. For example, in pattern 1 in Table 6, the usage constraint information "display count/print count" at the export source is set to "no constraint" for the two methods of use "display/print" of wallpaper contents, and it is likewise possible to set "no constraint" at the export destination. For this reason, the contents conversion section 27 decides that an equivalent usage constraint can be set (step S1705: YES) and moves on to step S1706. (Patterns 3, 7, 9 in Table 6 also correspond to this case).

In step S1706, the contents conversion section 27 converts and exports right data so that the setting contents of the handling permission information on both methods of use X, Y are set to "permitted" for the export destination, the usage constraint information on the handling permission information on both methods of use X, Y at the export destination is set to a usage constraint equivalent to that at the export source and all handling permission information at the export destination other than the relevant handling permission information is set to "non-permitted".

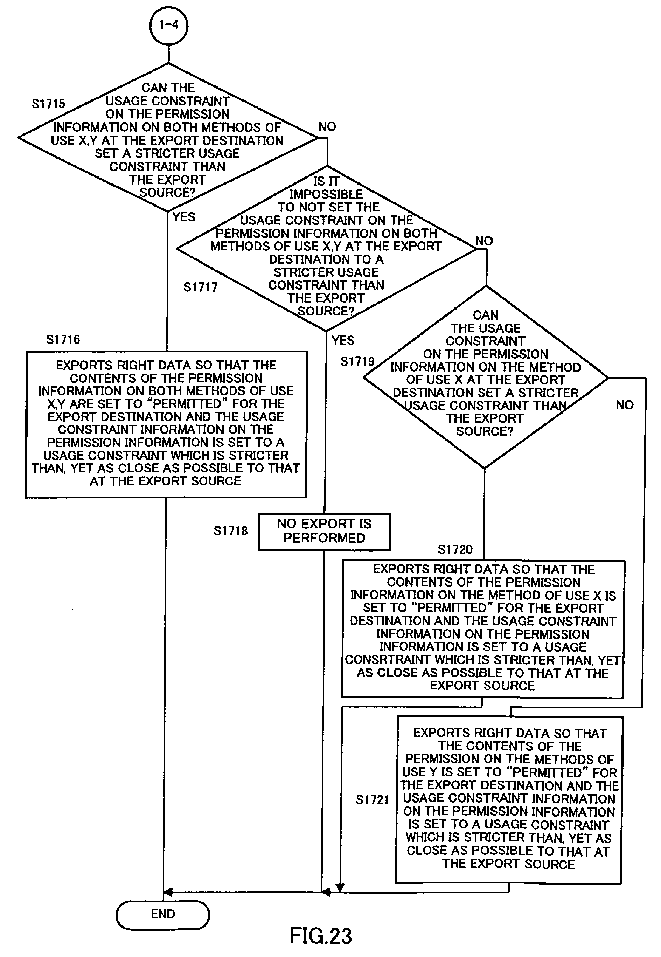

Furthermore, when it decides in step S1705 in FIG.20 that both pieces of the usage constraint information cannot set the same usage constraint (e.g., pattern 2 in Table 6) (step S1705: NO), the contents conversion section 27 moves on to step S1707. In step S1707, the contents conversion section 27 decides whether both pieces of the usage constraint information on the handling permission information indicating the methods of use X, Y at the export destination can set a usage constraint equivalent to that at the export source or not. When it decides that both pieces of usage constraint information cannot set an equivalent usage constraint (e.g., pattern 5 in Table 6) (step S1707: YES), the contents conversion section 27 moves on to step S1715 in FIG.23.

Furthermore, when it decides in step S1707 in FIG.20 that it is not impossible to set both pieces of usage constraint information to an equivalent usage constraint (e.g., patterns 2, 4, 6, 8 in Table 6) (step S1707: NO), the contents conversion section 27 moves on to step S1708. In step S1708, the contents conversion section 27 decides whether the usage constraint information on the handling permission information indicating the method of use X "display" at the export destination can set a usage constraint equivalent to that at the export source or not.

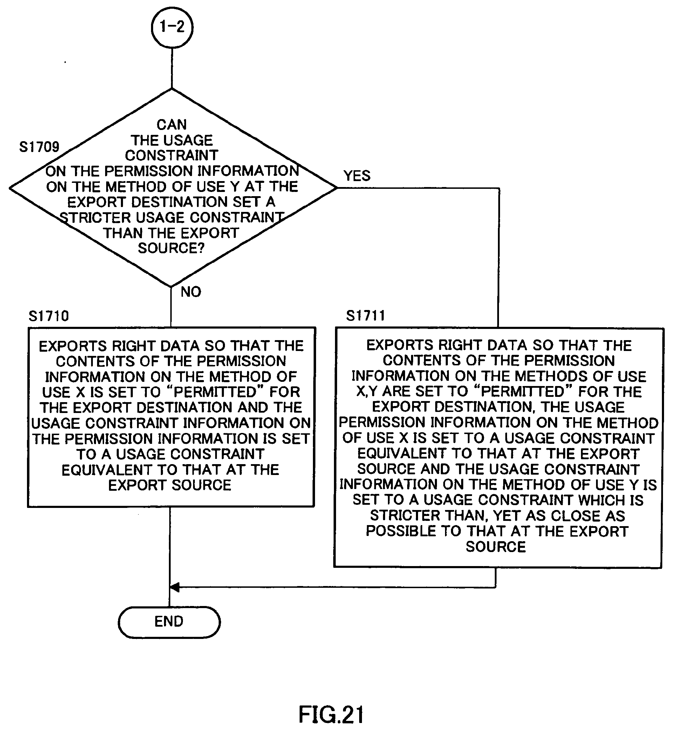

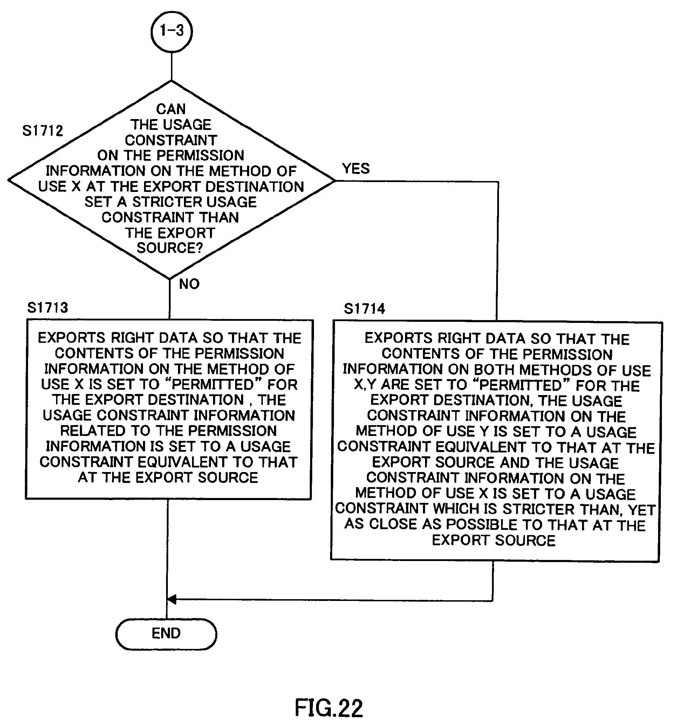

When it decides in step S1708 in FIG.20 that a usage constraint equivalent to that at the export source can be set (e.g., patterns 2, 8 in Table 6) (step S1708: YES), the contents conversion section 27 moves on to step S1709 in FIG.21. Furthermore, when it decides in step S1708 in FIG.20 that a usage constraint equivalent to that at the export source cannot be set (e.g., patterns 4, 6 in Table 6) (step S1708: NO), the contents conversion section 27 moves on to step S1712 in FIG.22.

Then, in step S1709 in FIG.21, the contents conversion section 27 decides whether the usage constraint information on the handling permission information indicating the method of use Y "print" at the export destination can set a stricter usage constraint than the export source or not. For example, in pattern 2 in Table 6, for the usage constraint "print count: 10" on the handling permission information indicating the method of use Y "print" at the export source, usage constraint information "print count: 5" can be set at the export destination. For this reason, the contents conversion section 27 decides that a stricter usage constraint than the export source can be set (step S1709: YES) and moves on to step S1711 (pattern 8 in Table 6 also corresponds to this case).

In step S1711, the contents conversion section 27 converts and exports right data so that the setting contents of the handling permission information indicating the methods of use X, Y are set to "permitted" for the export destination, the usage constraint information on the method of use X at the export destination is set to a usage constraint equivalent to that at the export source, the usage constraint information on the method of use Y at the export destination is set to a usage constraint which is stricter than, yet as close as possible to that at the export source and all handling permission information at the export destination other than the relevant permission information is set to "non-permitted".

Furthermore, when it decides in step S1709 in FIG.21 that a stricter usage constraint than the export source cannot be set (step S1709: NO), the contents conversion section 27 moves on to step S1710. In step S1710, the contents conversion section 27 converts and exports right data so that the setting contents of the handling permission information indicating the method of use X are set to "permitted" for the export destination, the usage constraint information on the handling permission information indicating the method of use X is set to a usage constraint equivalent to that at the export source and all handling permission information at the export destination other than the relevant handling permission information is set to "non-permitted".

Then, the case where the contents conversion section 27 decides "NO" in step S1708 in FIG.20 and then moves on to step S1712 in FIG.22 will be described. In step S1712, the contents conversion section 27 decides whether the usage constraint information on the handling permission information indicating the method of use X at the export destination can set a stricter usage constraint than the export source or not. For example, in pattern 4 in Table 6, for the usage constraint "display count: 10" on the handling permission information indicating the method of use X "display" at the export source, the usage constraint information at the export destination can set "display count: 5". For this reason, the contents conversion section 27 decides that a stricter usage constraint than the export source can be set (step S1712: YES) and moves on to step S1714. (Pattern 6 in Table 6 also corresponds to this case.)

In step S1714, the contents conversion section 27 converts and exports right data so that the setting contents of the handling permission information indicating methods of use X, Y are set to "permitted" for the export destination, the usage constraint information related to the method of use Y at the export destination is set to a usage constraint equivalent to that at the export source, the usage constraint information related to the method of use X at the export destination is set to a usage constraint which is stricter than, yet as close as possible to that at the export source and all handling permission information at the export destination other than the relevant handling permission information is set to "non-permitted".

Furthermore, when it decides in step S1712 in FIG.22 that a stricter usage constraint than the export source cannot be set (step S1712: NO), the contents conversion section 27 moves on to step S1713. In step S1713, the contents conversion section 27 converts and exports right data so that the setting contents of the handling permission information indicating the method of use Y is set to "permitted" for the export destination, the usage constraint information on the handling permission information indicating the method of use Y is set to a usage constraint equivalent to that at the export source and all handling permission information at the export destination other than the relevant handling permission information is set to "non-permitted".

Then, the case where the contents conversion section 27 decides "NO" in step S1707 in FIG.20 and then moves on to step S1715 in FIG.23 will be described. In step S1715, the contents conversion section 27 decides whether the usage constraint information on the handling permission information indicating both methods of use X, Y at the export destination can set a stricter usage constraint than the export source.

When it decides that a stricter usage constraint than the export source can be set (e.g., pattern 5 in Table 6) (step S1715: YES), the contents conversion section 27 moves on to step S1716. In step S1716, the contents conversion section 27 converts and exports right data so that the setting contents of the handling permission information indicating the methods of use X, Y are set to "permitted" for the export destination, the usage constraint information on the handling permission information on both methods of use X, Y at the export destination is set to a usage constraint which is stricter than, yet as close as possible to that at the export source and all handling permission information at the export destination other than the relevant handling permission information is set to "non-permitted".

Furthermore, when it decides in step S1715 in FIG.23 that the usage constraint information on the handling permission information indicating the methods of use X, Y at the export destination cannot set a stricter usage constraint than the export source (step S1715: NO), the contents conversion section 27 moves on to step S1717. In step S1717, the contents conversion section 27 decides whether the usage constraint information on the handling permission information indicating both methods of use X, Y at the export destination is unable to set a stricter usage constraint than the export source or not.

When it decides that the usage constraint information on the handling permission information indicating the methods of use X, Y at the export destination is unable to set a stricter usage constraint than the export source (step S1717: YES), the contents conversion section 27 moves on to step S1718 and does not export right data. Furthermore, when it decides that the usage constraint information on the handling permission information indicating both methods of use X, Y at the export destination is not unable to set a stricter usage constraint than the export source (step S1717: NO), the contents conversion section 27 moves on to step S1719.

In step S1719, the contents conversion section 27 decides whether the usage constraint information on the handling permission information indicating the method of use X at the export destination can set a stricter usage constraint than the export source or not. When it decides that a stricter usage constraint than the export source can be set (step S1719: YES), the contents conversion section 27 moves on to step S1720.

In step S1720, the contents conversion section 27 converts and exports right data so that the setting contents of the handling permission information indicating the method of use X is set to "permitted" for the export destination, the usage constraint information on the handling permission information indicating the method of use X is set to a usage constraint which is stricter than, yet as close as possible to that at the export source and all handling permission information at the export destination other than the relevant handling permission information is set to "non-permitted".

Furthermore, when it decides in step S1719 in FIG.23 that the usage constraint information on the handling permission information indicating the method of use X at the export destination cannot set a stricter usage constraint than the export source (step S1719: NO), the contents conversion section 27 moves on to step S1721.

In step S1721, the contents conversion section 27 converts and exports right data so that the setting contents of the handling permission information indicating the method of use Y are set to "permitted" for the export destination, the usage constraint information related to the handling permission information indicating the method of use Y is set to a usage constraint which is stricter than, yet as close as possible to that at the export source and all handling permission information at the export destination other than the relevant handling permission information is set to "non-permitted".

Then, the case where the contents conversion section 27 decides "YES" in step S1704 in FIG.19 and then moves on to step S1722 in FIG.24 will be described. In step S1722, the contents conversion section 27 decides whether the usage constraint information on the handling permission information indicating the method of use X at the export destination can set a usage constraint equivalent to that at the export source or not. When it decides that a usage constraint similar to that at the export source can be set (e.g., patterns 10, 12 in Table 6) (step S1722: YES), the contents conversion section 27 moves on to step S1723.

In step S1723, the contents conversion section 27 converts and exports right data so that the setting contents of the handling permission information indicating the method of use X are set to "permitted" for the export destination, the usage constraint information on the handling permission information indicating the method of use X is set to a usage constraint equivalent to that at the export source and all handling permission information at the export destination other than the relevant handling permission information is set to "non-permitted".

Furthermore, when it decides in step S1722 in FIG.24 that the usage constraint information on the handling permission information indicating the method of use X at the export destination cannot set a usage constraint equivalent to that at the export source (step S1722: NO), the contents conversion section 27 moves on to step S1724. In step S1724, the contents conversion section 27 decides whether the usage constraint information on the handling permission information indicating the method of use X at the export destination can set a stricter usage constraint than the export source or not. When it decides that a stricter usage constraint than the export source can be set (e.g., pattern 11 in Table 6) (step S1724: YES), the contents conversion section 27 moves on to step S1725.

In step S1725, the contents conversion section 27 converts and exports right data so that the setting contents of the handling permission information indicating the method of use X are set to "permitted" for the export destination, the usage constraint information on the handling permission information indicating the method of use X is set to a usage constraint which is stricter than, yet as close as possible to that at the export source and all handling permission information at the export destination other than the relevant handling permission information is set to "non-permitted".

Furthermore, when it decides in step S1724 in FIG.24 that the usage constraint information on the handling permission information indicating the method of use X at the export destination cannot set a stricter usage constraint than the export source (step S1724: NO), the contents conversion section 27 moves on to step S1726, and terminates this processing without exporting the right data.

Then, the case where the contents conversion section 27 decides "NO" in step S1704 in FIG.19 and then moves on to step S1727 in FIG.25 will be described. In step S1727, the contents conversion section 27 decides whether the usage constraint information on the handling permission information indicating the method of use Y at the export destination can set a usage constraint equivalent to that at the export source or not. When it decides that a usage constraint similar to that at the export source can be set (e.g., patterns 13, 15 in Table 6) (step S1727: YES), the contents conversion section 27 moves on to step S1728.

In step S1728, the contents conversion section 27 converts and exports right data so that the setting contents of the handling permission information indicating the method of use Y are set to "permitted" for the export destination, the usage constraint information on the handling permission information indicating the method of use Y is set to a usage constraint equivalent to that at the export source and all handling permission information at the export destination other than the relevant handling permission information is set to "non-permitted".

Furthermore, when it decides in step S1727 in FIG.25 that the usage constraint information on the handling permission information indicating the method of use Y at the export destination cannot set a usage constraint equivalent to that at the export source (step S1727: NO), the contents conversion section 27 moves on to step S1729. In step S1729, the contents conversion section 27 decides whether the usage constraint information on the handling permission information indicating the method of use Y at the export destination can set a stricter usage constraint than the export source or not. When it decides that a stricter usage constraint than the export source can be set (e.g., pattern 14 in Table 6) (step S1729: YES), the contents conversion section 27 moves on to step S1730.

In step S1730, the contents conversion section 27 converts and exports right data so that the setting contents of the handling permission information indicating the method of use Y are set to "permitted" for the export destination, the usage constraint information related to the handling permission information indicating the method of use Y is set to a usage constraint which is stricter than, yet as close as possible to that at the export source and all handling permission information at the export destination other than the relevant handling permission information is set to "non-permitted".

Furthermore, when it decides in step S1729 in FIG.25 that the usage constraint information on the handling permission information indicating the method of use Y at the export destination cannot set a stricter usage constraint than the export source (step S1729: NO), the contents conversion section 27 moves on to step S1731 and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

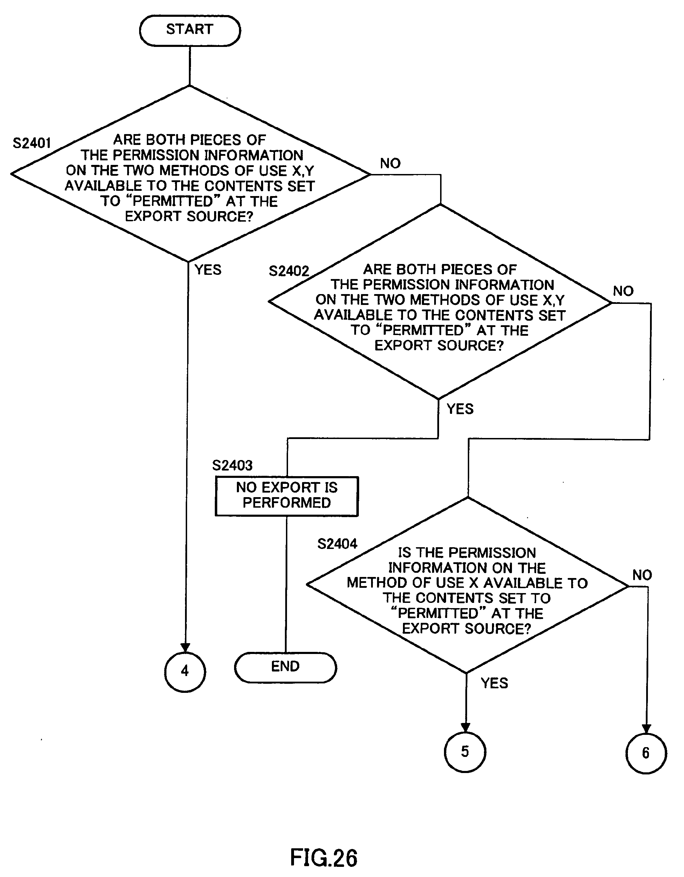

Then, the right data conversion processing in case 2-57 shown in Table 2 will be explained with reference to the flow charts shown in FIG.26 to FIG.32. The following is a description of the right data conversion processing when export processing is carried out on contents to which two types of methods of use X, Y are available.

In this case, when contents are exported from the export source DRM to the export destination DRM, case 2-57 is applied to the conversion rule for converting right data ("there are two types of methods of use (X, Y) available to digital contents to be exported", "both the handling permission information and constraint information for the handling permission information are applicable at the export source DRM, only the constraint information is applicable at the export destination DRM") "1. When both pieces of the handling permission information indicating two methods of use (X, Y) are "permitted" at the export source, 1-1. When the usage constraint information on the methods of use X and Y at the export destination DRM can realize a usage constraint equivalent to that at the export source, right data is converted and exported so that the usage constraint information on the methods of use X and Y is set to a usage constraint equivalent to that at the export source for the export destination (however, all other usage constraint information at the export destination are set to the contents meaning "not available")" is assumed.

Furthermore, as the conversion rule in case 2-57, "1-2. When the usage constraint information on the method of use X at the export destination DRM can realize a usage constraint equivalent to that at the export source and the usage constraint information on the method of use Y at the export destination DRM cannot realize a usage constraint equivalent to that at the export source, 1-2-1. When the usage constraint information on the method of use Y at the export destination DRM can make a setting in a direction in which the usage constraint is tightened compared to the export source, right data is converted and exported so that the setting contents of the usage constraint information on the method of use X are set to a usage constraint equivalent to that at the export source for the export destination and the setting contents of the usage constraint information on the method of use Y at the export destination are set to the closest possible usage constraint content with a tightened usage constraint with respect to the export source" (however, all other usage constraint information at the export destination is set to contents meaning "not available") is applied.

Furthermore, as the conversion rule in case 2-57, "1-2-2. When the usage constraint information on the method of use Y at the export destination DRM cannot make a setting in a direction in which the usage constraint is tightened compared to the export source, right data is converted and exported so that the setting contents of the usage constraint information on the method of use X are set to a usage constraint equivalent to that at the export source for the export destination (however, all other usage constraint information at the export destination is set to contents meaning "not available")" is applied.

Furthermore, as the conversion rule in case 2-57, "1-3. When the usage constraint information on the method of use Y at the export destination DRM can realize a usage constraint equivalent to that at the export source and the usage constraint information on the method of use X at the export destination DRM cannot realize a usage constraint equivalent to that at the export source, 1-3-1. When the usage constraint information on the method of use X at the export destination DRM can make a setting in a direction in which the usage constraint is tightened compared to the export source, right data is converted and exported so that the setting contents of the usage constraint information on the method of use Y are set to a usage constraint equivalent to that at the export source for the export destination and the setting contents of the usage constraint information on the method of use X at the export destination are set to the closest possible usage constraint content with a tightened usage constraint with respect to the export source (however, all other usage constraint information at the export destination is set to contents meaning "not available")" is applied.

Furthermore, as the conversion rule in case 2-57, "1-3-2. When the usage constraint information on the method of use X at the export destination DRM cannot make a setting in a direction in which the usage constraint is tightened compared to the export source, right data is converted and exported so that the setting contents of the usage constraint information on the method of use Y are set to a usage constraint equivalent to that at the export source for the export destination (however, all other usage constraint information at the export destination is set to contents meaning "not available")" is applied.

Furthermore, as the conversion rule in case 2-57, "1-4. When the usage constraint information on both methods of use X and Y at the export destination DRM cannot realize a usage constraint equivalent to that at the export source, 1-4-1. When the usage constraint information on both methods of use X and Y at the export destination DRM allows a description in a direction in which the usage constraint is tightened compared to the export source, right data is converted and exported so that the setting contents of the usage constraint information on both methods of use X and Y for the export destination are set to the closest possible usage constraint content with a tightened usage constraint with respect to the export source (however, all other usage constraint information at the export destination is set to contents meaning "not available")" is applied.

Furthermore, as the conversion rule in case 2-57, "1-4-2. When the usage constraint information on the method of use X at the export destination DRM can realize a setting in a direction in which the usage constraint is tightened compared to the export source and the usage constraint information on the method of use Y at the export destination DRM cannot realize a setting in a direction in which the usage constraint is tightened compared to the export source, right data is converted and exported so that the setting contents of the usage constraint information on the method of use X for the export destination are set to the closest possible usage constraint content with a tightened usage constraint with respect to the export source (however, all other usage constraint information at the export destination is set to contents meaning "not available")" is applied.

Furthermore, as the conversion rule in case 2-57, "1-4-3. When the usage constraint information on the method of use Y at the export destination DRM can realize a setting in a direction in which the usage constraint is tightened compared to the export source and the usage constraint information on the method of use X at the export destination DRM cannot realize a setting in a direction in which the usage constraint is tightened compared to the export source, right data is converted and exported so that the setting contents of the usage constraint information on the method of use Y for the export destination are set to the closest possible usage constraint content with a tightened usage constraint with respect to the export source (however, all other usage constraint information at the export destination is set to contents meaning "not available")" is applied.

Furthermore, as the conversion rule in case 2-57, "1-4-4. When the usage constraint information on both methods of use X and Y at the export destination DRM cannot make a setting in a direction in which the usage constraint is tightened compared to the export source, right data is not exported" is applied.

Furthermore, as the conversion rule in case 2-57, "2. When only the handling permission information on the method of use X is "permitted" at the export source, 2-1. When the usage constraint information on the method of use X at the export destination DRM can realize a usage constraint equivalent to that at the export source, right data is converted and exported so that the setting contents of the usage constraint information on the method of use X are set to a usage constraint equivalent to that at the export source for the export destination (however, all other usage constraint information at the export destination is set to contents meaning "not available")" is applied.

Furthermore, as the conversion rule in case 2-57, "2-2. When the usage constraint information on the method of use X at the export destination DRM cannot realize a usage constraint equivalent to that at the export source, 2-2-1. When the usage constraint information on the method of use X at the export destination DRM allows a description in a direction in which the usage constraint is tightened compared to the export source, right data is converted and exported so that the setting contents of the usage constraint information on the method of use X for the export destination are set to the closest possible usage constraint content with a tightened usage constraint with respect to the export source (however, all other usage constraint information at the export destination is set to contents meaning "not available")" is applied.

Furthermore, as the conversion rule in case 2-57, "2-2-2. When the usage constraint information on the method of use X at the export destination DRM cannot make a setting in a direction in which the usage constraint is tightened compared to the export source, right data is not exported" is applied.

Furthermore, as the conversion rule in case 2-57, "3. When only the handling permission information on the method of use Y is "permitted" at the export source, 3-1. When the usage constraint information on the method of use Y at the export destination DRM can realize a usage constraint equivalent to that at the export source, right data is converted and exported so that the setting contents of the usage constraint information on the method of use Y for the export destination are set to a usage constraint equivalent to that at the export source (however, all other usage constraint information at the export destination is set to contents meaning "not available")" is applied.

Furthermore, as the conversion rule in case 2-57, "3-2. When the usage constraint information on the method of use Y at the export destination DRM cannot realize a usage constraint equivalent to that at the export source, 3-2-1. When the usage constraint information on the method of use Y at the export destination DRM allows a description in a direction in which the usage constraint is tightened compared to the export source, right data is converted and exported so that the setting contents of the usage constraint information on the method of use Y for the export destination are set to the closest possible usage constraint content with a tightened usage constraint with respect to the export source (however, all other usage constraint information at the export destination is set to contents meaning "not available")" is applied.

Furthermore, as the conversion rule in case 2-57, "3-2-2. When the usage constraint information on the method of use Y at the export destination DRM cannot make a setting in a direction in which the usage constraint is tightened compared to the export source, right data is not exported" is applied.

Furthermore, as the conversion rule in case 2-57, "4. When both pieces of the handling permission information indicating two methods of use (X, Y) are "non-permitted" at the export source, right data is not exported" is applied.

Then, the right data conversion processing in case 2-57 will be explained with reference to the flow charts shown in FIG.26 to FIG.32. Here, this right data conversion processing is executed by the contents conversion section 27.

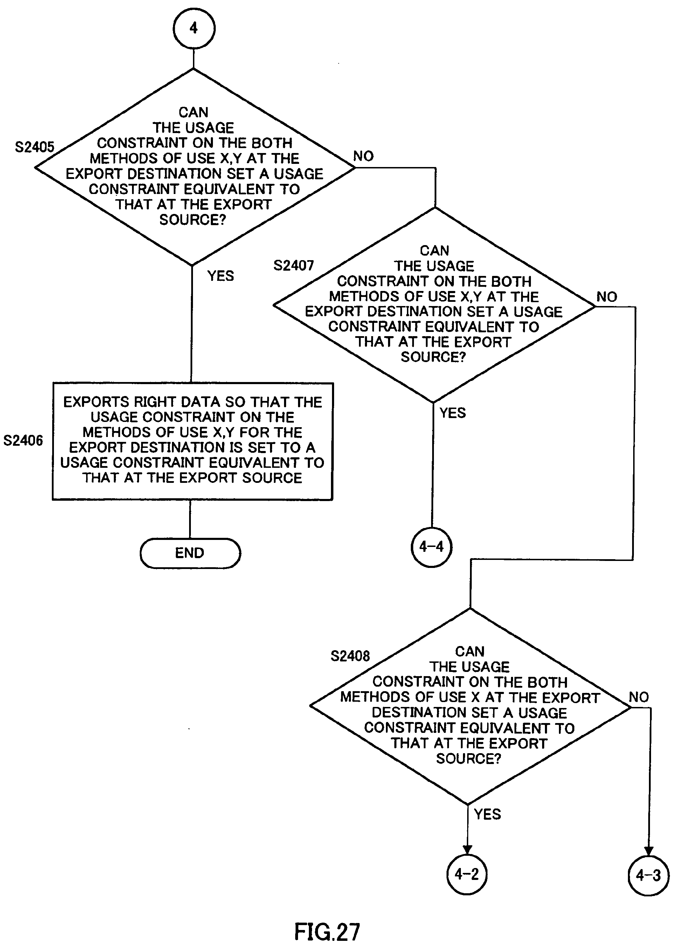

The contents conversion section 27 first decides whether both pieces of the handling permission information indicating the two methods of use X, Y available to the contents are set to "permitted" at the export source or not (FIG.26: step S2401). When it decides that both pieces of the handling permission information indicating the two methods of use X, Y are set to "permitted" at the export source (step S2401: YES), the contents conversion section 27 moves on to step S2405 in FIG.27.

Furthermore, when it decides in step S2401 in FIG.24 that both pieces of the handling permission information indicating the two methods of use X, Y are not set to "permitted" at the export source (step S2401: NO), the contents conversion section 27 moves on to step S2402 and decides whether both pieces of the handling permission information indicating the two methods of use X, Y available to the contents are set to "non-permitted" at the export source or not. When it decides that both pieces of the handling permission information indicating the two methods of use X, Y are not set to "non-permitted" at the export source (step S2402: NO), the contents conversion section 27 moves on to step S2404.

Furthermore, when it decides in step S2402 in FIG.26 that both pieces of the handling permission information indicating the two methods of use X, Y are set to "non-permitted" at the export source (step S2402: YES), the contents conversion section 27 moves on to step S2403 and terminates this processing without exporting the right data.

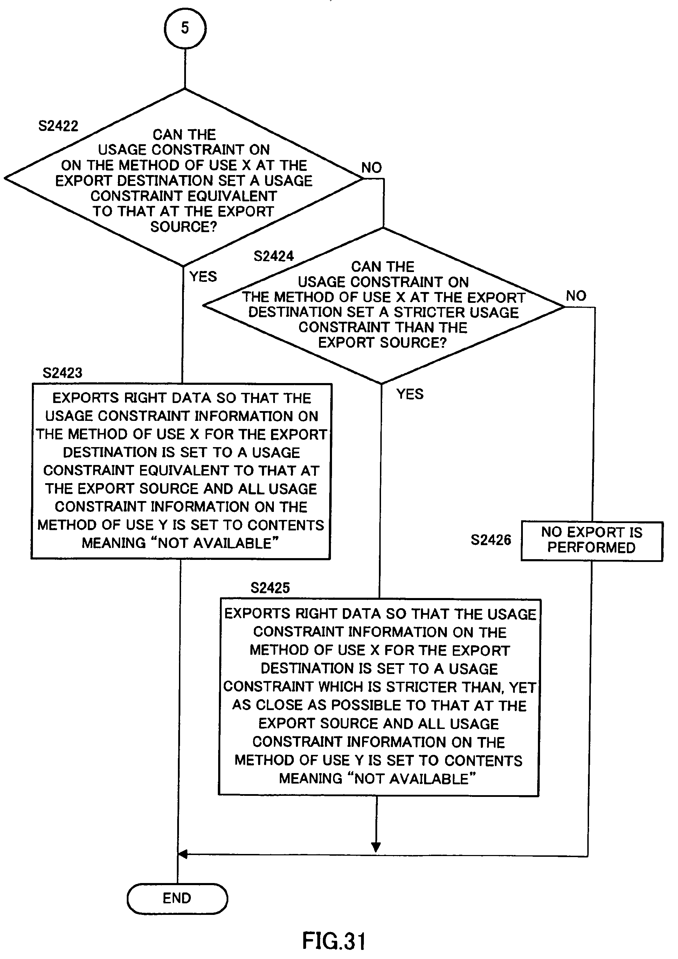

The contents conversion section 27 decides in step S2404 in FIG.26 whether the handling permission information indicating the method of use X is set to "permitted" at the export source or not. When it decides that the handling permission information indicating the method of use X is set to "permitted" at the export source (step S2404: YES), the contents conversion section 27 moves on to step S2422 in FIG.31.

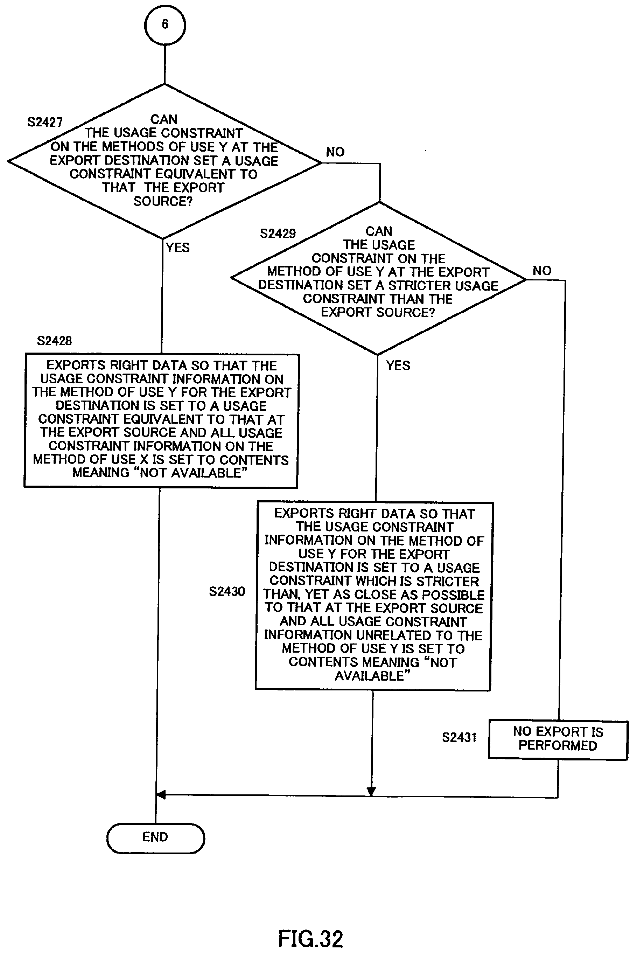

Furthermore, when it decides that the handling permission information indicating the method of use X is not set to "permitted" at the export source (step S2404: NO), the contents conversion section 27 moves on to step S2427 in FIG.32.

When it decides in step S2401 in FIG.26 that both pieces of the handling permission information indicating the methods of use X, Y are set to "permitted" at the export source (step S2401: YES), the contents conversion section 27 moves on to step S2405 in FIG. 27. In step S2405, the contents conversion section 27 decides whether the usage constraint information on the methods of use X, Y at the export destination can set a usage constraint equivalent to that at the export source or not. When it decides that the usage constraint information on the methods of use X, Y at the export destination can set a usage constraint equivalent to that at the export source (step S2405: YES), the contents conversion section 27 moves on to step S2406.

In step S2406, the contents conversion section 27 converts and exports right data so that the usage constraint information on the two methods of use X, Y for the export destination is set to a usage constraint equivalent to that at the export source and all usage constraint information on the method of use other than the two methods of use X, Y is set to contents meaning "not available".

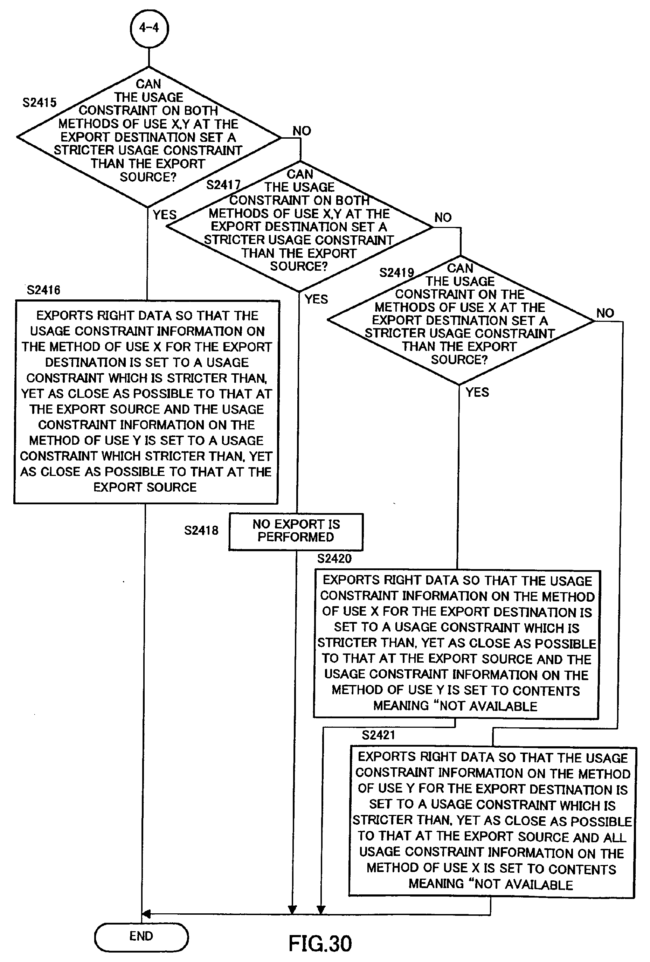

Furthermore, when it decides in step S2405 in FIG.27 that the respective pieces of usage constraint information on both methods of use X, Y at the export destination cannot set a usage constraint equivalent to that at the export source (step S2405: NO), the contents conversion section 27 moves on to step S2407. In step S2407, the contents conversion section 27 decides whether both pieces of the usage constraint information on the two methods of use X, Y at the export destination can set a usage constraint equivalent to that at the export source or not. When it decides that both pieces of the usage constraint information on the two methods of use X, Y at the export destination cannot set a usage constraint equivalent to that at the export source (step S2407: YES), the contents conversion section 27 moves on to step S2415 in FIG.30.

Furthermore, when it decides in step S2407 in FIG.27 that both pieces of usage constraint information on the two methods of use X, Y at the export destination cannot set a usage constraint equivalent to that at the export source (step S2407: NO), the contents conversion section 27 moves on to step S2408. In step S2408, the contents conversion section 27 decides whether the usage constraint information on the method of use X at the export destination can set a usage constraint equivalent to that at the export source or not.

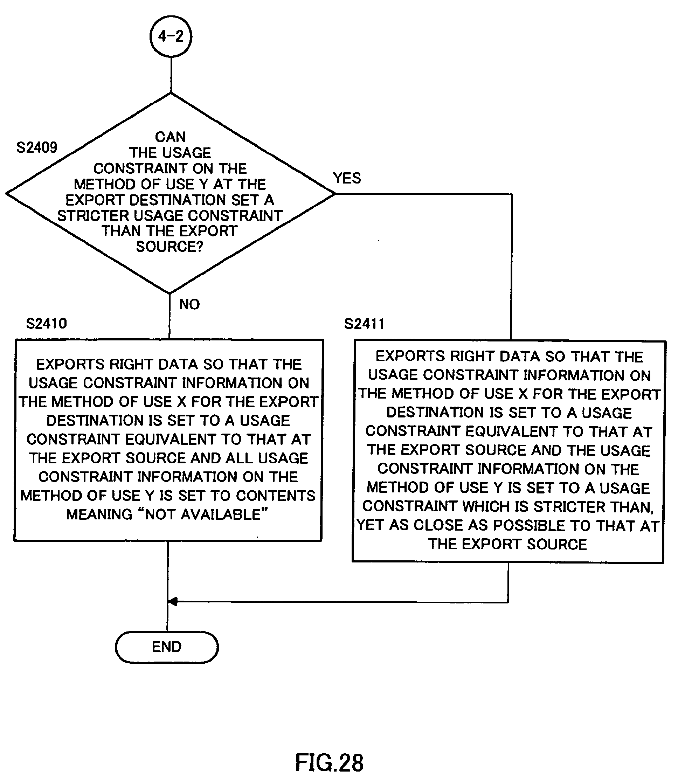

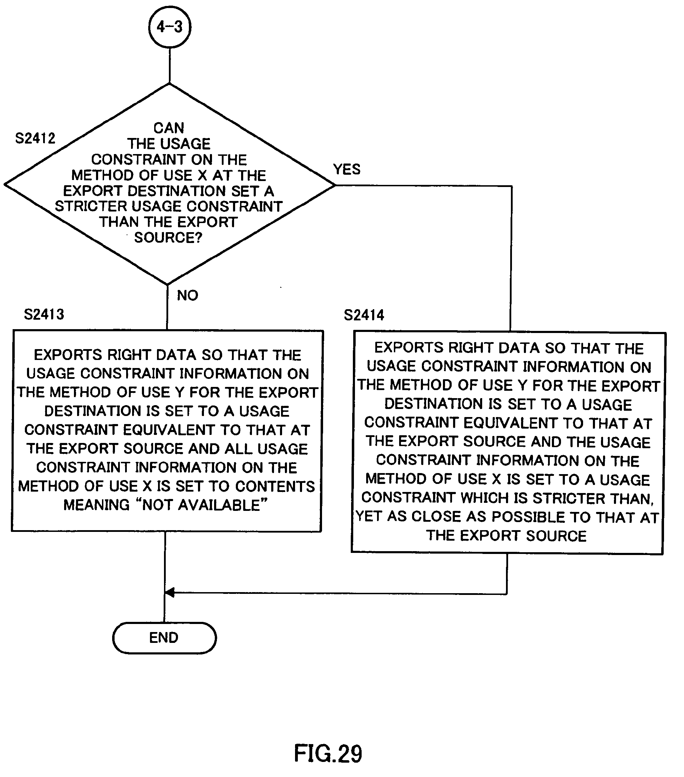

When it decides in step S2408 in FIG.27 that the usage constraint information on the method of use X at the export destination can set a usage constraint equivalent to that at the export source (step S2408: YES), the contents conversion section 27 moves on to step S2409 in FIG.28. Furthermore, when it decides in step S2408 in FIG.27 that the usage constraint information on the method of use X at the export destination cannot set a usage constraint equivalent to that at the export source (step S2408: NO), the contents conversion section 27 moves on to step S2412 in FIG.29.

Then, in step S2409 in FIG.28, the contents conversion section 27 decides whether the usage constraint information on the method of use Y at the export destination can set a stricter usage constraint than the export source or not. When it decides that a stricter usage constraint than the export source can be set (step S2409: YES), the contents conversion section 27 moves on to step S2411.

In step S2411, the contents conversion section 27 converts and exports right data so that the usage constraint information on the method of use X for the export destination is set to a usage constraint equivalent to that at the export source, the usage constraint information on the method of use Y at the export destination is set to a usage constraint which is stricter than, yet as close as possible to that at the export source and all usage constraint information on the method of use other than the two methods of use X, Y at the export destination is set to contents meaning "not available".

Furthermore, when it decides in step S2409 in FIG.28 that the usage constraint information on the method of use Y at the export destination cannot be set to a stricter usage constraint than the export source (step S2409: NO), the contents conversion section 27 moves on to step S2410. In step S2410, the contents conversion section 27 converts and exports right data so that the usage constraint information on the method of use X for the export destination is set to a usage constraint equivalent to that at the export source and all usage constraint information on the method of use other than the method of use X at the export destination is set to contents meaning "not available".

Then, the case where the contents conversion section 27 decides "NO" in step S2408 in FIG.27 and moves on to step S2412 in FIG.29 will be described. In step S2412, the contents conversion section 27 decides whether the usage constraint information on the method of use X at the export destination can set a stricter usage constraint than the export source or not. When it decides that a stricter usage constraint than the export source cannot be set (step S2412: NO), the contents conversion section 27 moves on to step S2413.

In step S2413, the contents conversion section 27 converts and exports right data so that the usage constraint information on the method of use Y for the export destination is set to a usage constraint equivalent to that at the export source, all usage constraint information on the method of use other than the method of use Y at the export destination is set to contents meaning "not available".

Furthermore, when it decides in step S2412 in FIG.29 that the usage constraint information on the method of use X at the export destination can set a stricter usage constraint than the export source (step S2412: YES), the contents conversion section 27 moves on to step S2414. In step S2414, the contents conversion section 27 converts and exports right data so that the usage constraint information on the method of use Y for the export destination is set to a usage constraint equivalent to that at the export source, the usage constraint information on the method of use X at the export destination is set to a usage constraint which is stricter than, yet as close as possible to that at the export source and all usage constraint information on the method of use other than the two methods of use X, Y at the export destination is set to contents meaning "not available".

Then, the case where the contents conversion section 27 decides "YES" in step S2407 in FIG.27 and then moves on to step S2415 in FIG.30 will be described. In step S2415, the contents conversion section 27 decides whether the respective usage constraints on the two methods of use X, Y at the export destination can set a stricter usage constraint than the export source or not.

When it decides in step S2415 in FIG.30 that the respective usage constraints on the two methods of use X, Y at the export destination can set a stricter usage constraint than the export source (step S2415: YES), the contents conversion section 27 moves on to step S2416. In step S2416, the contents conversion section 27 converts and exports right data so that the usage constraint information on the method of use X for the export destination is set to a usage constraint which is stricter than, yet as close as possible to that at the export source, the usage constraint information on the method of use Y at the export destination is set to a usage constraint which is stricter than, yet as close as possible to that at the export source and all usage constraint information on the method of use other than the two methods of use X, Y at the export destination is set to contents meaning "not available".

Furthermore, when it decides in step S2415 in FIG.30 that the respective usage constraints on the two methods of use X, Y at the export destination cannot set a stricter usage constraint than the export source (step S2415: NO), the contents conversion section 27 moves on to step S2417. In step S2417, the contents conversion section 27 decides whether both usage constraints on the two methods of use X, Y at the export destination can set a stricter usage constraint than the export source or not.

When it decides in step S2417 in FIG.30 that the respective usage constraints on the two methods of use X, Y at the export destination cannot set a stricter usage constraint than the export source (step S2417: YES), the contents conversion section 27 moves on to step S2418 and does not export right data. Furthermore, when it decides in step S2417 in FIG.30 that the respective usage constraints on the two methods of use X, Y at the export destination are not unable to set a stricter usage constraint than the export source (step S2417: NO), the contents conversion section 27 moves on to step S2419.

In step S2419, the contents conversion section 27 decides whether the usage constraint information on the method of use X at the export destination can set a stricter usage constraint than the export source or not. When it decides that a stricter usage constraint than the export source can be set (step S2419: YES), the contents conversion section 27 moves on to step S2420.

In step S2420, the contents conversion section 27 converts and exports right data so that the usage constraint information on the method of use X for the export destination is set to a usage constraint which is stricter than, yet as close as possible to that at the export source and all usage constraint information on the method of use other than the two methods of use X and Y at the export destination is set to contents meaning "not available".

Furthermore, when it decides in step S2419 in FIG.30 that the usage constraint information on the method of use X at the export destination cannot set a stricter usage constraint than the export source (step S2419: NO), the contents conversion section 27 moves on to step S2421. In step S2421, the contents conversion section 27 converts and exports right data so that the usage constraint information on the method of use Y for the export destination is set to a usage constraint which is stricter than, yet as close as possible to that at the export source and all usage constraint information on the method of use other than the two methods of use X, Y at the export destination is set to contents meaning "not available".

Then, the case where the contents conversion section 27 decides "YES" in step S2404 in FIG.26 and then moves on to step S2422 in FIG.31 will be described. In step S2422, the contents conversion section 27 decides whether the usage constraint information on the method of use X at the export destination can set a usage constraint equivalent to that at the export source or not. When it decides in step S2422 in FIG.31 that the usage constraint information on the method of use X at the export destination can set a usage constraint equivalent to that at the export source (step S2422: YES), the contents conversion section 27 moves on to step S2423.

In step S2423, the contents conversion section 27 converts and exports right data so that the usage constraint information on the method of use X for the export destination is set to a usage constraint equivalent to that at the export source and all usage constraint information on the method of use other than the method of use X at the export destination is set to contents meaning "not available".

Furthermore, when it decides in step S2422 in FIG.31 that the usage constraint information on the method of use X at the export destination cannot set a usage constraint equivalent to that at the export source (step S2422: NO), the contents conversion section 27 moves on to step S2424. In step S2424, the contents conversion section 27 decides whether the usage constraint information on the method of use X at the export destination can set a stricter usage constraint than the export source or not. When it decides in step S2424 in FIG.31 that the usage constraint information on the method of use X at the export destination can set a stricter usage constraint than the export source (step S2424: YES), the contents conversion section 27 moves on to step S2425.

In step S2425, the contents conversion section 27 converts and exports right data so that the usage constraint information on the method of use X for the export destination is set to a usage constraint which is stricter than, yet as close as possible to that at the export source and all usage constraint information on the method of use other than the method of use X at the export destination is set to contents meaning "not available".

Furthermore, when it decides in step S2424 in FIG.31 that the usage constraint information on the method of use X at the export destination cannot set a stricter usage constraint than the export source (step S2424: NO), the contents conversion section 27 moves on to step S2426 and terminates this processing without exporting the right data.

Then, the case where the contents conversion section 27 decides "NO" in step S2404 in FIG.26 and then moves on to step S2427 in FIG.32 will be described. In step S2427, the contents conversion section 27 decides whether the usage constraint information on the method of use Y at the export destination can set a usage constraint equivalent to that at the export source or not. When it decides in step S2427 in FIG.32 that the usage constraint information on the method of use Y at the export destination can set a usage constraint equivalent to that at the export source (step S2427: YES), the contents conversion section 27 moves on to step S2428.

In step S2428, the contents conversion section 27 converts and exports right data so that the usage constraint information on the method of use Y for the export destination is set to a usage constraint equivalent to that at the export source and all usage constraint information on the method of use other than the method of use Y at the export destination is set to contents meaning "not available".

Furthermore, when it decides in step S2427 in FIG.32 that the usage constraint information on the method of use Y at the export destination cannot set a usage constraint equivalent to that at the export source (step S2427: NO), the contents conversion section 27 moves on to step S2429. In step S2429, the contents conversion section 27 decides whether the usage constraint information on the method of use Y at the export destination can set a stricter usage constraint than the export source or not. When it decides in step S2429 in FIG.32 that the usage constraint information on the method of use Y at the export destination can set a stricter usage constraint than the export source (step S2429: YES), the contents conversion section 27 moves on to step S2430.

In step S2430, the contents conversion section 27 converts and exports right data so that the usage constraint information on the method of use Y for the export destination is set to a usage constraint which is stricter than, yet as close as possible to that at the export source and all usage constraint information on the method of use other than the method of use Y at the export destination is set to contents meaning "not available".

Furthermore, when it decides in step 2429 in FIG.32 that the usage constraint information on the method of use Y at the export destination cannot set a stricter usage constraint than the export source (step S2429: NO), the contents conversion section 27 moves on to step S2431 and terminates this processing without exporting the right data.

As shown above, when the export source and export destination follow such a DRM model, continuing to make the aforementioned decisions makes it possible to appropriately decide whether or not to export and rationally convert right data, when right data is exported, so that the export destination DRM also has a usage permission equivalent to that at the export source or usage permission whose right is reduced.

The present invention is not limited to the above described embodiments, and various variations and modifications may be possible without departing from the scope of the present invention.

This application is based on the Japanese Patent Application No.2003-280258 filed on July 25, 2003, and the Japanese Patent Application No.2004-077258 filed on March 17, 2004, entire content of which is expressly incorporated by reference herein.

## Claims

1. A data processing apparatus which processes data including right data on handling of digital contents, comprising:
an acquisition section that acquires contents data of said digital contents and said right data including information on handling of said contents data distributed from a data distribution apparatus in response to a distribution request;
a data storage section that stores said contents data and said right data acquired; and
a contents handling section that handles said corresponding contents data according to said right data,
wherein, when said digital contents are exported to a contents handling management system at an export destination, said contents handling section converts right data corresponding to the stored contents data so as to be adaptable to the contents handling management system at the export destination.

2. The data processing apparatus according to claim 1, wherein said acquisition section acquires said right data according to at least one of information on the terminal which uses said digital contents, information on the contents handling management system at said export destination and selection information on the user who uses said terminal.

3. The data processing apparatus according to claim 1, wherein, when said digital contents are exported,said contents handling section converts, said right data so that a scope of right indicated by said right data after the conversion becomes equal to or smaller than the scope of right indicated by said right data before the conversion.

4. The data processing apparatus according to claim 1, wherein, when said digital contents are exported, said contents handling section decrypts said right data and encrypts the right data after the conversion according to the contents handling management system at said export destination.

5. The data processing apparatus according to claim 1, wherein, when said digital contents are exported, said contents handling section decrypts said contents data and encrypts said contents data according to the contents handling management system at said export destination.

6. The data processing apparatus according to claim 1, wherein said right data comprises the handling permission information on the corresponding contents data and cryptographic key information for decrypting said contents data.

7. The data processing apparatus according to claim 6, wherein said right data includes constraint information for said handling permission information.

8. The data processing apparatus according to claim 1, wherein, when said digital contents are exported, said contents handling section deletes the corresponding contents data and right data from the data storage section at the export source after the export.

9. The data processing apparatus according to claim 1, wherein, when said digital contents are exported, said contents handling section does not delete the corresponding contents data and right data from the data storage section at the export source and leaves the contents data and right data as they are even after the export.

10. A data distribution apparatus which distributes data including right data on handling of digital contents, comprising:
a right data preparation section that prepares right data including information on handling of said contents data to be distributed to said data processing apparatus based on information on said data processing apparatus that receives said digital contents and information on the export destination to which said digital contents are exported from said data processing apparatus; and
a right data distribution section that distributes said contents data and said right data prepared by said right data preparation section to said data processing apparatus.

11. The data distribution apparatus according to claim 10, wherein said information at the export destination includes information on the contents handling management system.

12. The data distribution apparatus according to claim 11, wherein said right data distribution section comprises a distribution information presentation section that presents information on said distributable digital contents based on the information on said terminal, information on the contents handling management system used at said export destination and selection information on the user who uses said terminal.

13. The data distribution apparatus according to claim 10, wherein said right data includes the handling permission information on the corresponding contents data and key information for decrypting said contents data.

14. The data distribution apparatus according to claim 13, wherein said right data includes constraint information for said handling permission information.

15. The data processing apparatus according to claim 1, wherein, when said digital contents are exported, said contents handling section decides the method of conversion processing on said right data according to whether the method of use available to said digital contents is of only one type or two types.

16. The data processing apparatus according to claim 1, wherein, when said digital contents are exported, said contents handling section decides the method of conversion processing on said right data according to whether only said handling permission information is applicable, only said constraint information is applicable or both said handling permission information and the constraint information on said handling permission information are applicable at the respective contents handling management systems at the export source and the export destination.

17. The data processing apparatus according to claim 1, wherein, when said digital contents are exported, said contents handling section decides the method of conversion processing on said right data according to whether said handling permission information and said constraint information on the method of use available to said digital contents are applicable or not at the respective contents handling management systems at the export source and the export destination.

18. The data processing apparatus according to claim 1, wherein, when said digital contents are exported, said contents handling section decides the method of conversion processing on said right data according to whether the method of use available to said digital contents is of only one type or two types, or whether only said handling permission information is applicable, only said constraint information is applicable or both said handling permission information and the constraint information on said handling permission information are applicable at the respective contents handling management systems at the export source and the export destination.

19. The data processing apparatus according to claim 1, wherein, when said digital contents are exported, said contents handling section decides the method of conversion processing on said right data according to whether the method of use available to said digital contents is of only one type or two types, or whether said handling permission information and said constraint information on the method of use available to said digital contents are applicable or not at the respective contents handling management systems at the export source and the export destination.

20. The data processing apparatus according to claim 1, wherein, when said digital contents are exported, said contents handling section decides the method of conversion processing on said right data according to whether only said handling permission information is applicable, only said constraint information is applicable or both said handling permission information and the constraint information on said handling permission information are applicable at the respective contents handling management systems at the export source and the export destination, or whether said handling permission information and said constraint information on the method of use available to said digital contents are applicable at the respective contents handling management systems at the export source and the export destination.

21. The data processing apparatus according to claim 1, wherein said contents handling section decides, when said digital contents are exported, the method of conversion processing on said right data according to whether the method of use available to said digital contents is of only one type or two types, or whether only said handling permission information is applicable, only said constraint information is applicable or both said handling permission information and the constraint information on said handling permission information are applicable at the respective contents handling management systems at the export source and the export destination, or whether said handling permission information and said constraint information on the method of use available to said digital contents are applicable at the respective contents handling management systems at the export source and the export destination.
